# EUROPEAN PATENT APPLICATION

(11) **EP 4 084 515 A1**
(43) Date of publication of application: **02.11.2022**
(21) Application number: 21743686.4
(22) Date of filing: 04.01.2021
(51) Int. Cl.: H04W 8/20

(54) **INFORMATION SHARING METHOD FOR SCENARIO-INTELLIGENCE SERVICE AND RELATED DEVICE**

(30) Priority: 22.01.2020 CN 202010075578
(71) Applicant: Huawei Technologies Co., Ltd., Shenzhen, Guangdong 518129, (CN)
(72) Inventor: XIANG, Chao, Shenzhen, Guangdong 518129 (CN)
(74) Representative: Gill Jennings & Every LLP
(86) International application number: PCT/CN2021/070089
(87) International publication number: WO 2021/147653

(57) **Abstract**

An information sharing method for a smart scene service is disclosed, including: A first electronic device of a first user receives first information. When determining that the first information includes information about a to-be-processed transaction of a target event, the first electronic device generates a first smart scene service of the target event based on the information about the to-be-processed transaction, where the first smart scene service provides the first user with a reminder service and/or a planning service of the to-be-processed transaction. The first electronic device sends a part or all of the information about the to-be-processed transaction to a second electronic device of a second user, where the second user is a shared user that is of a smart scene service of the target event and that is preset by the first user, the first user and the second user are different users, the part or all of the information about the to-be-processed transaction is used by the second user to generate a second smart scene service, and the second smart scene service provides the second user with a reminder service and/or a planning service of the to-be-processed transaction of the first user. This can implement information sharing of a smart scene service between a plurality of devices.

## Description

This application claims priority to Chinese Patent Application No. 202010075578.9, filed with the China National Intellectual Property Administration on January 22, 2020 and entitled "INFORMATION SHARING METHOD FOR SMART SCENE SERVICE AND RELATED APPARATUS", which is incorporated herein by reference in its entirety.

### TECHNICAL FIELD

This application relates to the field of electronic technologies, and in particular, to an information sharing method for a smart scene service and a related apparatus.

### BACKGROUND

With the rapid development of science and technology, we have entered a fast-paced era. Science and technology represented by information technology are updated and iterated at a faster speed. On the way to keep up with the science and technology revolution, in the face of complex life and work, proper arrangement of schedules can get twice the result with half the effort.

Currently, scene identification and reminder of a smartphone have become a small helper for people's daily schedule. This greatly facilitates use of a user. Smart scenes can identify flight and train booking information, weather, meetings, birthday records, and the like in smartphones, automatically generate corresponding reminder cards, and display all the reminder cards on a specific interface to facilitate quick browsing and management. In addition, Smart scenes can intelligently send scheduled reminders. In this way, schedules, express statuses, weather, road conditions, and the like can be learned in real time.

However, currently, Smart scenes implement information reminding only on a single device, and cannot implement information sharing between a plurality of devices.

### SUMMARY

Embodiments of this application provide an information sharing method for a smart scene service and a related apparatus, to implement information sharing of a smart scene service between a plurality of devices.

According to a first aspect, this application provides an information sharing method for a smart scene service, including: A first electronic device of a first user receives first information. When determining that the first information includes information about a to-be-processed transaction of a target event, the first electronic device generates a first smart scene service of the target event based on the information about the to-be-processed transaction, where the first smart scene service provides the first user with a reminder service and/or a planning service of the to-be-processed transaction. The first electronic device sends a part or all of the information about the to-be-processed transaction to a second electronic device of a second user, where the second user is a shared user that is of a smart scene service of the target event and that is preset by the first user, the first user and the second user are different users, the part or all of the information about the to-be-processed transaction is used by the second user to generate a second smart scene service, and the second smart scene service provides the second user with a reminder service and/or a planning service of the to-be-processed transaction of the first user. This can implement information sharing of a smart scene service between a plurality of devices.

In an implementation, the target event is a travel event, the to-be-processed transaction of the target event is a travel transaction, a reminder service of the travel transaction includes reminding a user of a part or all of information about the travel transaction at one or more preset time points, and a planning service of the travel transaction includes planning a travel method and/or a travel route for the travel transaction of the user.

In an implementation, the target event is a flight event or a train event.

In an implementation, that the first electronic device sends a part or all of the information about the to-be-processed transaction to a second electronic device of a second user includes: The first electronic device sends the part or all of the information about the to-be-processed transaction to the second electronic device within a first sharing time period, where the first sharing time period is a preset time period for sharing the smart scene service of the target event with the second user.

In an implementation, that the first electronic device sends a part or all of the information about the to-be-processed transaction to a second electronic device of a second user includes: The first electronic device sends the part or all of the information about the to-be-processed transaction to the second electronic device through a server.

In an implementation, after the first electronic device sends a part or all of the information about the to-be-processed transaction to the second electronic device of the second user, the method further includes: The first electronic device receives a feedback message sent by the second electronic device, where the feedback message includes a consultation time point at which the second user consults the part or all of the information about the to-be-processed transaction, and the consultation time point is used to preset the first sharing time period.

In an implementation, that the first electronic device sends a part or all of the information about the to-be-processed transaction to a second electronic device of a second user includes: The first electronic device sends the part or all of the information about the to-be-processed transaction to the second electronic device within the first sharing time period in a first term, where the first term is a preset validity period for sharing the smart scene service of the target event with the second user. After the first term ends, the first electronic device removes the second user from shared users of the target event.

In an implementation, before the first electronic device sends the part or all of the information about the to-be-processed transaction to the second electronic device of the second user, the method includes: The first electronic device selects a first descriptor to be shared with the second user from descriptors associated with the target event, where the information about the to-be-processed transaction includes values of the descriptors associated with the target event.

In an implementation, that the first electronic device sends a part or all of the information about the to-be-processed transaction to a second electronic device of a second user includes: The first electronic device sends, to the second electronic device, information matching the first descriptor in the information about the to-be-processed transaction.

In an implementation, before the first electronic device receives the first information, the method further includes: The first electronic device receives setting information entered by the first user, where the setting information includes a shared user of the target event, and the shared user of the target event includes the second user.

In an implementation, the setting information further includes the first sharing time period for sharing the smart scene service of the target event with the second user.

In an implementation, the setting information further includes the first term for sharing the smart scene service of the target event with the second user.

In an implementation, the setting information further includes the first descriptor that is selected from the descriptors associated with the target event and that is to be shared with the second user.

In an implementation, the second user includes one or more users.

In an implementation, the second user is associated with a plurality of events, and the plurality of events include the target event.

In an implementation, before the first electronic device sends the part or all of the information about the to-be-processed transaction to the second electronic device of the second user, the method further includes: The first electronic device displays authorization prompt information, where the authorization prompt information is used to prompt the first user to determine whether to share the first smart scene service with the second user. The first electronic device receives a determining operation of the first user, where the determining operation is used to determine to share the first smart scene service with the second user.

In an implementation, the authorization prompt information includes a password input control, the password input control is used to input a character, an image, a voiceprint, or a face image, and the determining operation is that the first user enters a password by using the password input control. Alternatively, the authorization prompt information includes an OK control, and the determining operation is that the first user taps the OK control.

According to a second aspect, this application provides an information sharing method for a smart scene service, including: A second electronic device of a second user receives a part or all that is of information about a to-be-processed transaction of a target event and that is sent by a first electronic device of a first user, where the information about the to-be-processed transaction is used to generate a first smart scene service of the first user, the second user is a shared user that is of a smart scene service of the target event and that is preset by the first user, and the first user and the second user are different users. The second electronic device generates a second smart scene service of the second user based on the first user and the part or all of the information about the to-be-processed transaction, where the second smart scene service includes a reminder service and/or a planning service that are/is of the to-be-processed transaction of the first user and that are/is provided for the second user. This can implement information sharing of a smart scene service between a plurality of devices.

In an implementation, the target event is a travel event, the to-be-processed transaction of the target event is a travel transaction, a reminder service of the travel transaction includes reminding a user of a part or all of information about the travel transaction at one or more preset time points, and a planning service of the travel transaction includes planning a travel method and/or a travel route for the travel transaction of the user.

In an implementation, the target event is a flight event or a train event.

In an implementation, that a second electronic device of a second user receives a part or all that is of information about a to-be-processed transaction of a target event and that is sent by a first electronic device of a first user includes: The second electronic device receives the part or all that is of the information about the to-be-processed transaction of the target event and that is sent by the first electronic device within a first sharing time period, where the first sharing time period is a preset time period for sharing the smart scene service of the target event with the second user.

In an implementation, that a second electronic device of a second user receives a part or all that is of information about a to-be-processed transaction of a target event and that is sent by a first electronic device of a first user includes: The second electronic device receives, through a server, the part or all that is of the information about the to-be-processed transaction of the target event and that is sent by the first electronic device.

In an implementation, after the second electronic device of the second user receives the part or all that is of the information about the to-be-processed transaction of the target event and that is sent by the first electronic device of the first user, the method further includes: The second electronic device sends a feedback message to the first electronic device, where the feedback message includes a consultation time point at which the second user consults the part or all of the information about the to-be-processed transaction, and the consultation time point is used to preset the first sharing time period.

In an implementation, that the first electronic device sends a part or all of the information about the to-be-processed transaction to a second electronic device of a second user includes: The first electronic device sends the part or all of the information about the to-be-processed transaction to the second electronic device through a server.

According to a third aspect, this application provides an information sharing method for a smart scene service, including: A first electronic device of a first user receives first information. When determining that the first information includes information about a to-be-processed transaction of a target event, the first electronic device generates a first smart scene service of the target event based on the information about the to-be-processed transaction, where the first smart scene service includes a reminder service and/or a planning service that are/is of the to-be-processed transaction and that are/is provided for the first user. The first electronic device receives a first user operation, where the first user operation is used to call a shared user selection interface of the first smart scene service, and the shared user selection interface is used to determine a shared user of the first smart scene service. The first electronic device displays the shared user selection interface. The first electronic device receives a second user operation, where the second user operation is used to determine, by using the shared user selection interface, that the shared user of the first smart scene service is a second user, and the first user and the second user are different users. The first electronic device sends a part or all of the information about the to-be-processed transaction to a second electronic device of the second user. This can implement information sharing of a smart scene service between a plurality of devices.

In an implementation, the target event is a travel event, the to-be-processed transaction of the target event is a travel transaction, a reminder service of the travel transaction includes reminding a user of a part or all of information about the travel transaction at one or more preset time points, and a planning service of the travel transaction includes planning a travel method and/or a travel route for the travel transaction of the user.

In an implementation, the target event is a flight event or a train event.

In an implementation, before the first electronic device sends the part or all of the information about the to-be-processed transaction to the second electronic device of the second user, the method includes: The first electronic device selects a first descriptor to be shared with the second user from descriptors associated with the target event, where the information about the to-be-processed transaction includes values of the descriptors associated with the target event.

In an implementation, that the first electronic device sends a part or all of the information about the to-be-processed transaction to a second electronic device of the second user includes: The first electronic device sends, to the second electronic device, information matching the first descriptor in the information about the to-be-processed transaction.

In an implementation, that the first electronic device sends a part or all of the information about the to-be-processed transaction to a second electronic device of the second user includes: The first electronic device sends the part or all of the information about the to-be-processed transaction to the second electronic device within a first term.

In an implementation, the second user includes one or more objects.

In an implementation, the second user includes one or more nearby users.

According to a fourth aspect, an electronic device is provided, including a communications interface, a memory, and a processor. The communications interface and the memory are coupled to the processor, the memory is configured to store computer program code, and the computer program code includes computer instructions. When the processor reads the computer instructions from the memory, the electronic device is enabled to perform any possible implementation of the first aspect, any possible implementation of the second aspect, or any possible implementation of the third aspect.

According to a fifth aspect, a computer-readable storage medium including instructions is provided. When the instructions are run on an electronic device, the electronic device is enabled to perform any possible implementation of the first aspect, any possible implementation of the second aspect, or any possible implementation of the third aspect.

According to a sixth aspect, a computer product is provided. When the computer program product is run on a computer, the computer is enabled to perform any possible implementation of the first aspect, any possible implementation of the second aspect, or any possible implementation of the third aspect.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3 to FIG. 5A and FIG. 5B are schematic diagrams of entering a smart scene setting interface through Settings according to an embodiment of this application;
FIG. 6A and FIG. 6B and FIG. 7A and FIG. 7B are schematic diagrams of entering a smart scene setting interface through a leftmost screen according to an embodiment of this application;
FIG.8A and FIG. 8B and FIG. 9A and FIG. 9B are schematic diagrams of user interfaces of a leftmost screen according to an embodiment of this application;
FIG. 10A and FIG. 10B to FIG. 12 are schematic diagrams of user interfaces of a Huawei ID center according to an embodiment of this application;
FIG. 13A and FIG. 13B to FIG. 16A and FIG. 16B are schematic diagrams of Huawei ID contact user interfaces according to an embodiment of this application;
FIG.17A and FIG. 17B to FIG. 37 are schematic diagrams of user interfaces for setting automatic information sharing according to an embodiment of this application;
FIG. 38 is a schematic flowchart of an automatic information sharing method according to an embodiment of this application;
FIG. 39 to FIG. 47 are schematic diagrams of user interfaces for automatic information sharing according to an embodiment of this application;
FIG. 48 is a schematic flowchart of a manual information sharing method according to an embodiment of this application;
FIG. 49 to FIG. 59A to FIG. 59B are schematic diagrams of user interfaces of smart scene information according to an embodiment of this application;
FIG. 60Aand FIG. 60B to FIG. 71A and FIG. 71B are schematic diagrams of user interfaces for manual information sharing according to an embodiment of this application; and
FIG. 72 is a schematic flowchart of an information sharing method according to an embodiment of this application.

### DESCRIPTION OF EMBODIMENTS

The following clearly and completely describes the technical solutions in embodiments of this application. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of' means two or more.

The following terms "first" and "second" are merely intended for a purpose of description, and shall not be understood as an implication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of' means two or more than two.

The following first describes an electronic device in the embodiments of this application. A type of the described electronic device is not specifically limited in this application. The electronic device 100 may be a portable electronic device such as a mobile phone, a tablet computer, a personal digital assistant (personal digital assistant, PDA), a wearable device, or a laptop (laptop). An example embodiment of the portable electronic device includes but is not limited to a portable electronic device using iOS, Android, Microsoft, or another operating system. The portable electronic device may alternatively be another portable electronic device, for example, a laptop (laptop) with a touch-sensitive surface (for example, a touch panel). It should be further understood that, in some other embodiments of this application, the electronic device may alternatively be not a portable electronic device, but a desktop computer with a touch-sensitive surface (for example, a touch panel) or a smart television.

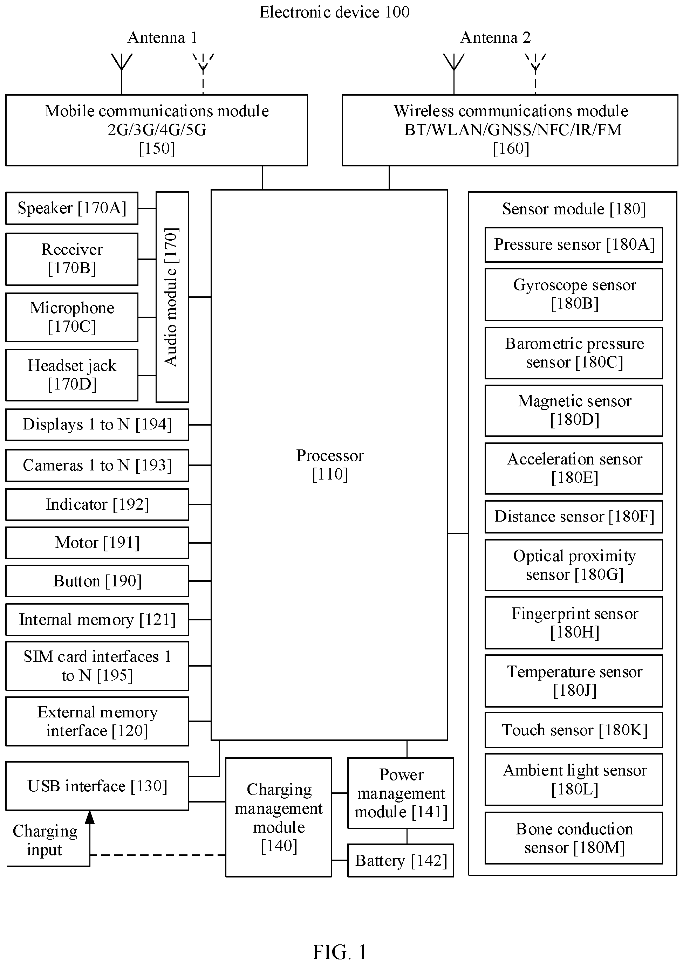

FIG. 1 is a schematic diagram of a structure of an example of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than the components shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on instruction operation code and a time sequence signal, to control instruction fetching and instruction execution.

The NPU may perform an artificial intelligence operation by performing convolutional neural network (Convolutional Neural Networks, CNN) processing. For example, a CNN model is used to perform a large amount of information identification and information filtering, to implement training and identification for Smart scenes.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. In this way, repeated access is avoided, waiting time of the processor 110 is reduced, and system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be used for audio communication, to sample, quantize, and encode an analog signal. In some embodiments, the audio module 170 may be coupled to the wireless communications module 160 through the PCM bus interface. In some embodiments, the audio module 170 may alternatively transfer an audio signal to the wireless communications module 160 through the PCM interface, to implement a function of answering a call by using the Bluetooth headset. Both the I2S interface and the PCM interface may be used for audio communication.

The UART interface is a universal serial data bus, and is used for asynchronous communication. The bus may be a two-way communications bus. The bus converts to-be-transmitted data between serial communication and parallel communication. In some embodiments, the UART interface is usually used to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 by using the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the electronic device 100, or may be configured to transmit data between the electronic device 100 and a peripheral device, or may be configured to connect to a headset, to play audio by using the headset. The interface may be further configured to connect to another electronic device such as an AR device.

It may be understood that an interface connection relationship between the modules illustrated in embodiments of this application is merely an example for description, and does not constitute a limitation on a structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger, or may be a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 when the battery 142 is charged.

The power management module 141 is configured to connect the battery 142 and the charging management module 140 to the processor 110. The power management module 141 receives an input of the battery 142 and/or an input of the charging management module 140, and supplies power to the processor 110, the internal memory 121, an external memory, the display 194, the camera 193, the wireless communications module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 150 may provide a wireless communication solution that includes 2G/3G/4G/5G or the like and that is applied to the electronic device 100. The mobile communications module 150 may include at least one filter, a switch, a power amplifier, a low noise amplifier (Low Noise Amplifier, LNA), and the like. The mobile communications module 150 may receive an electromagnetic wave through the antenna 1, perform processing such as filtering and amplification on the received electromagnetic wave, and transfer a processed electromagnetic wave to the modem processor for demodulation. The mobile communications module 150 may further amplify a signal modulated by the modem processor, and convert the signal to an electromagnetic wave for radiation through the antenna 1. In some embodiments, at least some functional modules of the mobile communications module 150 may be disposed in the processor 110. In some embodiments, at least some functional modules of the mobile communications module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After the low-frequency baseband signal is processed by the baseband processor, a processed low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same component with the mobile communications module 150 or another function module.

The wireless communications module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, and an infrared (infrared, IR) technology. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The electronic device 100 can implement a photographing function through the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of a camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion of the image. The ISP may further optimize parameters such as exposure and color temperature that are of a photographing scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to: compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, can be implemented by using the NPU.

The external memory interface 120 may be configured to connect to an external storage card, for example, a micro SD card, to extend a storage capability of the electronic device 100. The external memory card communicates with the processor 110 through the external memory interface 120, to implement a data storage function, for example, to store files such as music and a video in the external memory card.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data, a phone book, and the like) created in a process of using the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS).

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may further be configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an audio electrical signal into a sound signal. When a call is answered or voice information is received by using the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound by moving the mouth of the user close to the microphone 170C to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be the USB interface 130 or a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. In some optional embodiments of this application, the pressure sensor 180A may be configured to: capture a pressure value generated when a finger part of the user contacts the display, and transmit the pressure value to the processor, so that the processor identifies a finger part through which the user enters the user operation.

There are many types of pressure sensors 180A such as a resistive pressure sensor, an inductive pressure sensor, and a capacitive pressure sensor. The capacitive pressure sensor may include at least two parallel plates that are made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an icon of Messages, an instruction for viewing an SMS message is executed. When a touch operation whose touch operation intensity is greater than or equal to the first pressure threshold is performed on an icon of Messages, an instruction for creating an SMS message is executed. In some optional embodiments of this application, the pressure sensor 180A may transmit a detected capacitance value to the processor, so that the processor identifies a finger part (a knuckle, a finger pad, or the like) through which the user enters a user operation. In some optional embodiments of this application, the pressure sensor 180A may further calculate a quantity of touch points based on a detected signal, and transmit a calculated value to the processor, so that the processor identifies that the user enters a user operation through a single finger or a plurality of fingers.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be used in a navigation scenario and a motion-sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 can detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, and may detect magnitude and a direction of gravity when the electronic device 100 is still. The acceleration sensor 180E may be further configured to identify a posture of the electronic device, and is applied to an application such as switching between a landscape mode and a portrait mode or a pedometer. In some optional embodiments of this application, the acceleration sensor 180E may be configured to: capture an acceleration value generated when a finger part of the user contacts the display, and transmit the acceleration value to the processor, so that the processor identifies a finger part through which the user enters the user operation.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light luminance. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application access locking, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194. The touch sensor 180K and the display 194 constitute a touchscreen which is also referred to as a "touchscreen". The touch sensor 180K is configured to detect a touch operation performed on or near the touch sensor 180K. The touch operation is an operation that the user contacts the display 194 by using a hand, an elbow, a stylus, or the like. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed in different areas of the display 194. Different application scenarios (for example, a time reminder scenario, an information receiving scenario, an alarm clock scenario, and a game scenario) may also correspond to different vibration feedback effects. A touch vibration feedback effect may be customized.

The indicator 192 may be an indicator lamp, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be inserted into the same SIM card interface 195 at the same time. The plurality of cards may be of a same type, or may be of different types. The SIM card interface 195 may be further compatible with different types of SIM cards. The SIM card interface 195 is also compatible to an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In the embodiments of this application, an Android system with a layered architecture is used as an example to describe a software structure of the electronic device 100.

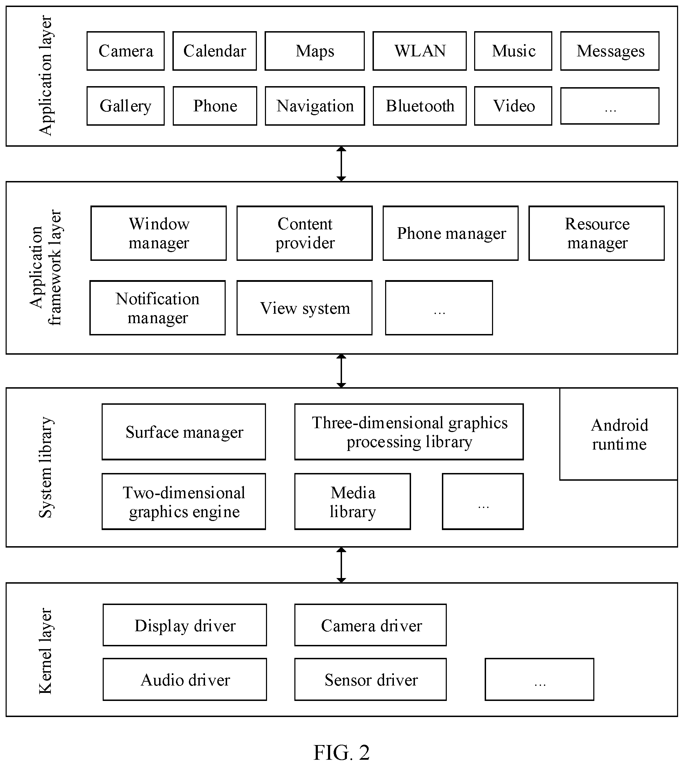

FIG. 2 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android Runtime (Android Runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and Messages.

In this application, a floating launcher (floating launcher) may be further added to the application layer, is used as a default display application in the foregoing floating window, and is provided for the user to enter another application.

The application framework layer provides an application programming interface (application programming interface, API) and a programming framework for an application at the application layer. The application framework layer includes some predefined functions.

As shown in FIG. 2, the application framework layer may include a window manager (window manager), a content provider, a view system, a phone manager, a resource manager, a notification manager, an activity manager (activity manager), and the like.

The window manager is configured to manage a window program. The window manager may obtain a size of the display, determine whether there is a status bar, lock the display, take a screenshot of the display, and the like. In this application, FloatingWindow may be extended based on native Phone Window of Android, and is dedicated to displaying the foregoing floating window, so as to distinguish the floating window from a common window. The window has an attribute of being displayed on a top layer of a series of windows in a floating manner. In some optional embodiments, a proper value of a size of the window may be given based on an actual size of a screen according to an optimal display algorithm. In some possible embodiments, an aspect ratio of the window may be considered as an aspect ratio of a screen of a conventional mainstream mobile phone by default. In addition, to help the user close and hide the floating window, an extra close button and an extra minimize button may be drawn in an upper right corner.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a notification icon of Messages may include a text display view and a picture display view. In this application, a key view used for operations such as closing and minimization may be correspondingly added to the floating window, and bound to FloatingWindow in the window manager.

The phone manager is configured to provide a communication function of the electronic device 100, for example, management of a call status (including answering, declining, or the like).

The resource manager provides, for an application, various resources such as a localized character string, an icon, a picture, a layout file, and a video file.

The notification manager enables an application to display notification information in a status bar 207, and may be configured to convey a notification message. The notification message may automatically disappear after a short pause without user interaction. For example, the notification manager is configured to: notify download completion, provide a message notification, and the like. The notification manager may alternatively be a notification that appears in a top status bar of the system in a form of a graph or a scroll bar text, for example, a notification of an application running in the background, or may be a notification that appears on the display in a form of a dialog window. For example, text information is prompted in the status bar, a prompt tone is produced, the electronic device vibrates, or an indicator blinks.

The activity manager is configured to manage activities that are running in the system, including a process (process), an application, a service (service), task (task) information, and the like. In this application, an activity task stack dedicated to managing an activity of an application displayed in the floating window may be newly added to the activity manager module, to ensure that the activity and a task of the application in the floating window do not conflict with an application displayed on the screen in full screen mode.

In this application, a motion detector (motion detector) may be further added to the application framework layer, to perform logical determining on an obtained input event and identify a type of the input event. For example, the motion detector determines, based on information such as touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures.

The Android runtime includes a kernel library and a virtual machine. The Android Runtime is responsible for scheduling and management of the Android system.

The kernel library includes two parts: a function that needs to be invoked in java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, an input manager (input manager), an input dispatcher (input dispatcher), a surface manager (surface manager), a media library (Media Libraries), a three-dimensional graphics processing library (for example, OpenGL ES), and a 2D graphics engine (for example, SGL).

The input manager is responsible for obtaining event data from an underlying input driver, parsing and encapsulating the event data, and sending the event data to the input dispatcher.

The input dispatcher is configured to store window information. After receiving an input event from the input manager, the input dispatcher searches windows stored by the input dispatcher for a proper window, and dispatches the event to the window.

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes examples of working procedures of software and hardware of the electronic device 100 with reference to a photographing capture scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, the camera driver is started by invoking the kernel layer, and a static image or a video is captured by using the camera 193.

The following describes examples of some graphical user interfaces implemented on the electronic device 100 according to the embodiments of this application.

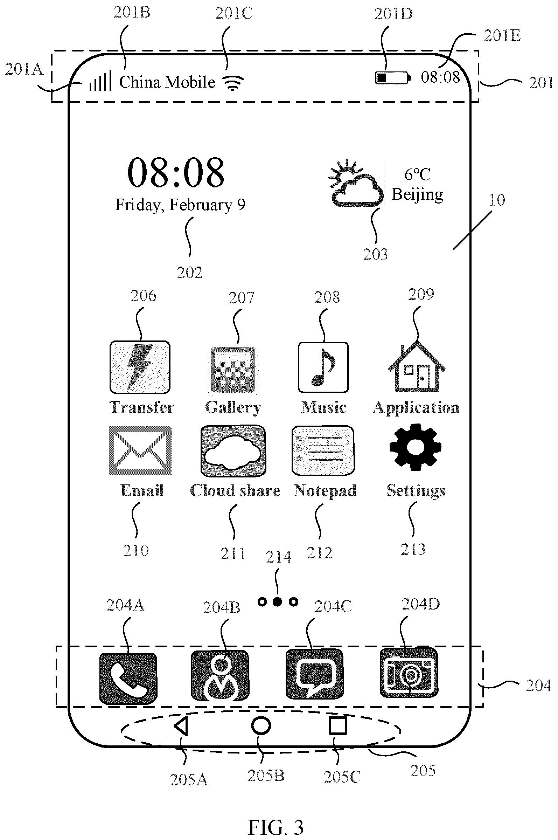

FIG. 3 shows an example user interface 10 that is for displaying an application installed in the electronic device 100 and that is on the electronic device 100.

The user interface 10 may include a status bar 201, a calendar indicator 202, a weather indicator 203, a tray 204 including commonly used application icons, a navigation bar 205, and other application icons. The status bar 201 may include one or more signal strength indicators 201A of a mobile communications signal (also referred to as a cellular signal), an operator name (for example, "China Mobile") 201B, one or more signal strength indicators 201C of a wireless high-fidelity (wireless fidelity, Wi-Fi) signal, a battery status indicator 201D, and a time indicator 201E.

The calendar indicator 202 may be used to indicate current time, for example, a date, a day of a week, and hour and minute information.

The weather indicator 203 may be used to indicate a weather type such as cloudy to clear or light rain, and may be further used to indicate information such as a temperature.

The tray 204 including commonly used application icons may display a "Phone" icon 204A, a "Contacts" icon 204B, a "Messages" icon 204C, and a "Camera" icon 204D.

The navigation bar 205 may include system navigation buttons such as a "Back" button 205A, a "Home screen" button 205B, and a "Multitask" button 205C. When detecting that a user taps the "Back" button 205A, the electronic device 100 may display a previous page of a current page. When detecting that the user taps the "Home screen" button 205B, the electronic device 100 can display a home screen. When detecting that the user taps the "Multitask" button 205C, the electronic device 100 may display a task recently started by the user. Names of the navigation buttons may alternatively be other names. This is not limited in this application. Not limited to a virtual button, each navigation button in the navigation bar 205 may alternatively be implemented as a physical button.

The other application icons may be, for example, a "Transfer" icon 206, a "Gallery" icon 207, a "Music" icon 208, an "Application" icon 209, an "Email" icon 210, a "Cloud share" icon 211, a "Notepad" icon 212, and a "Settings" icon 213. The user interface 10 may further include a page indicator 214. The other application icons may be distributed on a plurality of pages, and the page indicator 216 may be used to indicate a specific page on which an application is currently browsed by the user. The user may slide leftward or rightward in an area including the other application icons, to browse an application icon on another page.

In some embodiments, the user interface 10 shown in FIG. 3 as an example may be a home screen (Home screen). It may be understood that FIG. 3 merely shows an example user interface on the electronic device 100, and should not constitute a limitation on embodiments of this application.

The following describes some example graphical user interfaces for setting Smart scenes provided in embodiments of this application.

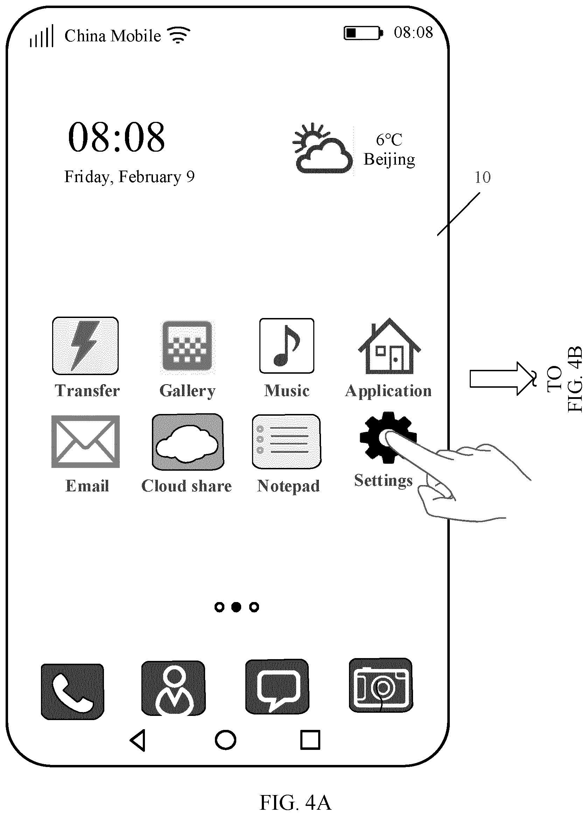

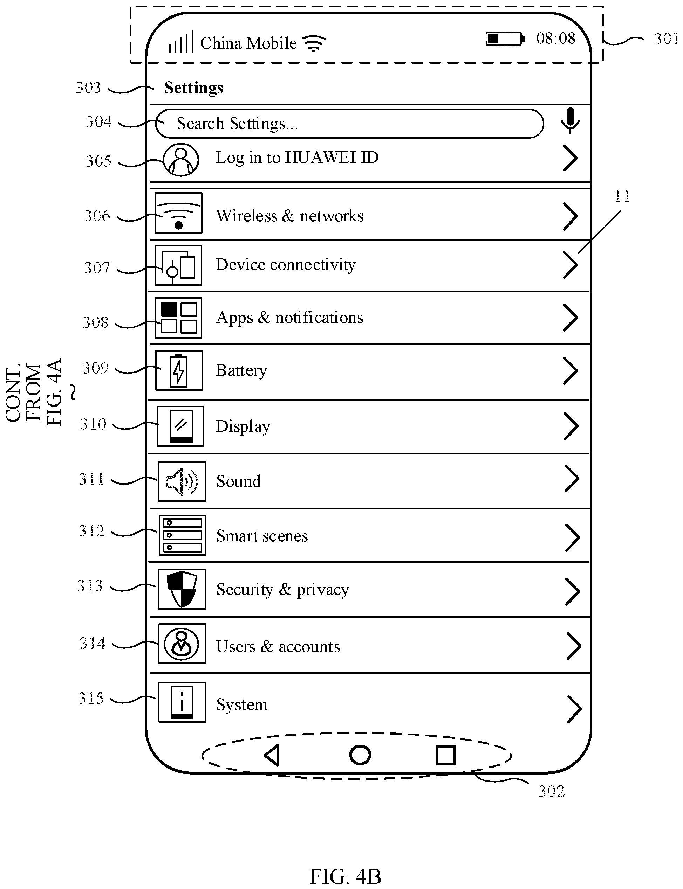

As shown in FIG. 4A and FIG. 4B, a user may tap an icon set on the user interface 10. The electronic device 100 detects the user operation, and in response to the user operation, the electronic device 100 displays a user interface 11 of Settings.

The user interface 11 may include a status bar 301, a navigation bar 302, an application title bar 303, a search box 304, a "Log in to Huawei ID" entry 305, a "Wireless & networks" entry 306, a "Device connectivity" entry 307, an "Apps & notifications" entry 308, a "Battery" entry 309, and a "Display" entry 310, a "Sound" entry 311, a "Smart scenes" entry 312, a "Security & privacy" entry 313, a "Users & accounts" entry 314, and a "System" entry 315. The application title bar 303 may be used to indicate that a current page is used to display a setting interface of the electronic device 100.

The application title bar 303 may be represented in a form of text information "Settings", a form of an icon, or another form.

The search box 304 may be used to search, based on a character entered by the user, for a setting option that matches the character.

The "Log in to Huawei ID" entry 305 may receive a user operation (for example, a touch operation), and in response to the detected user operation, the electronic device 100 may display a user interface for logging in to a Huawei ID.

Any one of the "Wireless & networks" entry 306, the "Device connectivity" entry 307, the "Apps & notifications" entry 308, the "Battery" entry 309, the "Display" entry 310, the "Sound" entry 311, the "Smart scenes" entry 312, the "Security & privacy" entry 313, the "Users & accounts" entry 314, and the "System" entry 315 may receive a user operation (such as a touch operation). In response to the detected user operation, the electronic device 100 may display a setting interface of the entry, and the setting interface of the entry may include one or more setting options.

It may be understood that FIG. 4A and FIG. 4B merely show an example system setting user interface on the electronic device 100, and should not constitute a limitation on embodiments of this application.

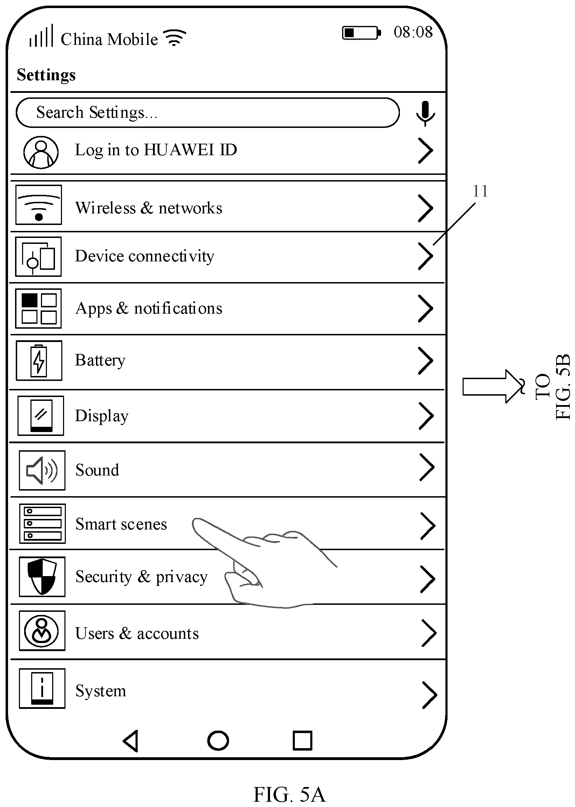

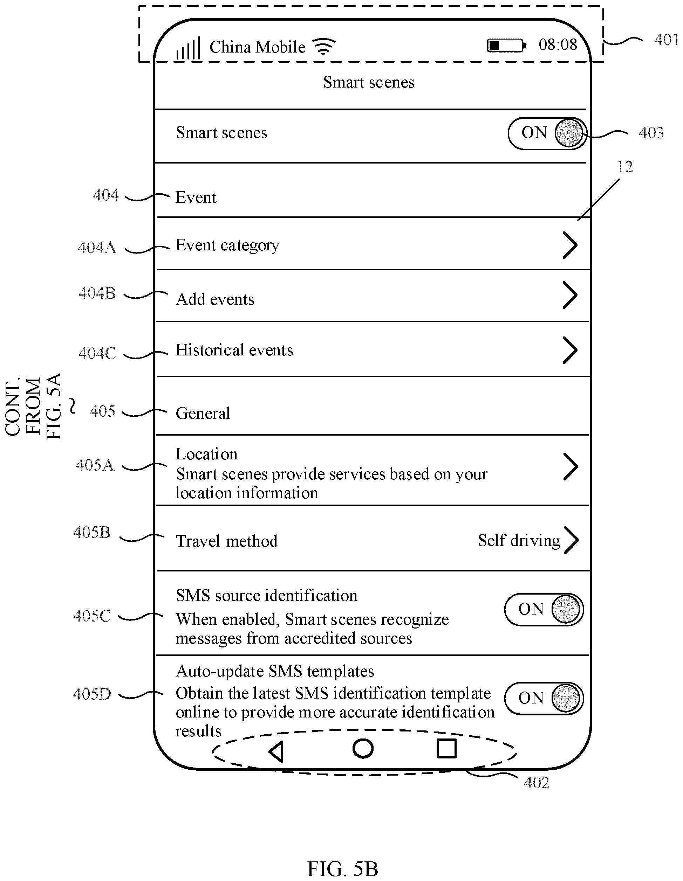

For example, as shown in FIG. 5A and FIG. 5B, the user may tap the "Smart scenes" entry 312. The electronic device 100 detects the user operation, and in response to the user operation, the electronic device 100 displays a setting interface 12 of Smart scenes.

The setting interface 12 may include a status bar 401, a navigation bar 402, a control 403, a classification title bar 404, and a classification title bar 405. The control 403 may receive a user operation (for example, a touch operation), and the electronic device 100 may enable or disable Smart scenes of the electronic device 100 in response to the detected user operation.

The classification title bar 404 may be used to indicate a type of setting options in the setting interface of Smart scenes. The classification title bar 404 may be represented in a form of text information "Event", a form of an icon, or another form. The setting options indicated by the classification title bar 404 may include an "Event category" entry 404A, an "Add events" entry 404B, and a "Historical events" entry 404C. The "Event category" entry 404A may receive a user operation (for example, a touch operation), and in response to the detected user operation, the electronic device 100 may display one or more added smart scene events, for example, a flight, a train, a meeting, and express.

The electronic device may provide a corresponding smart scene service based on a smart scene event added by the user. For example, the added smart scene event includes a flight, and the electronic device may provide a flight-related smart scene service for the user. For example, the electronic device may remind the user of flight-related information at a preset time point based on flight booking information in Messages.

The "Add events" entry 404B may receive a user operation (for example, a touch operation), and in response to the detected user operation, the electronic device 100 may display all smart scene events that can be added.

The "Historical events" entry 404C may receive a user operation (for example, a touch operation), and in response to the detected user operation, the electronic device 100 may display a smart scene event that is not currently added and that has been added, so that the user can quickly find a target event when the user wants to add the event again.

In this application, the event may also be referred to as another name. This is not specifically limited herein.

The classification title bar 405 may be used to indicate another type of setting options in the setting interface of Smart scenes. The classification title bar 405 may be represented in a form of text information "General", a form of an icon, or another form. The setting options indicated by the classification title bar 405 may include a "Location" entry 405A, a "Travel method" entry 405B, a control 405C, and a control 405D. Either of the "Location" entry 405A and the "Travel method" entry 405B may receive a user operation (for example, a touch operation), and in response to the detected user operation, the electronic device 100 may display a setting interface corresponding to the entry.

The control 405C may receive a user operation (for example, a touch operation), and in response to the detected user operation, the electronic device 100 may enable or disable SMS source identification of the electronic device 100. After the SMS source identification is enabled, Smart scenes identify authenticated messages and provide smart scene services for the user.

The control 405D may receive a user operation (for example, a touch operation), and in response to the detected user operation, the electronic device 100 may enable or disable automatic update of SMS message templates of the electronic device 100. After the automatic update of SMS message templates is enabled, the electronic device 100 obtains the latest SMS message identification template online. Smart scenes can provide more accurate identification results based on the latest SMS message identification template.

In some embodiments, the another type of setting options indicated by the classification title bar 405 may further include a control 405E. The control 405E may receive a user operation (for example, a touch operation), and in response to the detected user operation, the electronic device 100 may enable or disable email source identification of the electronic device 100. After the email source identification is enabled, Smart scenes identify authenticated emails.

In some embodiments, the another type of setting options indicated by the classification title bar 405 may further include a control 405F. The control 405F may receive a user operation (for example, a touch operation), and in response to the detected user operation, the electronic device 100 may enable or disable WeChat source identification of the electronic device 100. After the WeChat source identification is enabled, Smart scenes identify authenticated WeChat messages.

In some embodiments, the another type of setting options indicated by the classification title bar 405 may further include a control 405G. The control 405G may receive a user operation (for example, a touch operation), and in response to the detected user operation, the electronic device 100 may enable or disable QQ source identification of the electronic device 100. After the QQ source identification is enabled, Smart scenes identify authenticated QQ messages.

It may be understood that, in embodiments of this application, in addition to Messages, Calendar, and Notepad, description information of a to-be-processed transaction of an added event may be further identified from description information of another application, for example, Email, WeChat, or QQ. This is not specifically limited in embodiments of this application.

It should be noted that a smart scene event may include one or more to-be-processed transactions. For example, to-be-processed transactions of a flight event may include transactions such as air ticket booking, air ticket booking cancellation, air ticket change, and flight cancellation.

In embodiments of this application, description information of a to-be-processed transaction of an added event may be identified with reference to an information source and/or a keyword. For example, an information source of the flight event may be an airline company or an air ticket booking app. For example, keywords of the flight event may include words such as "air ticket", "flight", and "takeoff". In addition to the information source and the keyword, description information of the to-be-processed transaction of the added event may be further identified with reference to other information. This is not specifically limited herein.

In this application, the description information of the to-be-processed transaction may also be referred to as information about the to-be-processed transaction. This is not specifically limited herein.

During specific implementation, in addition to the setting interface 12 of Smart scenes shown in FIG. 5A and FIG. 5B, there may be another form of a setting interface of Smart scenes. This is not limited in embodiments of this application.

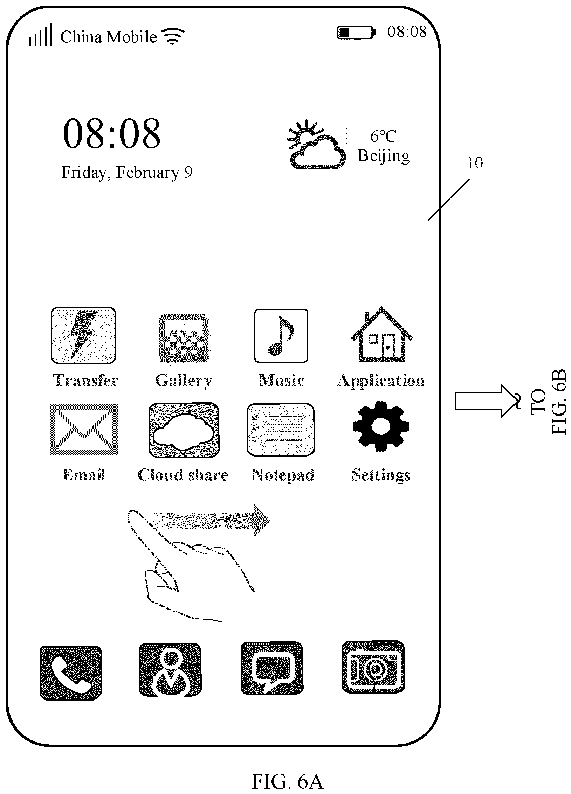

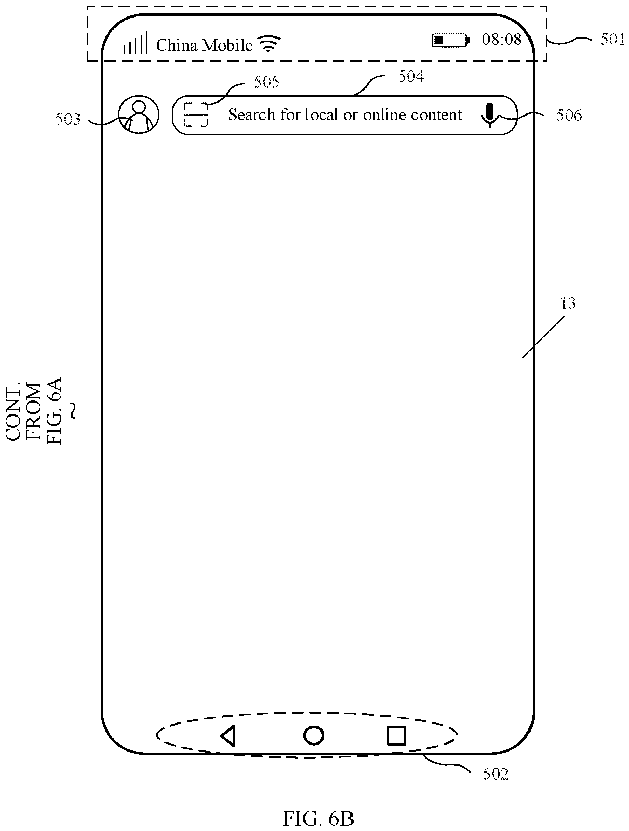

For example, as shown in FIG. 6A and FIG. 6B, a finger of the user swipes rightward on the user interface 11. The electronic device 100 detects the user operation, and in response to the user operation, the electronic device 100 displays a user interface 13 of a leftmost screen of the electronic device 100.

The user interface 13 may include a status bar 501, a navigation bar 502, a control 503, a search box 504, a scan control 505, and a voice control 506. The search box 504 may be used to search for local or online content based on a character, an image, a two-dimensional code, voice, or the like entered by the user.

The scan control 505 is used to enter a to-be-searched image or two-dimensional code. The voice control 506 is used to enter to-be-searched voice.

The control 503 may receive a user operation (for example, a touch operation), and in response to the detected user operation, the electronic device 100 may display a management user interface. The management user interface is used to manage display content of the user interface 13 of the leftmost screen, display a "Log in to Huawei ID" entry, and display a "Settings" entry of the electronic device 100.

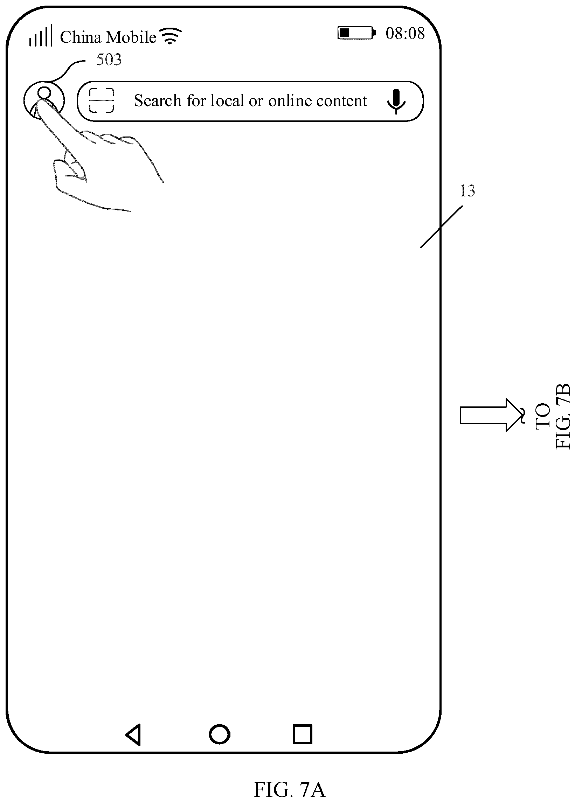

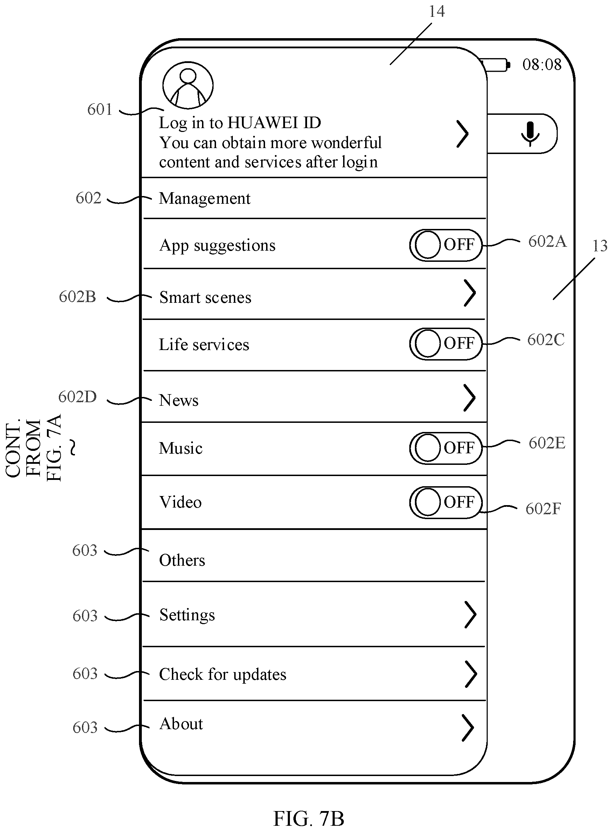

For example, as shown in FIG. 7A and FIG. 7B, the user may tap the control 503. The electronic device 100 detects the user operation, and in response to the user operation, the electronic device 100 displays a user interface 14.

The user interface 14 may include a "Log in to Huawei ID" entry 601, a leftmost screen management title bar 602, and an other option title bar 603.

The "Log in to Huawei ID" entry 601 may receive a user operation (for example, a touch operation), and in response to the detected user operation, the electronic device 100 may display a user interface for logging in to a Huawei ID.

The leftmost screen management title bar 602 may be used to indicate a setting option for managing display content in the leftmost screen. The classification title bar 404 may be represented in a form of text information "Management", a form of an icon, or another form. Setting options indicated by the leftmost screen management title bar 602 may include a control 602A, a "Smart scenes" entry 602B, a control 602C, a "News" entry 602D, a control 602E, and a control 602F. The control 602A may receive a user operation (for example, a touch operation), and in response to the detected user operation, the electronic device 100 may display or cancel displaying of an application suggestion display box on the user interface 13.

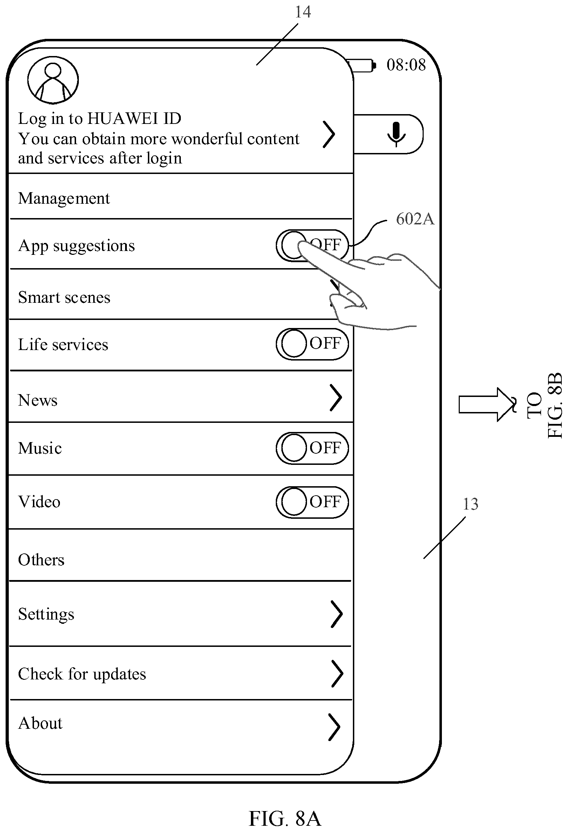

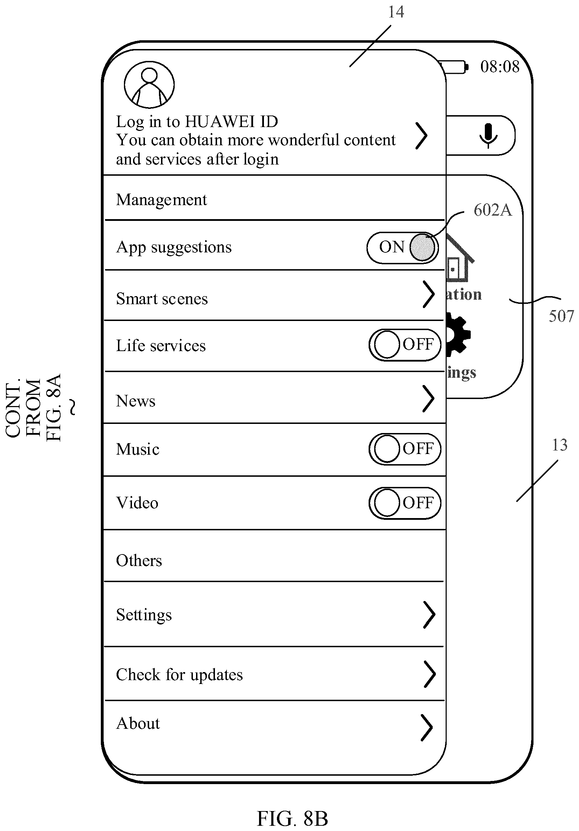

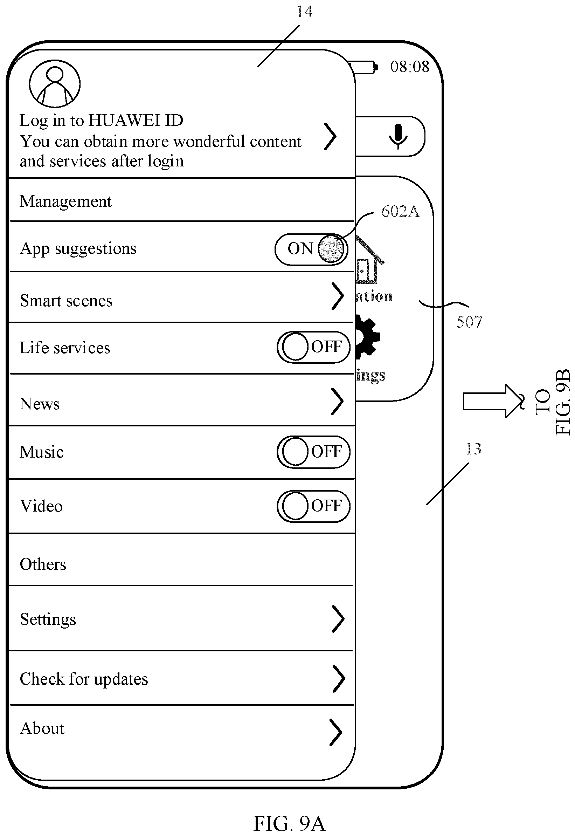

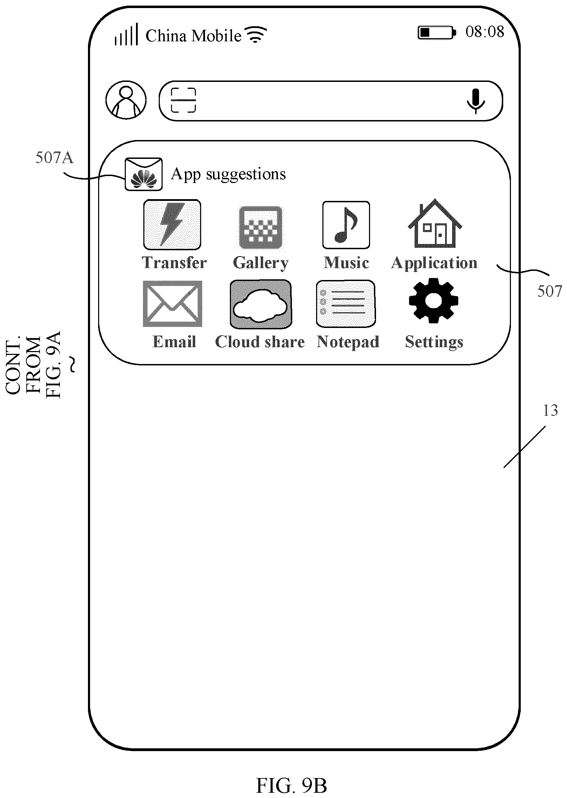

For example, as shown in FIG. 8A and FIG. 8B, the user may tap the control 602A, and in response to the detected user operation, the electronic device 100 may change a display status of the control 602A, and change text information on the control 602A from "OFF" to "ON". In addition, the electronic device 100 may display the application suggestion display box on the user interface 13. As shown in FIG. 9A and FIG. 9B, the user may tap the user interface 13, and in response to the detected user operation, the electronic device 100 hides the user interface 14 and displays the user interface 13. The user interface 13 further includes an application suggestion display box 507. The application suggestion display box 507 may include an "App suggestions" title bar 507A and icons of a plurality of applications recommended by the electronic device 100 to the user based on a usage habit and a usage scenario of the user.

As shown in FIG. 9A and FIG. 9B, the application suggestion display box 507 is displayed on the user interface 13 in a form of a card. The application suggestion display box 507 may alternatively be displayed in another form. This is not limited in embodiments of the present invention.

The "Smart scenes" entry 602B may receive a user operation (for example, a touch operation), and in response to the detected user operation, the electronic device 100 may display the user interface 12.

The other option title bar 603 may be used to indicate a plurality of other setting options of the electronic device 100. The other option title bar 603 may be represented in a form of text information "Others", a form of an icon, or another form. The set options indicated by the other option title bar 603 may include a "Settings" entry 603A, a "Check for updates" entry 603B, and an "About" entry 603C. The "Settings" entry 603A may receive a user operation (for example, a touch operation), and in response to the detected user operation, the electronic device 100 may display the user interface 11.

It may be understood that FIG. 6A and FIG 6B to FIG. 9A and FIG. 9B merely show example user interfaces on the electronic device 100, and should not constitute a limitation on embodiments of this application.

The user interface 12 of Smart scenes is opened by touching (tapping, touching and holding, or the like) the "Smart scenes" entry 312 shown in FIG. 5A and FIG. 5B and the "Smart scenes" entry 602B shown in FIG. 7A and FIG. 7B. During specific implementation, the user interface 12 of Smart scenes may be opened in another manner.

For example, the user interface 12 of Smart scenes may be opened by pressing a button by the user to enable a first control mode, or the user interface 12 of Smart scenes is opened by detecting a voice entered by the user, or the user interface 12 of Smart scenes is opened by drawing a specific shape (such as a Z shape, a rectangle, or a circle) with a knuckle. This is not specifically limited in embodiments of this application.

The following describes some example graphical user interfaces of a Huawei ID account center provided in embodiments of this application.

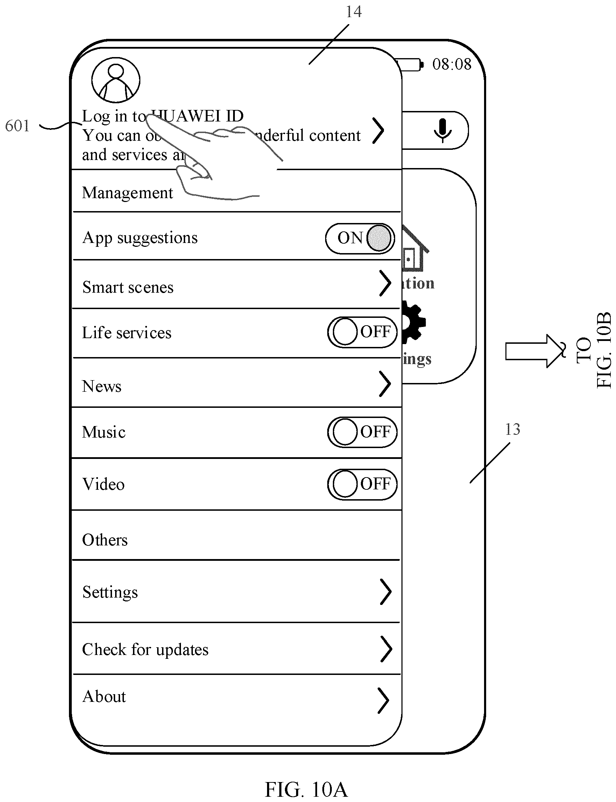

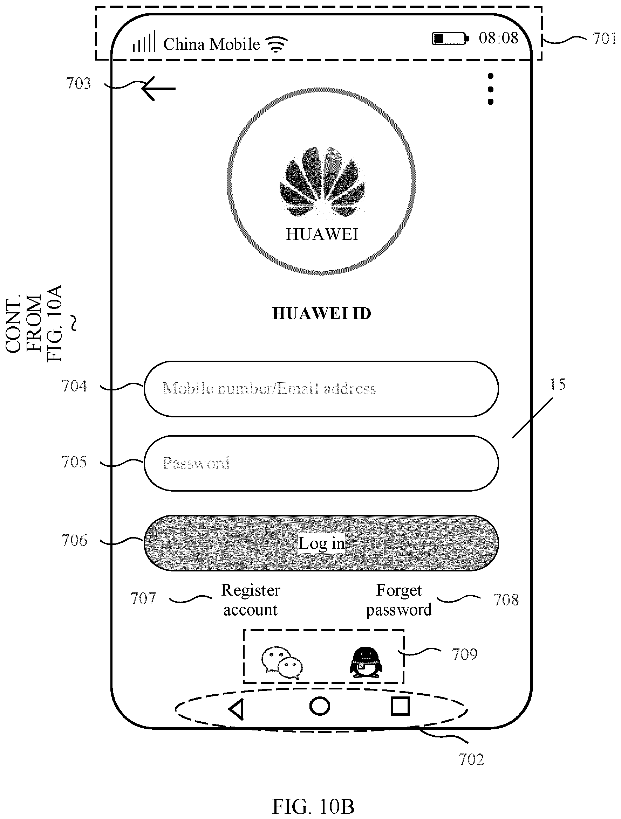

In some embodiments, as shown in FIG. 10A and FIG. 10B, the user may tap the "Log in to Huawei ID" entry 601. The electronic device 100 detects the user operation, and in response to the user operation, the electronic device 100 displays a login interface 15.

The login interface 15 may include a status bar 701, a navigation bar 702, a control 703, an account input box 704, a password input box 705, a control 706, a control 707, a control 708, and a control 709. The control 703 may receive a user operation (for example, a touch operation), and in response to the detected user operation, the electronic device 100 may exit the user interface 15, and display a previous user interface of the user interface 15, for example, the user interface 14.

The account input box 704 may be used to receive an account entered by the user, and the account may be a mobile number, an email address, or the like.

The password input box 705 may be used to receive a password entered by the user.

The control 706 may receive a user operation (for example, a touch operation), and in response to the detected user operation, the electronic device 100 may display an account user interface 16 in the input box 704. The control 706 may be represented in a form of text information "Log in" or another form.

The control 707 may receive a user operation (for example, a touch operation), and in response to the detected user operation, the electronic device 100 may display a "register account" user interface. The control 707 may be represented in a form of text information "Register account" or another form.

For example, the user may alternatively tap the "Log in to Huawei ID" entry 305. The electronic device 100 detects the user operation, and in response to the user operation, the electronic device 100 displays the login interface 15.

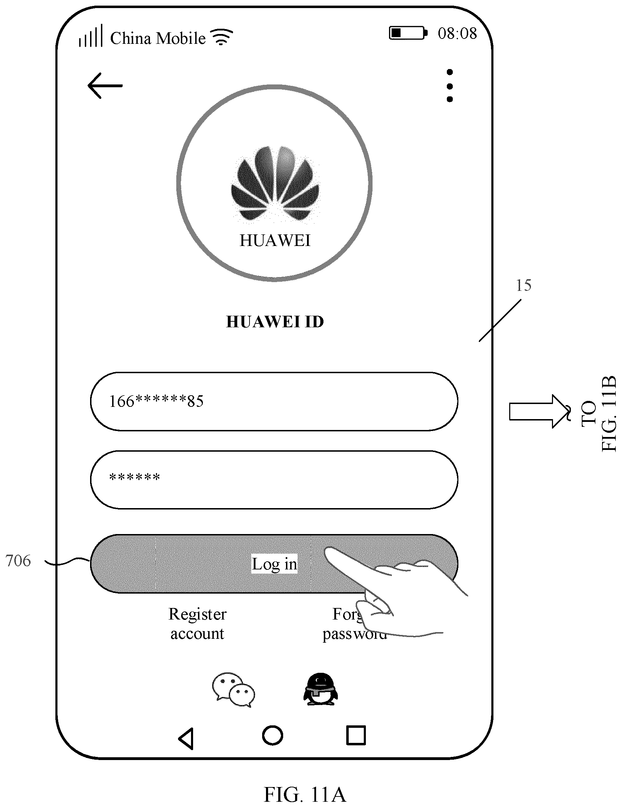

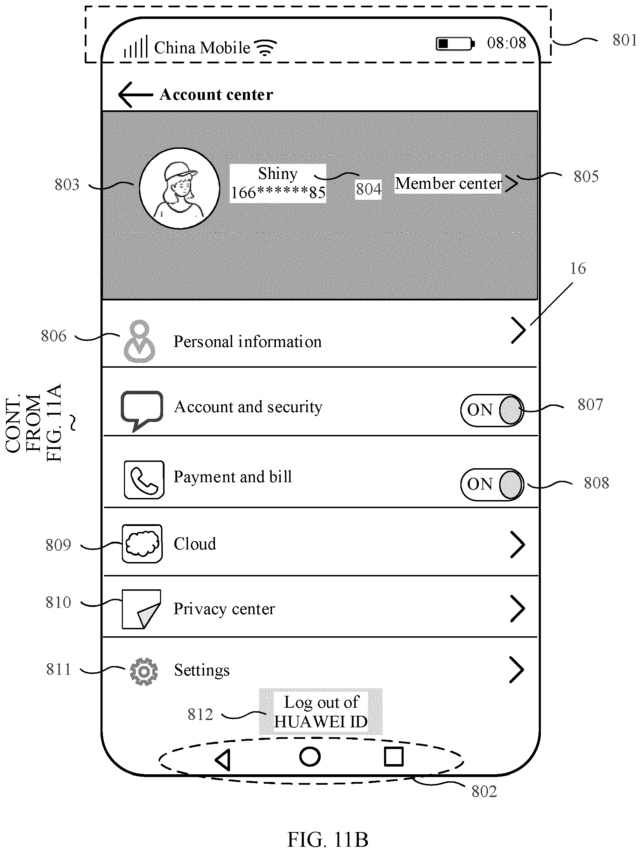

For example, as shown in FIG. 11A and FIG. 11B, after entering an account and a password, the user taps the control 707. The electronic device 100 detects the user operation, and in response to the user operation, the electronic device 100 displays the account center interface 16.

The account center interface 16 may include a status bar 801, a navigation bar 802, a profile picture 803, an account 804, a "Member center" entry 805, a "Personal information" entry 806, a security service control 807, a payment enabling control 808, a "Cloud" entry 809, a "Privacy center" entry 810, a "Settings" entry 811, and a control 812. The "Member center" entry 805 may receive a user operation (for example, a touch operation), and in response to the detected user operation, the electronic device 100 may display a member center user interface.

The "Settings" entry 811 may receive a user operation (for example, a touch operation), and in response to the detected user operation, the electronic device 100 may display the user interface 11.

The control 812 may receive a user operation (for example, a touch operation), and in response to the detected user operation, the electronic device 100 may log out a current Huawei ID.

It may be understood that FIG. 10A and FIG. 10B and FIG. 11A and FIG. 11B merely show example user interfaces on the electronic device 100, and should not constitute a limitation on embodiments of this application.

A smart scene service automatically generates various reminder cards such as travel notes, a to-do list, a travel route, and weather of a destination by identifying air ticket booking information, train ticket booking information, hotel booking information, a meeting schedule, a birthday, and the like in the electronic device 100, and all the reminder cards are stored in a specific interface for quick browsing and management. In addition, the smart scene service can make intelligent recommendations based on the user's usage habits, geographical location, and current time, and automatically generate corresponding smart scene reminder cards, for example, scenic spot recommendation, fitness data, news, and smart search.

In some embodiments, the air ticket booking information, the train ticket booking information, the hotel booking information, the meeting schedule, the birthday, and the like may be obtained from information of an application such as Message, a Calendar, Contacts, or Notepad of the electronic device 100.

Currently, Smart scenes implement the smart scene service of an added event only on a single device, and cannot implement information sharing of the smart scene service between a plurality of devices. Therefore, how to implement information sharing of a smart scene service between a plurality of devices is still a problem to be resolved.

The foregoing smart scene service includes a reminder service and a planning service. For example, after the user receives an SMS message indicating that a flight is successfully booked, a timing reminder service corresponding to the flight is generated. That is, the user is reminded of related information of the flight at one or more preset time points. For example, three hours before the flight takes off, the user is reminded that "the flight will take off three hours later". In addition, some additional planning services can be generated for the flight. For example, one or more travel methods from a current location of the user to an airport are planned, one or more travel routes from the current location of the user to the airport are planned, and weather of a destination of the flight is pushed.

To implement information sharing between a plurality of devices for a smart scene service, embodiments of the present invention provide an information sharing method for a smart scene service.

According to the information sharing method for a smart scene service provided in embodiments of this application, information about a smart scene service can be shared between a plurality of devices. The user may share the information about the smart scene service with existing contacts of the user or a nearby stranger by using the electronic device. The existing contacts of the user may include friends added by the user, a group of the user, and/or contacts locally stored in the electronic device, and the group of the user includes a plurality of friends of the user.

The following describes a Huawei ID contact user interface provided in embodiments of the present invention. By using the Huawei ID contact user interface, an information sharing record may be viewed, a friend may be added, a group may be created, and the like.

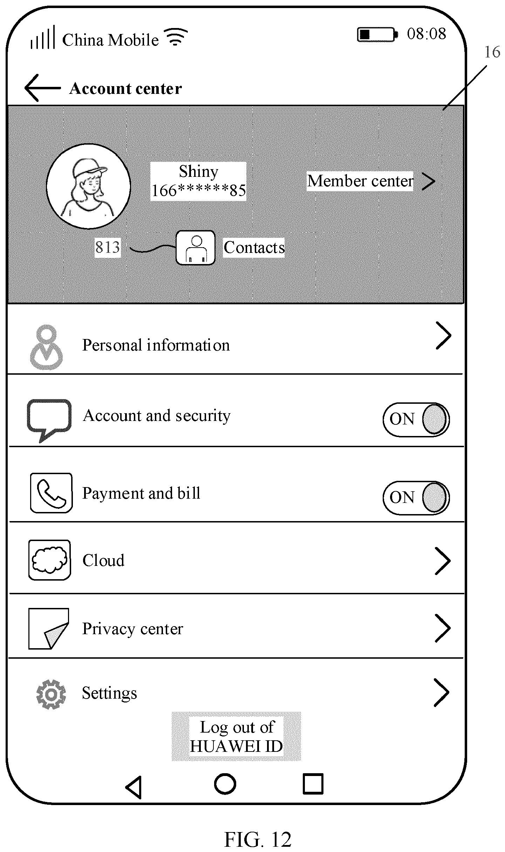

For example, as shown in FIG. 12, the user interface 16 further includes a control 813. The control 813 may receive a user operation (for example, a touch operation), and in response to the detected user operation, the electronic device 100 may display the Huawei ID contact user interface.

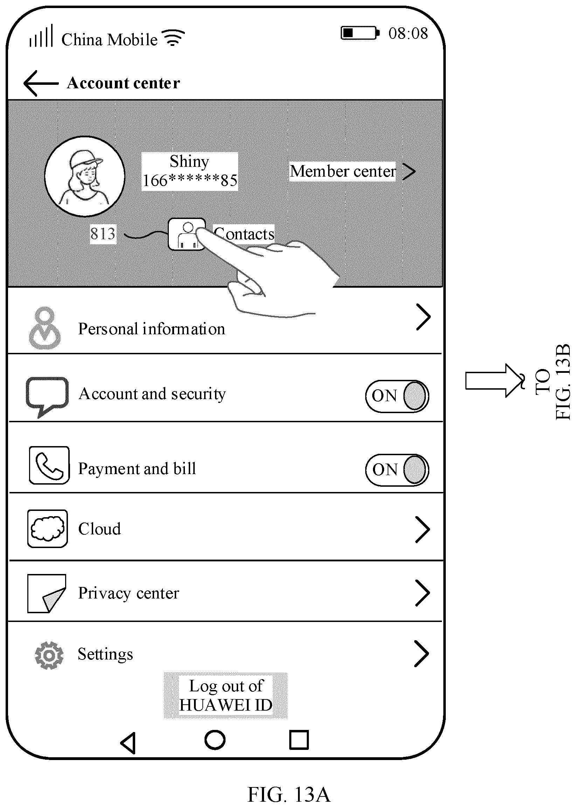

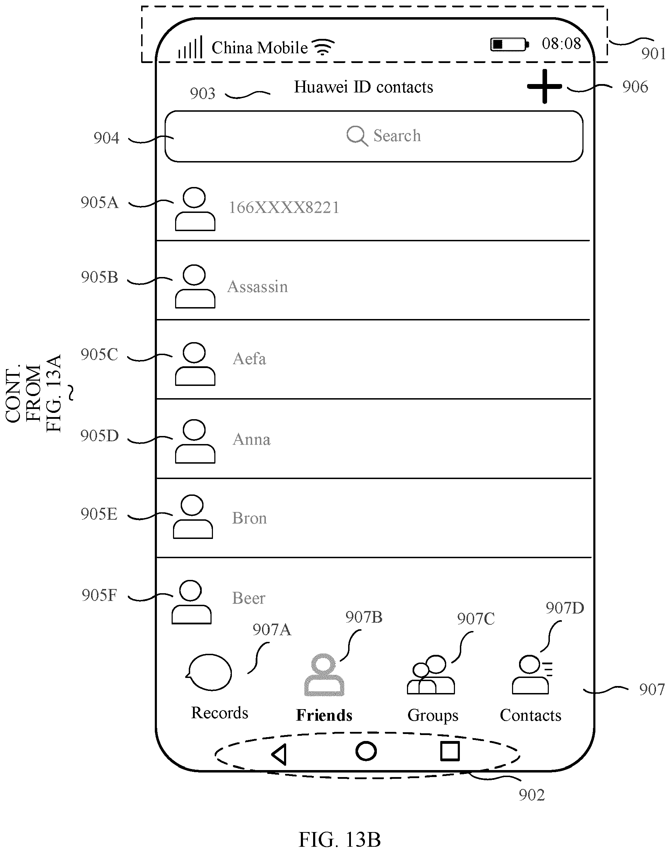

For example, as shown in FIG. 13A and FIG. 13B, the user may tap the control 813. The electronic device 100 detects the user operation, and in response to the user operation, the electronic device 100 displays a Huawei ID contact user interface 17.

The contact user interface 17 may include a status bar 901, a navigation bar 902, a title bar 903, a search box 904, one or more "friends" entries 905A to 905F, a control 906, and a menu 907. The search box 904 may be used to search for a specified contact based on an input of the user.

The "friend" entries are used to display information about one or more friends stored in the electronic device 100. The information about the friend may include a profile picture, a name, a nickname, a phone number, and the like. When a plurality of "friend" entries are displayed in the user interface for displaying one or more "friend" entries, the plurality of "friend" entries may be arranged from top to bottom in a specific or random order. The user may swipe up or down in an area that is in the user interface 17 and that is used to display the "friend" entries, to view more "friend" entries.

The "friend" entry may further receive a user operation (for example, a touch operation), and in response to the detected user operation, the electronic device 100 may display a details page for displaying a friend corresponding to the entry.

The control 906 may receive a user operation (for example, a touch operation), and in response to the detected user operation, the electronic device 100 may display an interface for adding a new friend.

The menu 907 includes a control 907A, a control 907B, a control 907C, and a control 907D. Content displayed on the user interface 17 is related to a currently selected control in the menu 907. As shown in FIG. 13A and FIG. 13B, the control 907B in the menu 907 is currently selected, and the user interface 17 is used to display one or more "friend" entries.

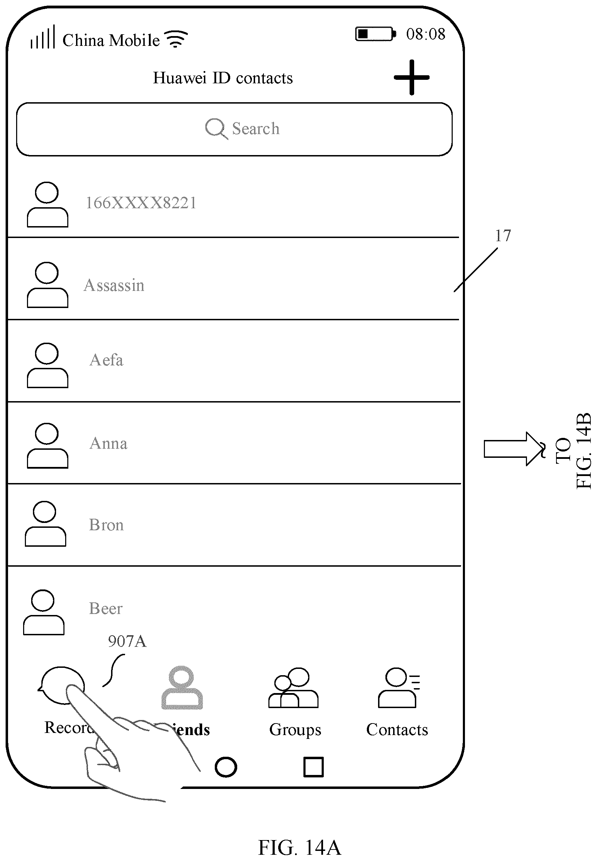

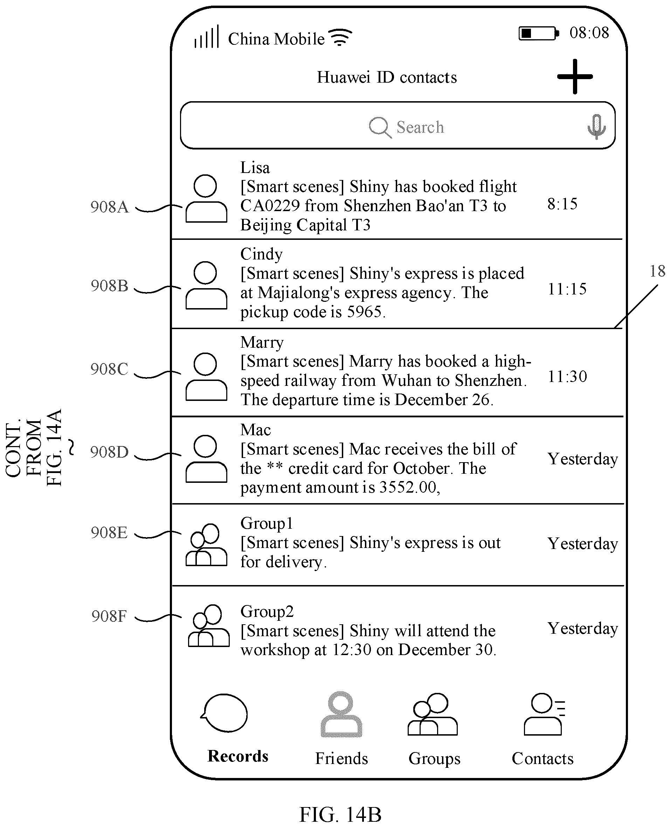

If the control 907A is selected, that is, when the control 907A receives a user operation (for example, a touch operation), in response to the detected user operation, the electronic device 100 may display records of shared information to contacts, for example, records 908A to 908F shown in FIG. 14A and FIG. 14B.

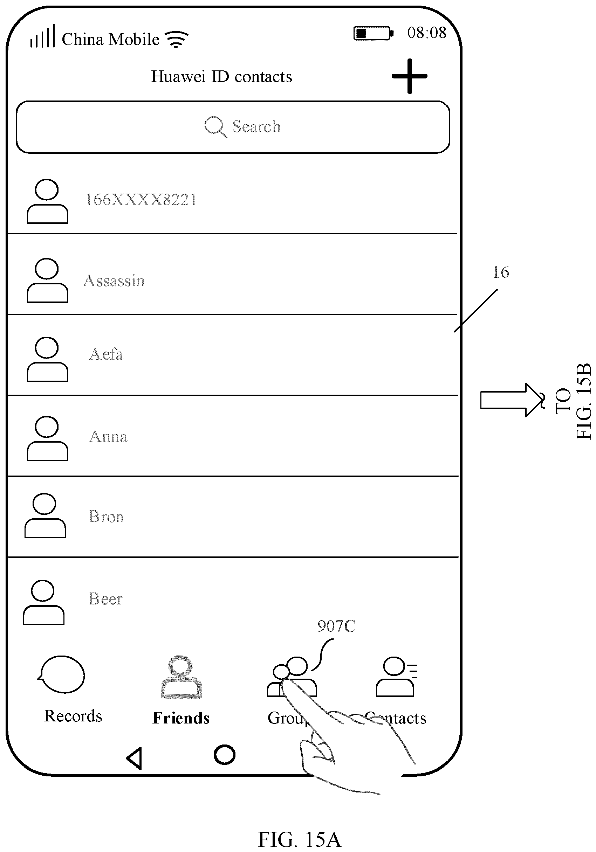

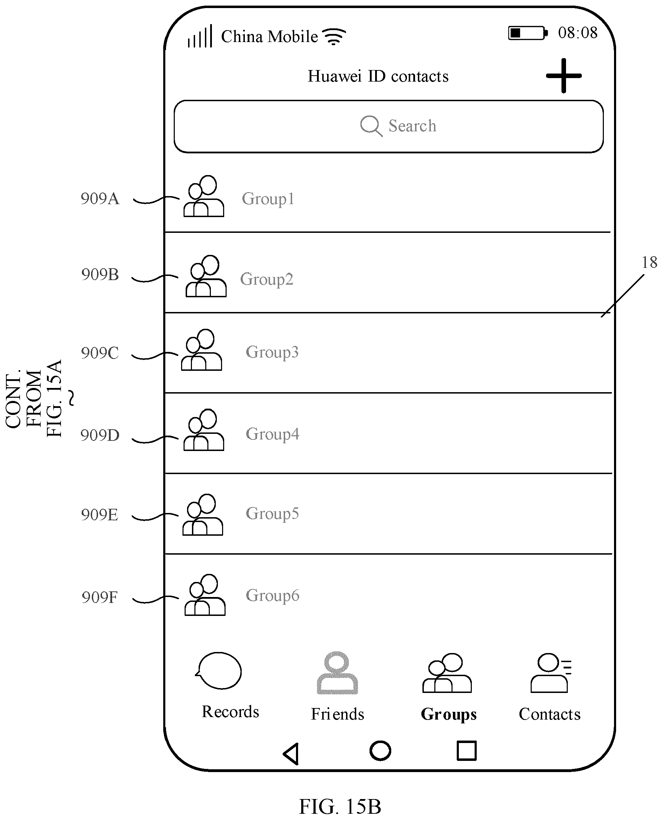

If the control 907C is selected, that is, when the control 907C receives a user operation (for example, a touch operation), in response to the detected user operation, the electronic device 100 may display one or more "group" entries, for example, entries 909A to 909F shown in FIG. 15A and FIG. 15B.

If the control 907D is selected, that is, when the control 907D receives a user operation (for example, a touch operation), in response to the detected user operation, the electronic device 100 may display contact information in Contacts of the electronic device 100.

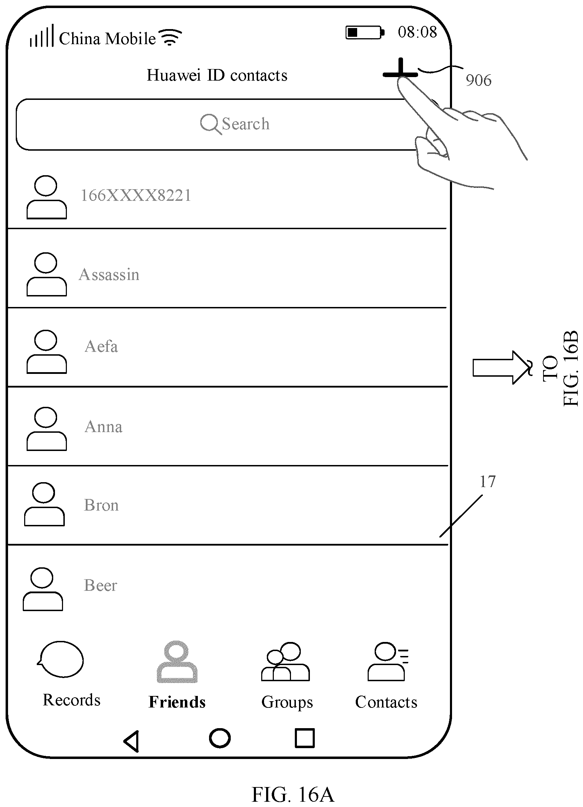

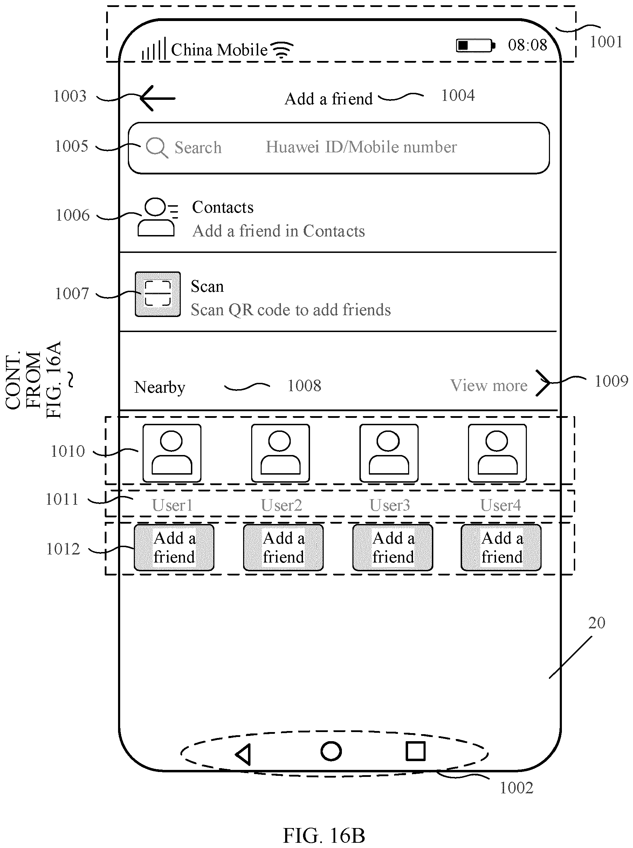

For example, as shown in FIG. 16A and FIG. 16B, the user may tap the control 906. The electronic device 100 detects the user operation, and in response to the user operation, the electronic device 100 displays a user interface 20. The user interface 20 is used to add a new friend.

The user interface 20 may include a status bar 1001, a navigation bar 1002, a control 1003, a title bar 1004, a search box 1005, a "Contacts" entry 1006, a control 1007, a title bar 1008, a control 1009, a profile picture 1010, a user name 1011, and a control 1012. The control 1003 may receive a user operation (for example, a touch operation), and in response to the detected user operation, the electronic device 100 may display a previous user interface of the user interface 20, for example, the user interface 17.

The search box 1005 may be used to search for a specified Huawei user based on a Huawei ID or a mobile number entered by the user.

The "Contacts" entry 1006 may receive a user operation (for example, a touch operation), and in response to the detected user operation, the electronic device 100 may display a contact interface of the electronic device 100.

The control 1007 may receive a user operation (for example, a touch operation), and in response to the detected user operation, the electronic device 100 may display a QR code scanning interface. The QR code scanning interface is used to scan a QR code of another user's Huawei ID, to search for the corresponding Huawei ID.

The control 1009 may receive a user operation (for example, a touch operation), and in response to the detected user operation, the electronic device 100 may display more nearby Huawei users for the user to select.

The profile picture 1010 is used to display a profile picture of a nearby Huawei user, and the user name 1011 is used to display a user name of a Huawei ID corresponding to the profile picture of the user. The control 1012 may receive a user operation (for example, a touch operation), and in response to the detected user operation, the electronic device 100 sends a friend adding request to a device of a Huawei user corresponding to the control.

In addition to the contact user interfaces shown in FIG. 13A and FIG. 13B to FIG. 16A and FIG. 16B, during specific implementation, there may be another form of contact user interface. This is not limited in embodiments of this application.

The information sharing method for a smart scene service provided in embodiments of the present invention may be mainly classified into the following two types: automatic information sharing and manual information sharing. The following describes in detail the foregoing two types of information sharing methods for a smart scene service.

### 1. Automatic information sharing:

First, in an automatic information sharing method for a smart scene service provided in this embodiment of the present invention, a user needs to perform sharing setting on an event on which the user intends to perform automatic information sharing. The sharing setting for automatic information sharing can be triggered from two dimensions, to be specific, triggered from a perspective of a sharing event, or triggered from a perspective of a shared user. The following describes in detail the foregoing sharing setting method for automatic information sharing from the two perspectives.

### (1) Triggering from the perspective of the sharing event:

In some embodiments, the foregoing sharing setting method for automatic information sharing includes but is not limited to step S1 and step S2.

S1: Determine a first event.

The following uses the setting interface 12 of Smart scenes shown in FIG. 5A and FIG. 5B as an example for description.

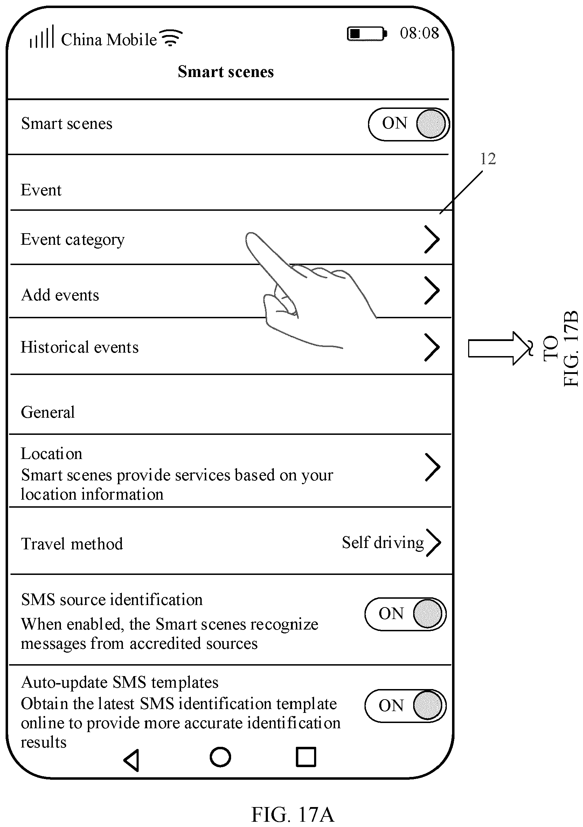

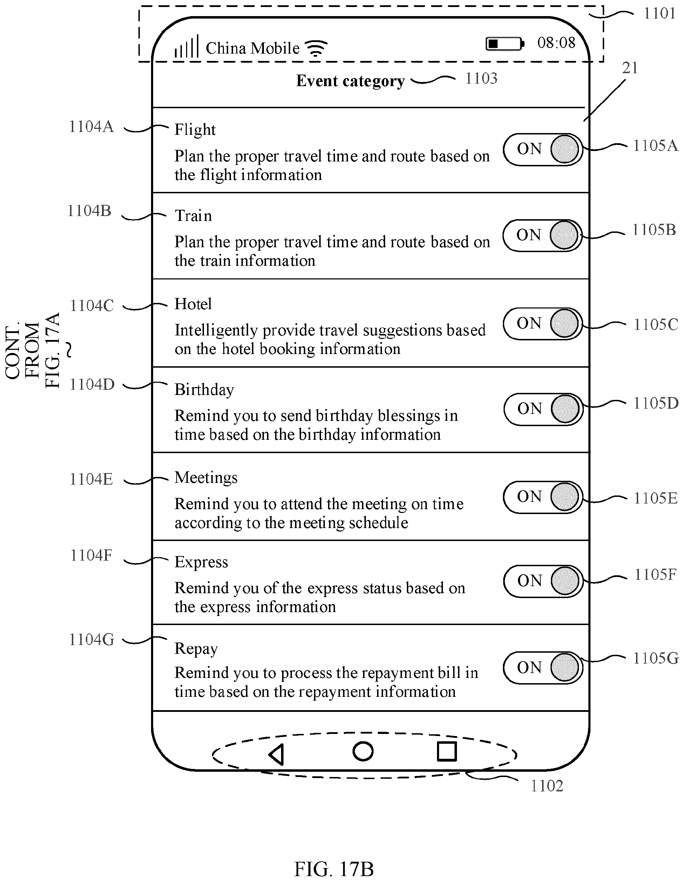

For example, as shown in FIG. 17A and FIG. 17B, the user may tap the "Event type" entry 404A. The electronic device 100 detects the user operation, and in response to the user operation, the electronic device 100 displays a user interface 21.

The user interface 21 may include a status bar 1101, a navigation bar 1102, a title bar 1103, one or more added "event" entries 1104A to 1104G of Smart scenes, and controls 1105A to 1105G that one-to-one correspond to the "event" entries 1104A to 1104G. Any event in the "event" entries 1104A to 1104G of Smart scenes may receive a user operation (for example, a touch operation), and in response to the detected user operation, the electronic device 100 may display a setting interface corresponding to the event.

Any control in the controls 1105A to 1105G may receive a user operation (for example, a touch operation), and in response to the detected user operation, the electronic device 100 may remove an "event" of Smart scenes corresponding to the control from the added events.

In some embodiments, the electronic device 100 displays one or more added events, the electronic device 100 receives a selection operation of the user, and in response to the selection operation, the electronic device 100 displays a setting interface of the first event. The selection operation is used to select the first event from the one or more added events, and the first event is an event on which the user intends to perform automatic sharing setting.

Optionally, the selection operation may be that the user taps any event in the "event" entries 1104A to 1104G of Smart scenes.

S2: Add a first object as a shared user of the first event.

In some embodiments, the electronic device 100 displays one or more contacts of the user, the electronic device 100 receives a third user operation of the user, and in response to the third user operation, the electronic device 100 adds the first object as a shared user of the first event. The third user operation is used to select the first object from the one or more contacts of the user. The one or more contacts of the user may include friends of the user, a group, and a contact in a local address book of the electronic device 100. After the first object is added as a shared user of the first event, the electronic device may automatically send information about a smart scene service of the first event to the first object.

The following uses an example in which the first event is "Flight" to describe how to add an automatically shared user.

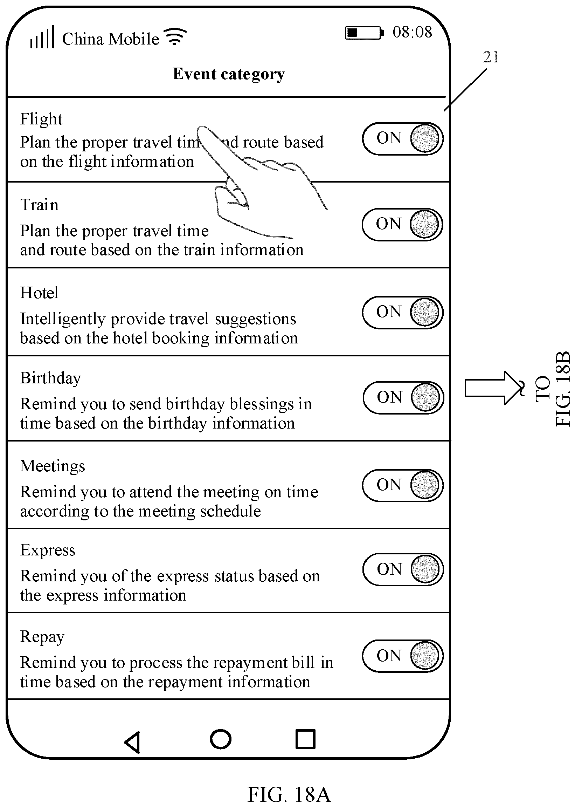

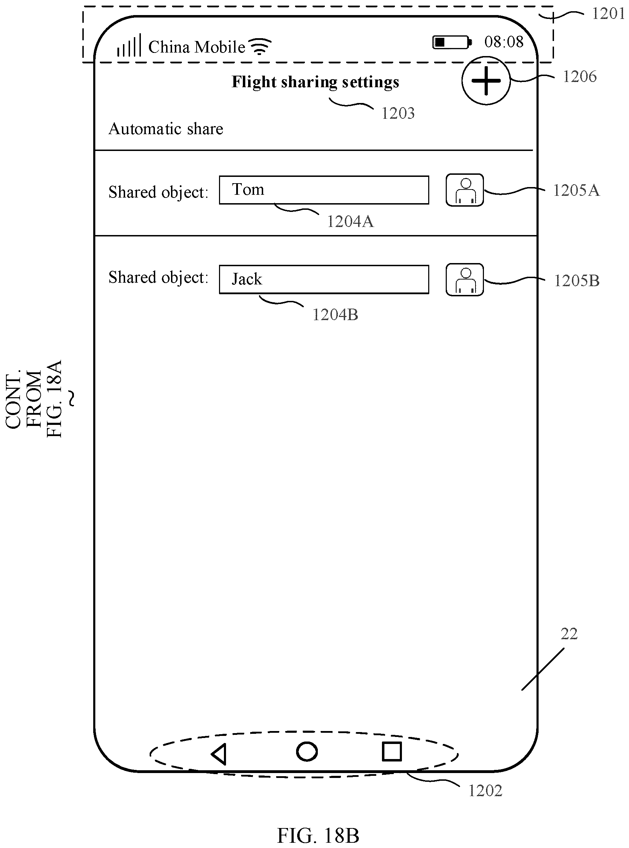

For example, as shown in FIG. 18A and FIG. 18B, the user may tap the "Flight" entry 1104A. The electronic device 100 detects the user operation, and in response to the user operation, the electronic device 100 displays a setting interface 22 corresponding to the "Flight" entry 1104A.

The user interface 22 may include a status bar 1201, a navigation bar 1202, a title bar 1203, one or more display boxes 1204A and 1204B, controls 1205A and 1205B one-to-one corresponding to the display boxes 1204A and 1204B, and an adding control 1206. The display boxes 1204A and 1204B are used to display names of added shared users.

Either of the controls 1205A and 1205B may receive a user operation (for example, a touch operation), and in response to the detected user operation, the electronic device 100 may display a shared user selection interface.

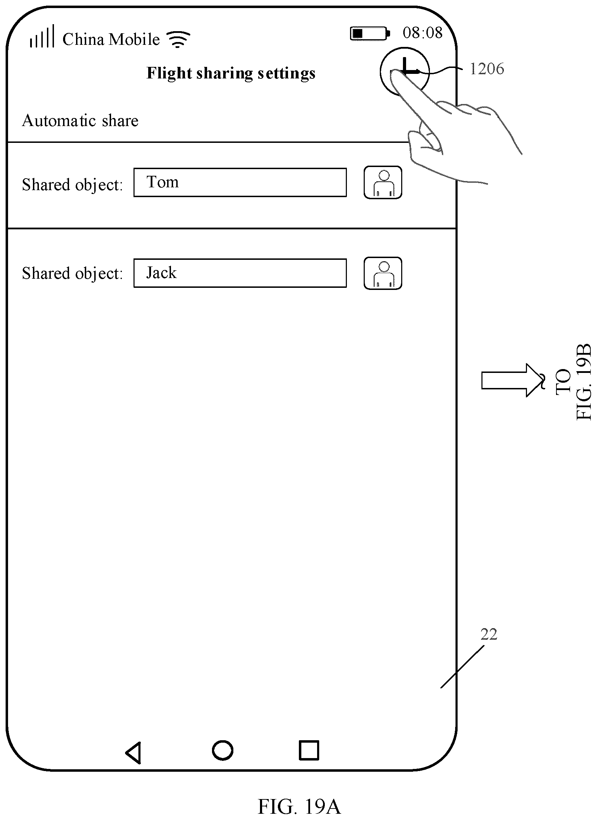

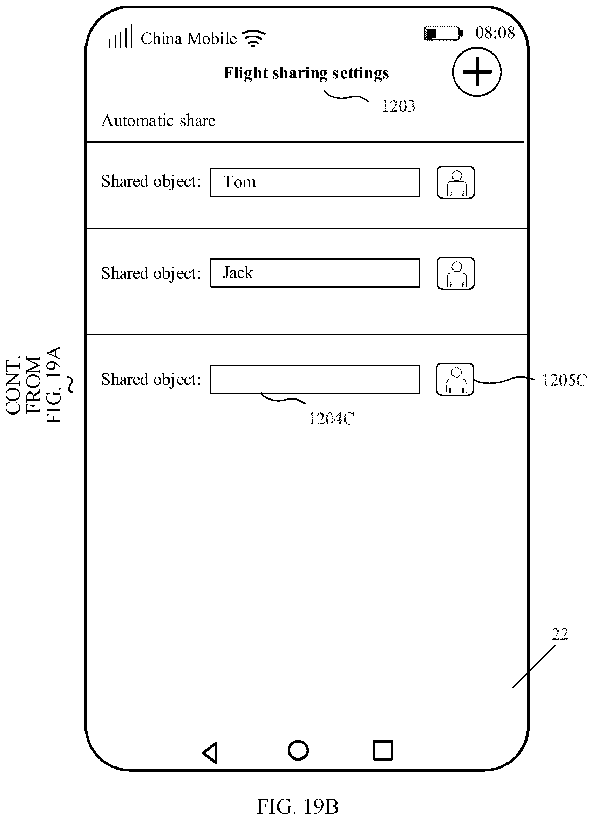

The control 1206 may be used to add a shared user. For example, as shown in FIG. 19A and FIG. 19B, the user may tap the control 1206. The electronic device 100 detects the user operation, and in response to the user operation, the electronic device 100 displays a display box 1204C and a control 1205C on the user interface 22.

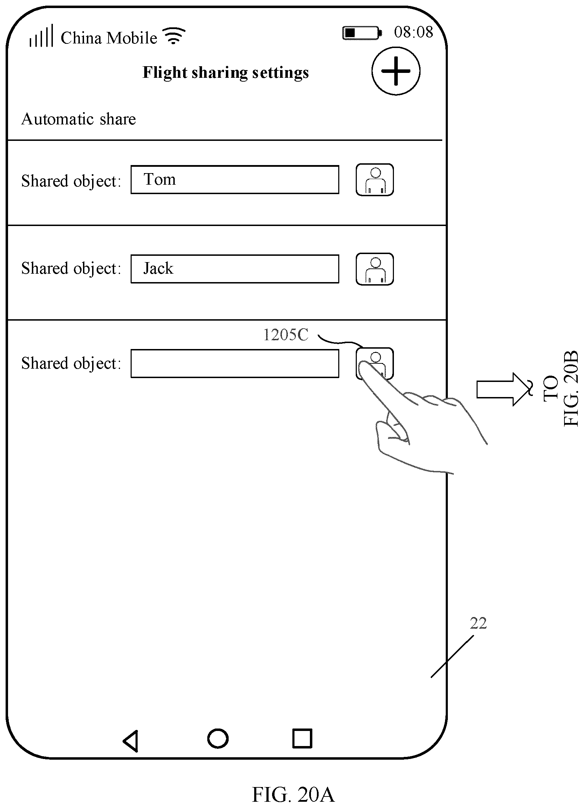

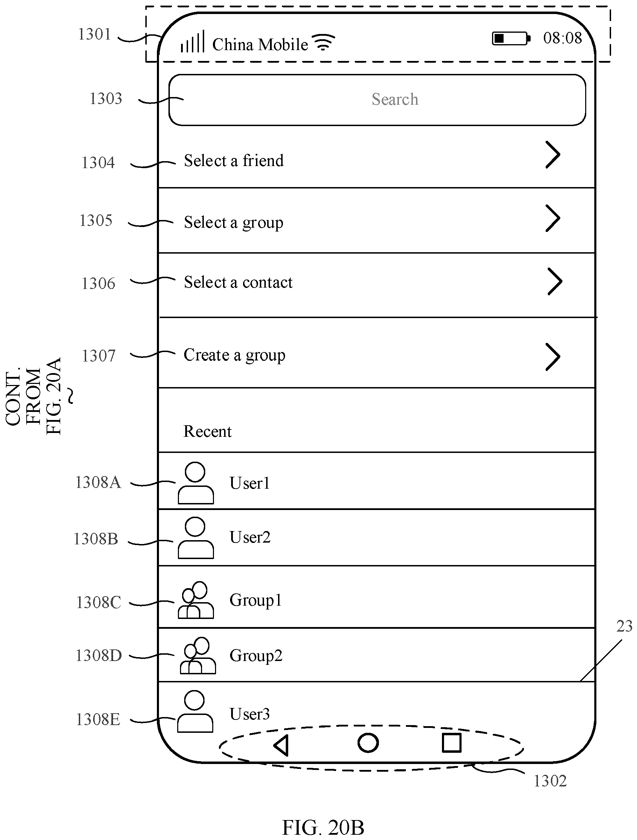

For example, as shown in FIG. 20A and FIG. 20B, the user may tap the control 1205C. The electronic device 100 detects the user operation, and in response to the user operation, the electronic device 100 displays a Huawei contact selection interface 23 on the user interface 22.

The user interface 23 may include a status bar 1301, a navigation bar 1302, a search bar 1303, a "Select a friend" entry 1304, a "Select a group" entry 1305, a "Select a contact" entry 1306, a "Create a group" entry 1307, and one or more recent contacts 1308A to 1308E.

The search bar 1303 may be used to search for a specific Huawei ID based on a user input.

Optionally, the third user operation may be that the user selects the first object by using the "Select a friend" entry 1304.

The "Select a friend" entry 1304 may receive a user operation (for example, a touch operation), and in response to the detected user operation, the electronic device 100 may display an interface for selecting a friend of the user. The friend selection interface may include one or more friends of the user, and the one or more friends of the user may include any friend in the "friend" entries 905A to 905F shown in FIG. 13A and FIG. 13B.

Optionally, the third user operation may be that the user selects the first object by using the "Select a group" entry 1305.

The "Select a group" entry 1305 may receive a user operation (for example, a touch operation), and in response to the detected user operation, the electronic device 100 may display an interface for selecting a group of the user. The group selection interface may include one or more groups of the user, and the one or more groups of the user may include any one of the "group" entries 909A to 909F shown in FIG. 15A and FIG. 15B.

Optionally, the third user operation may be that the user selects the first object by using the "Select a contact" entry 1306.

The "Select a contact" entry 1306 may receive a user operation (for example, a touch operation), and in response to the detected user operation, the electronic device 100 may display an interface for selecting a contact of the user. The contact selection interface may include one or more contacts locally stored in an address book of the electronic device 100.

The "Create a group" entry 1307 may receive a user operation (for example, a touch operation), and in response to the detected user operation, the electronic device 100 may display a group creation interface. As the name implies, the creation interface is used to create a new group for the user. After the new group is created, the user may select the new group by using the "Select a group" entry 1304.

Optionally, the third user operation may be tapping any one of the one or more recent contacts 1308A to 1308E of the user.

Any one of the one or more recent contacts 1308A to 1308E may receive a user operation (for example, a touch operation), and in response to the detected user operation, the electronic device 100 may display the user interface 22. A contact in the one or more recent contacts 1308A to 1308E may be a friend of the user, a user group, a contact in Contacts of the electronic device 100, or another Huawei user.

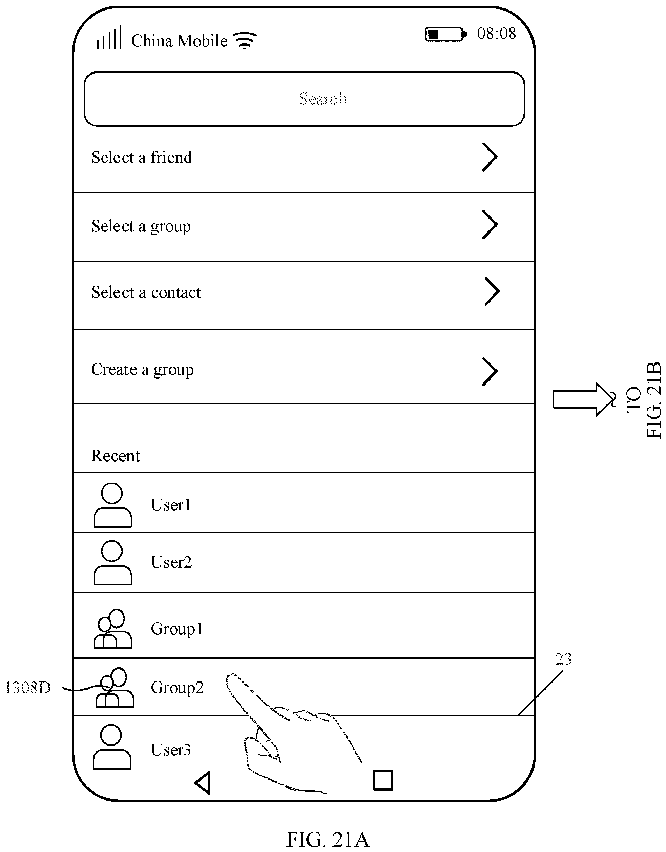

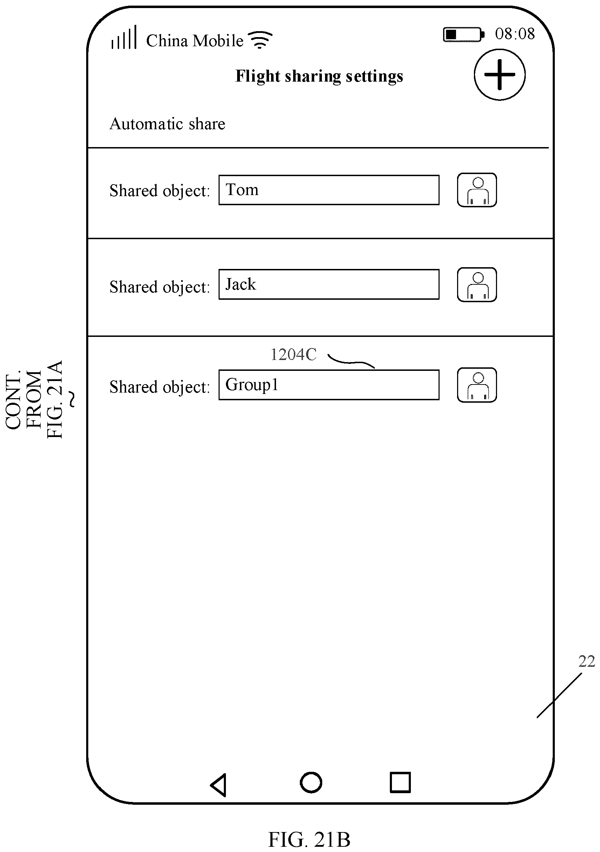

For example, as shown in FIG. 21A and FIG. 21B, the user may tap the contact 1308D. The electronic device 100 detects the user operation. In response to the user operation, the electronic device 100 displays the user interface 23, and displays a user name corresponding to the contact 1308D in the display box 1204C, that is, Group2. The contact 1308D corresponds to a user group.

In some embodiments, to avoid disturbing a shared user, a sharing time period may be set for a specific shared user.

From the perspective of the sharing event, after step S2, the foregoing sharing setting method for automatic information sharing may further include step S3.

S3: Determine a first sharing time period of the first object of the first event.

In some embodiments, the electronic device 100 displays a sharing time period input box of the first object of the first event, and the electronic device 100 receives a fourth user operation of the user. In response to the fourth user operation, the electronic device adds the first sharing time period for automatic sharing with the first object of the first event. The fourth user operation may be entering the first sharing time period in the sharing time period input box.

It may be understood that the fourth user operation is used to determine the first sharing time period of the first object of the first event. After the first sharing time period of the first object is determined, the information about the smart scene service of the first event is automatically shared with the first object only within the first sharing time period.

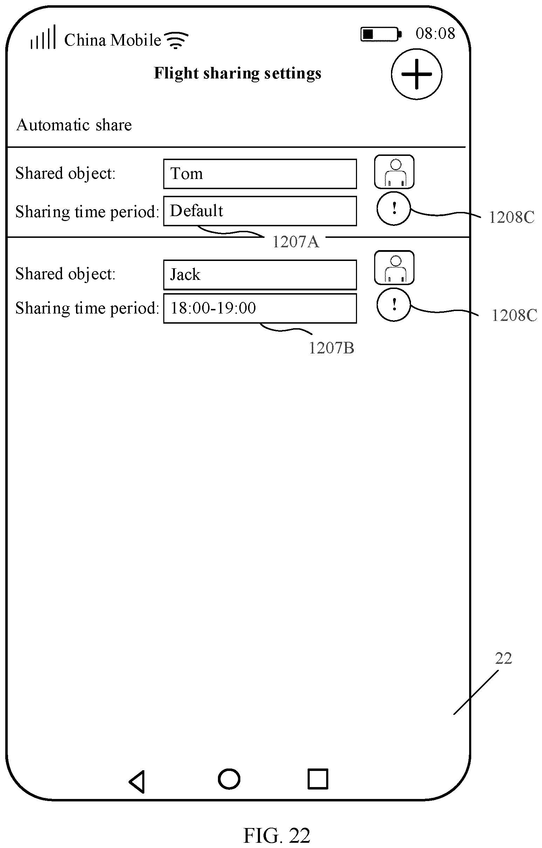

For example, as shown in FIG. 22, the user interface 21 may further include display boxes 1207A and 127B and controls 1208A and 127B.

The display boxes 1204A and 1204B are used to display sharing time periods of added shared users. The controls 1208A and 127B one-to-one correspond to the display boxes 1204A and 1204B.

Either of the controls 1208A and 1208B may receive a user operation (for example, a touch operation), and in response to the detected user operation, the electronic device 100 may display a sharing time period selection interface.

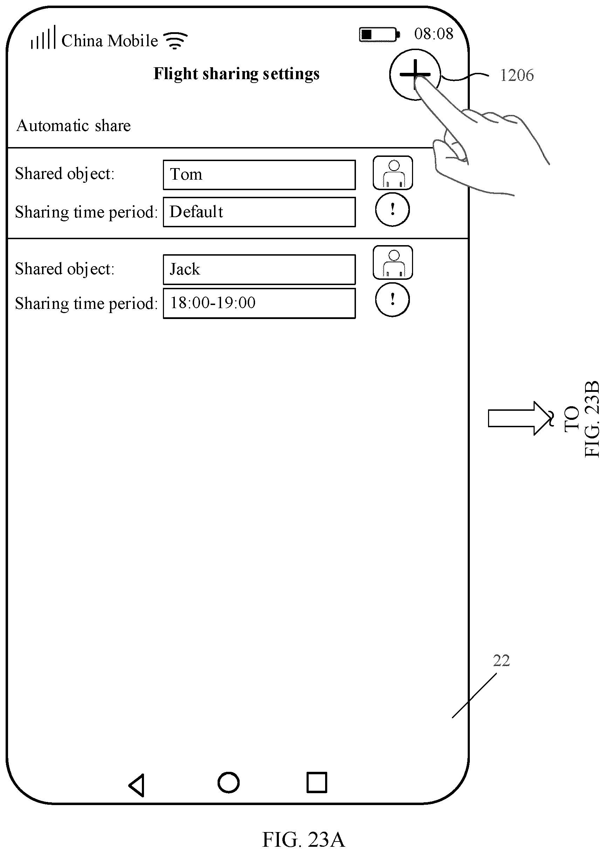

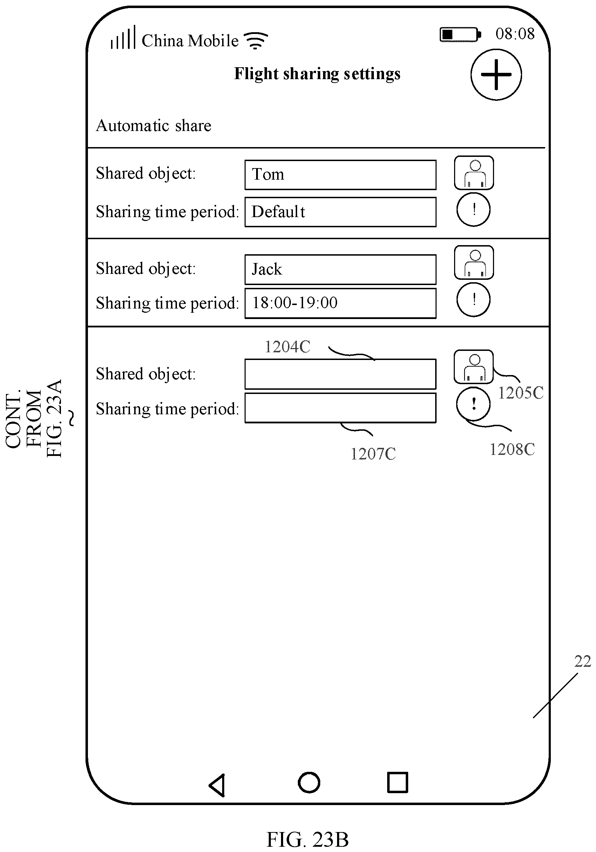

For example, as shown in FIG. 23A and FIG. 23B, the user may tap the control 1206. The electronic device 100 detects the user operation, and in response to the user operation, the electronic device 100 displays the display box 1204C, the control 1205C, a display box 1207C, and a control 1208C on the user interface 22.

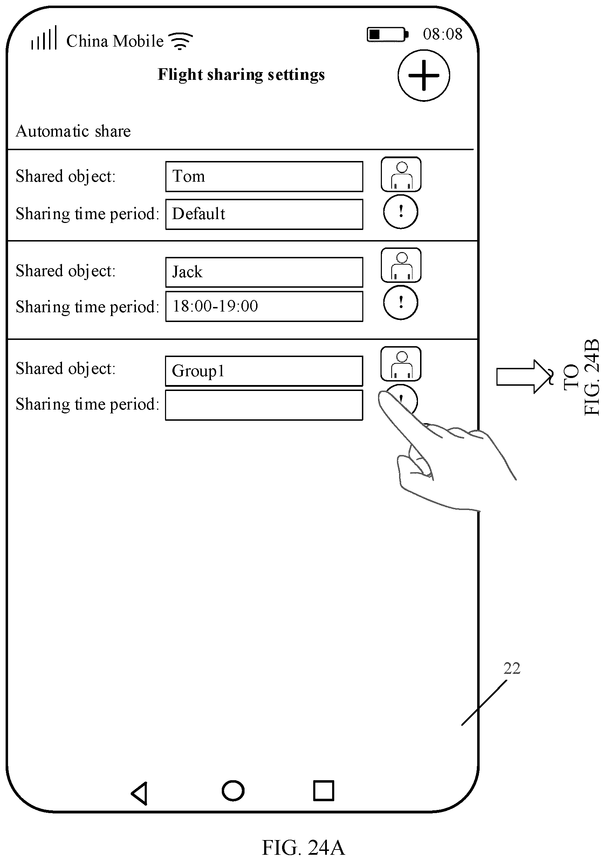

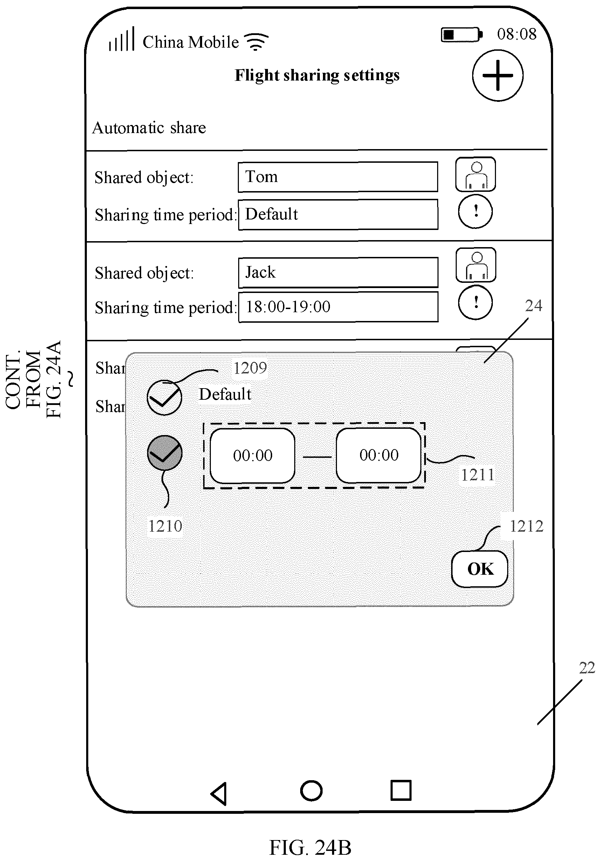

For example, as shown in FIG. 24A and FIG. 24B, after the user determines, by using the control 1205C, that the shared user is Group1, Group1 is displayed in the display box 1204C. The user may tap the control 1208C. The electronic device 100 detects the user operation, and in response to the user operation, the electronic device 100 displays a sharing time period selection user interface 24 of Group1.

The sharing time period selection interface 24 may include a control 1209, a control 1210, an input box 1211, and a control 1212.

The control 1209 may receive a user operation (for example, a touch operation), and in response to the detected user operation, the electronic device 100 may set a sharing time period of Group 1 to a default time period.

In this embodiment of this application, if the user sets a sharing time period to the default time period, it indicates that when generating a smart scene reminder message for the user, the electronic device 100 automatically shares the smart scene reminder message with a shared user. In other words, the sharing time period is not limited.

The control 1210 may receive a user operation (for example, a touch operation), and in response to the detected user operation, the electronic device 100 may receive a sharing time period entered by the user in the input box 1211.

The control 1212 may receive a user operation (for example, a touch operation), and in response to the detected user operation, the electronic device 100 closes the user interface 24 and displays the user interface 22.

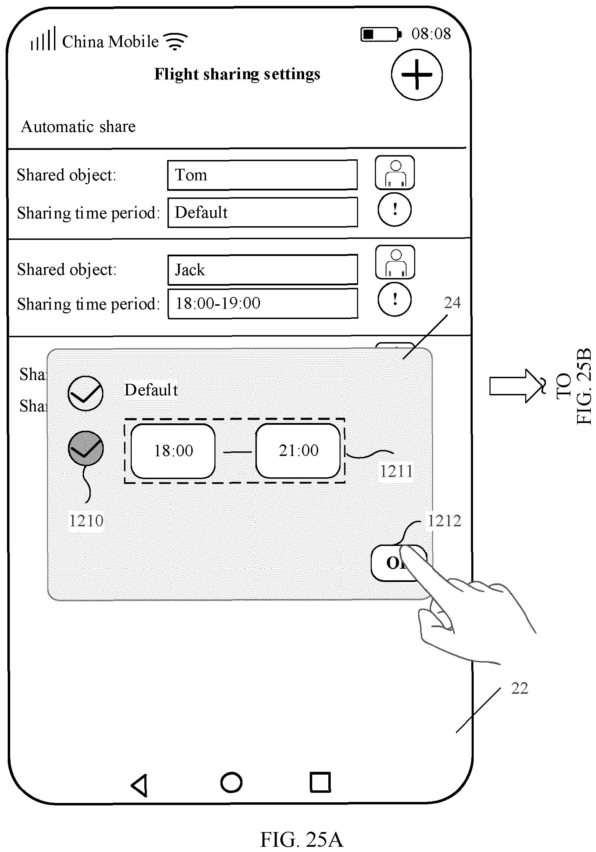

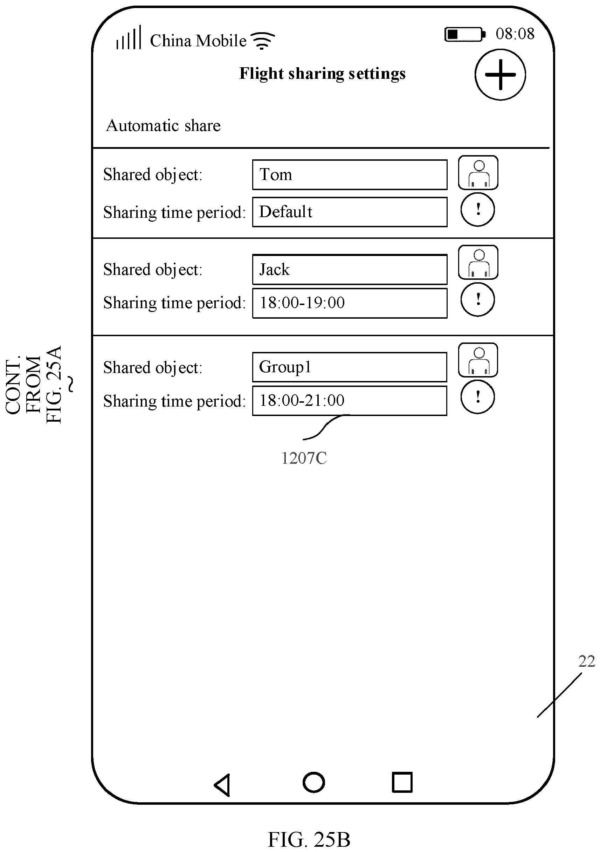

For example, as shown in FIG. 25A and FIG. 25B, after the user enters a sharing time period in the input box 1211, the user may tap the control 1212. The electronic device 100 detects the user operation, and in response to the user operation, the electronic device 100 displays the user interface 22, and displays, in the display box 1207C, the sharing time period entered by the user.

Optionally, the fourth user operation may be that the user determines the first sharing time period of the first object by using the sharing time period selection interface 24.

Optionally, the fourth user operation may be that the user successively taps the control 1209 and the control 1212.

Optionally, the fourth user operation may be that after the user taps the control 1210, the user enters a sharing time period on the control 1211, and taps the control 1212.

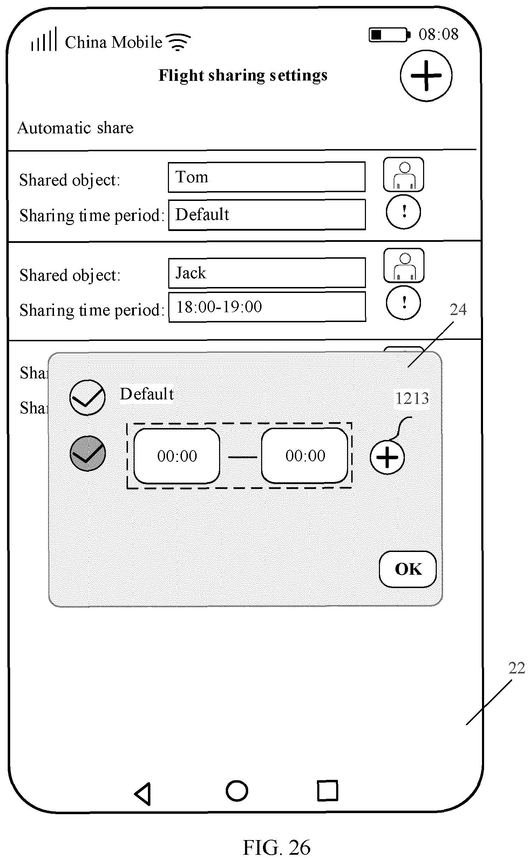

In some embodiments, as shown in FIG. 26, the user interface 24 further includes a control 1213.

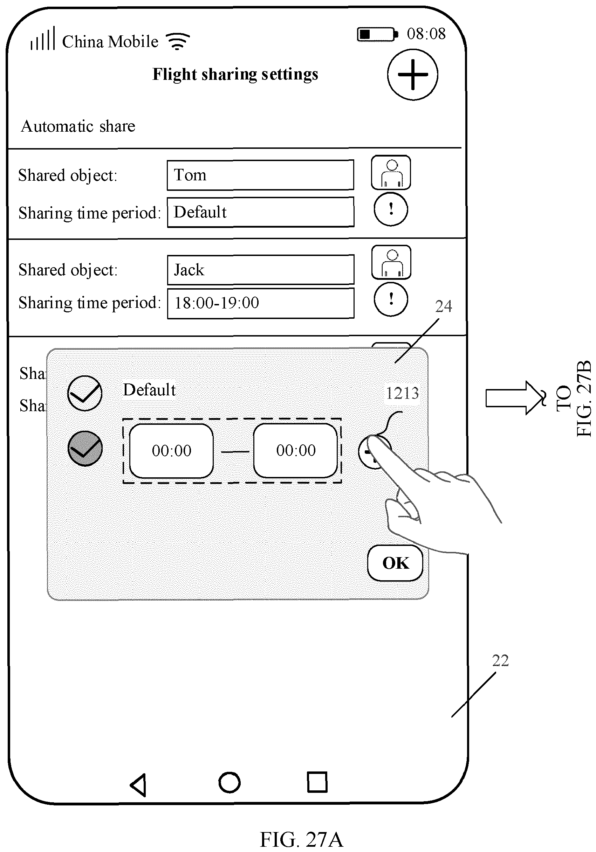

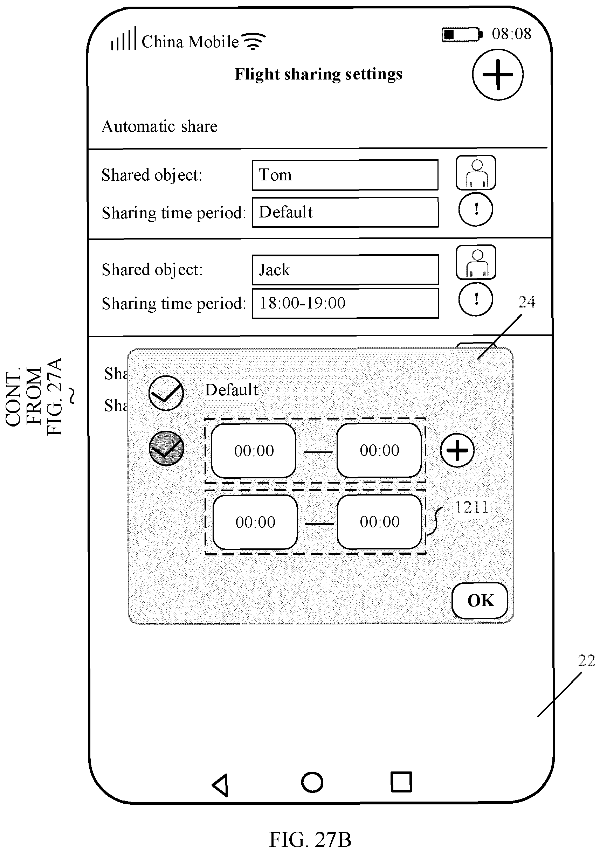

For example, as shown in FIG. 27A and FIG. 27B, the user may tap the control 1213. The electronic device 100 detects the user operation, and in response to the user operation, the electronic device 100 adds a display box 1211 on the user interface 24.

It may be understood that, for a specific shared user, the user may preset a plurality of sharing time periods for automatic information sharing.

It may be understood that, if the user presets only one sharing time period (for example, 18:00-21:00), information about a smart scene service of a flight event is shared with Group1 only between 18:00 and 21:00.

In some embodiments, a display 10 simultaneously displays the user interface 24 and the user interface 22, and the user interface 24 is stacked on the user interface 22. In addition to a display manner of the sharing time period selection interface 24, during specific implementation, there may be another display manner. This is not limited herein.

In some embodiments, to prevent sensitive information in information (including information about a to-be-processed transaction of a smart scene service) about the smart scene service from being shared with another person, shared content may be set for a specific event.

From the perspective of the sharing event, after step S1, the foregoing sharing setting method for automatic information sharing may further include step S4.

S4: Determine shared content of the first event.

In some embodiments, the electronic device 100 displays a default option and one or more descriptor options of the shared content of the first event. The electronic device 100 receives a fifth user operation of the user, and in response to the fifth user operation, the electronic device 100 determines automatically shared content of the first event. The fifth user operation may be that the user selects the default option, or selects one or more of the one or more descriptor options. One descriptor option includes one or more descriptors.

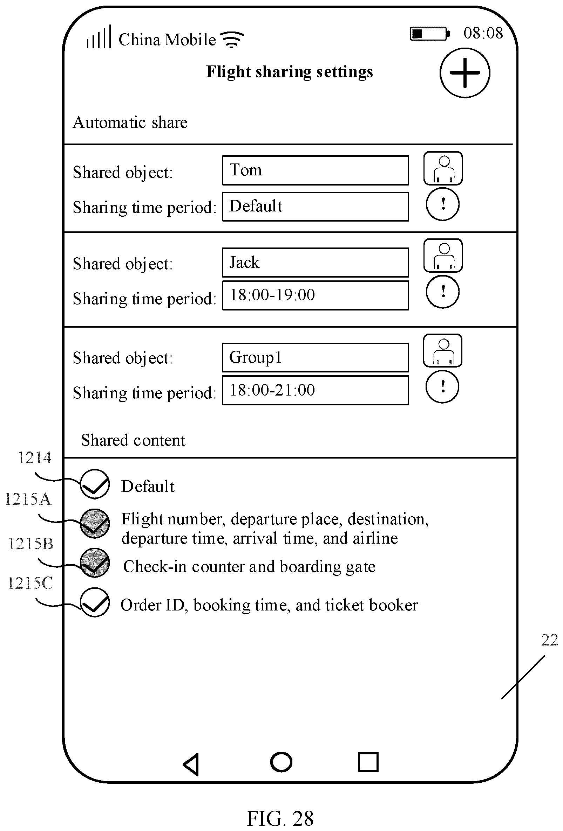

For example, as shown in FIG. 28, the user interface 21 may further include a control 1214 and controls 1215A to 1215C.

The control 1214 may receive a user operation (for example, a touch operation), and in response to the detected user operation, the electronic device 100 may set or cancel shared content of the flight event as a default descriptor. The default descriptor includes one or more descriptors.

In some embodiments, if the user sets the shared content to the default descriptor, it indicates that after generating a smart scene service for the user, the electronic device 100 automatically shares, with the shared user of the first event, information that is in information about a to-be-processed transaction in the smart scene service and that matches a preset descriptor.

In some embodiments, if the user sets the shared content to the default descriptor, it indicates that after generating a smart scene service for the user, the electronic device 100 automatically shares all description information of a to-be-processed transaction in the smart scene service with the shared user.

Any one of the control 1215A to 1215C may receive a user operation (for example, a touch operation), and in response to the detected user operation, the electronic device 100 may set or cancel the shared content of the flight event to include a descriptor corresponding to the control.

It may be understood that, if the user first selects the control 1214 corresponding to the default descriptor, the user cannot select any control in the controls 1215A to 1215C. If the user first selects any control in the controls 1215A to 1215C, the user cannot select the control 1214.

Optionally, the fifth user operation may be that the user taps the control 1214.

Optionally, the fifth user operation may be that the user taps one or more of the controls 1215A to 1215C.

In some embodiments, shared content may be further set for each shared user of the first event.

In some embodiments, for a specific event and a specific shared user, although the user sets automatic sharing, information about the smart scene service of the event may include a message that the user does not want to share. To avoid the foregoing case, in the automatic information sharing method for a smart scene service, the user may set authorized sharing for a specific event. To be specific, before the electronic device 100 shares information about a smart scene service with a specific object, the electronic device 100 enables the user to determine again whether to perform sharing.

From the perspective of the sharing event, after step S1, the foregoing sharing setting method for automatic information sharing may further include step S5.

S5: Determine an authorization mechanism of the first event.

In some embodiments, the electronic device displays a turn-on control of the authorization mechanism of the first event, the electronic device 100 receives a sixth user operation of the user, and in response to the sixth user operation, the electronic device 100 adds the authorization mechanism for the first event. The sixth user operation may be that the user taps the turn-on control.

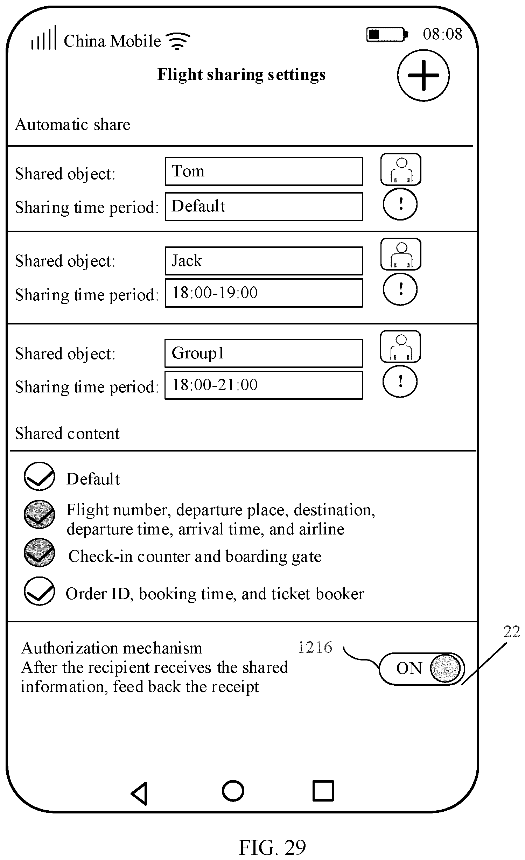

For example, as shown in FIG. 29, the user interface 21 further includes a control 1216.

The control 1216 may receive a user operation (for example, a touch operation), and in response to the detected user operation, the electronic device 100 may enable or disable authorized sharing.

Optionally, the sixth user operation may be that the user taps the control 1216.

In some embodiments, before sharing a smart scene service with a specific object, the electronic device 100 may further enable the user to determine again whether to perform sharing.

In some embodiments, an authorization mechanism may be further set for each shared user of the first event.

In some embodiments, to obtain, in a timely manner, a receiving status of the shared information of the first event, a feedback mechanism may be set for a specific event. After the feedback mechanism is enabled, if the shared user views information that is about a to-be-processed transaction of a smart scene service and that is received by an electronic device of the user, the electronic device of the shared user sends a feedback message to the electronic device 100. The feedback message may include a time point at which the shared user views the information about the to-be-processed transaction of the smart scene service, and the time point may be used to set or adjust a sharing time period of the shared user.

From the perspective of the sharing event, after step S1, the foregoing sharing setting method for automatic information sharing may further include step S6.

S6: Determine a feedback mechanism of the first event.

In some embodiments, the electronic device displays a turn-on control of the feedback mechanism of the first event, the electronic device 100 receives a seventh user operation of the user, and in response to the seventh user operation, the electronic device 100 determines to add the feedback mechanism for the first event. The seventh user operation may be that the user taps the turn-on control.

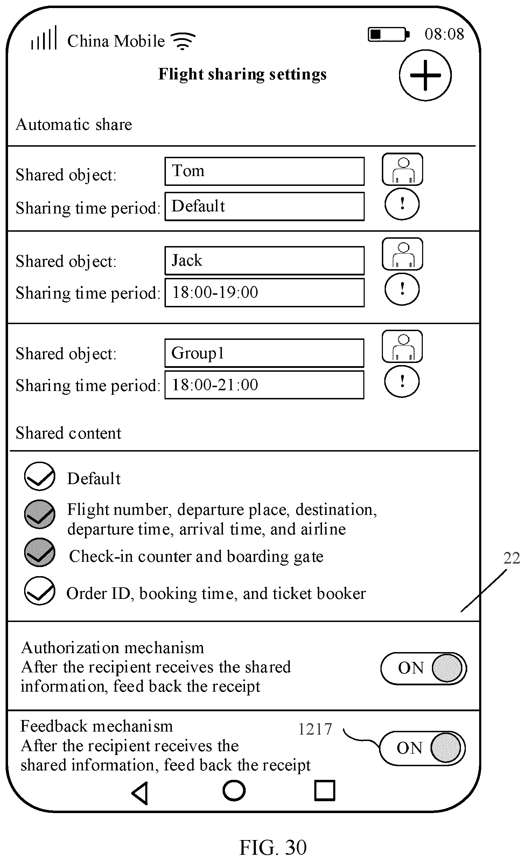

For example, as shown in FIG. 30, the user interface 21 further includes a control 1217.

In some embodiments, a feedback mechanism may be further set for each shared user of the first event.

In this embodiment of this application, after the feedback mechanism is added for the first event, an electronic device of the first object receives and views the information that is about the to-be-processed transaction of the smart scene service and that is shared by the electronic device 100, and then sends a feedback message to the electronic device 100, to indicate that the information about the to-be-processed transaction has been viewed.

Optionally, the feedback message may carry a time point at which the first object views the information about the to-be-processed transaction. The electronic device 100 may also record viewing time points of the first object, to obtain a viewing habit of the first object, that is, a time period including most of the viewing time points of the first object, to dynamically adjust the sharing time period of the first object based on the foregoing time period.

The control 1217 may receive a user operation (for example, a touch operation), and in response to the detected user operation, the electronic device 100 may enable or disable the feedback mechanism.

Optionally, the seventh user operation may be that the user taps the control 1217.

### (2) Triggering from the perspective of the shared user:

In some embodiments, the foregoing sharing setting method for automatic information sharing includes but is not limited to step S7 and step S8.

S7: Select a first object.

The following uses the contact interface 17 of Smart scenes shown in FIG. 13A and FIG. 13B as an example for description.

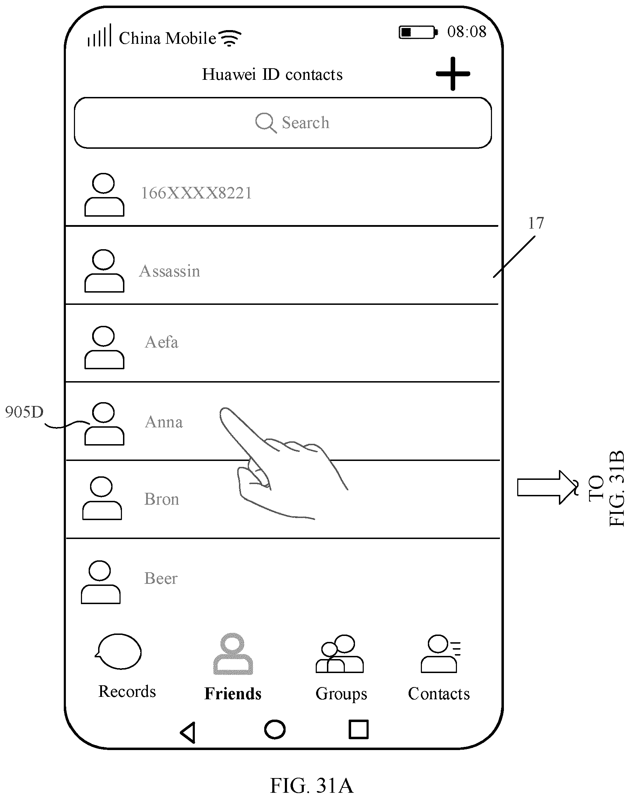

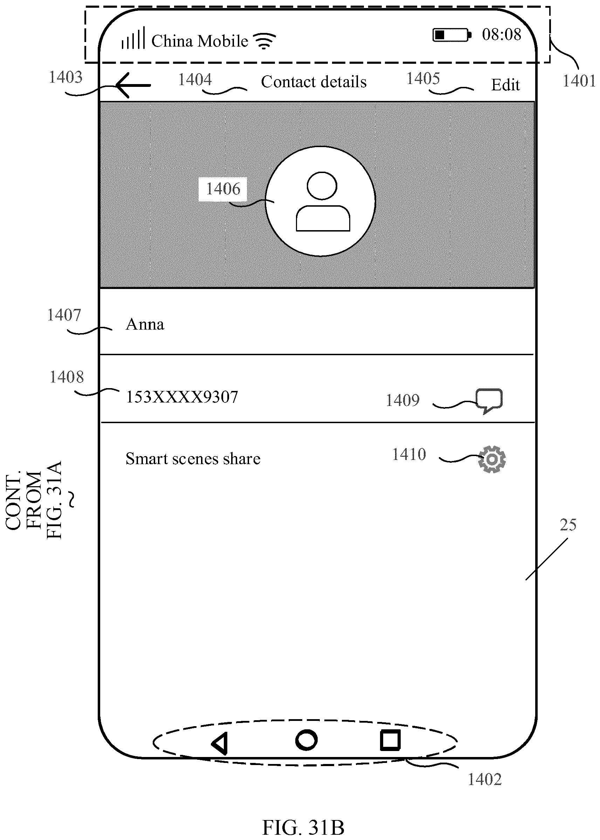

For example, as shown in FIG. 31A and FIG. 31B, the user taps the "friend" entry 905D. The electronic device 100 detects the user operation, and in response to the user operation, the electronic device 100 displays a contact detail interface 25 of "Anna".

The user interface 25 may include a status bar 1401, a navigation bar 1402, a control 1403, a title bar 1404, a control 1405, a profile picture 1406, a user name 1407, an account 1408, a control 1409, and a control 1410. The control 1403 may receive a user operation (for example, a touch operation), and in response to the detected user operation, the electronic device 100 may display a previous user interface of the user interface 25.

The control 1405 may receive a user operation (for example, a touch operation), and in response to the detected user operation, the electronic device 100 may receive an editing operation of the user on the contact detail interface of Anna.

The control 1409 may receive a user operation (for example, a touch operation), and in response to the detected user operation, the electronic device 100 may receive an information sharing record of the smart scene service between the user and Anna.

The control 1410 may receive a user operation (for example, a touch operation), and in response to the detected user operation, the electronic device 100 may display an automatic information sharing setting interface 26 of Smart scenes.

In some embodiments, the electronic device 100 displays one or more contacts of the user. The electronic device 100 receives an eighth user operation of the user, and in response to the eighth user operation, the electronic device 100 displays a contact detail interface of the first object. The interface includes a first control, and the first control is used to trigger the electronic device 100 to display an automatic information sharing setting interface of Smart scenes of the first object. The eighth user operation is used to select the first object from the one or more contacts of the user.

Optionally, the eighth user operation may be that the user taps the "friend" entry 905D, and the first object is Anna.

S8: Select a first event as a sharing event of the first object.

In some embodiments, the electronic device 100 displays one or more events that can be added for the first object. The electronic device 100 receives a ninth user operation of the user, and in response to the ninth user operation, the electronic device 100 selects the first event as a sharing event of the first object. The ninth user operation is used to select the first event from the one or more events that can be added for the first object. After selecting the first event as a sharing event of the first object, the electronic device 100 may share related information of a smart scene service of the first event with the first object.

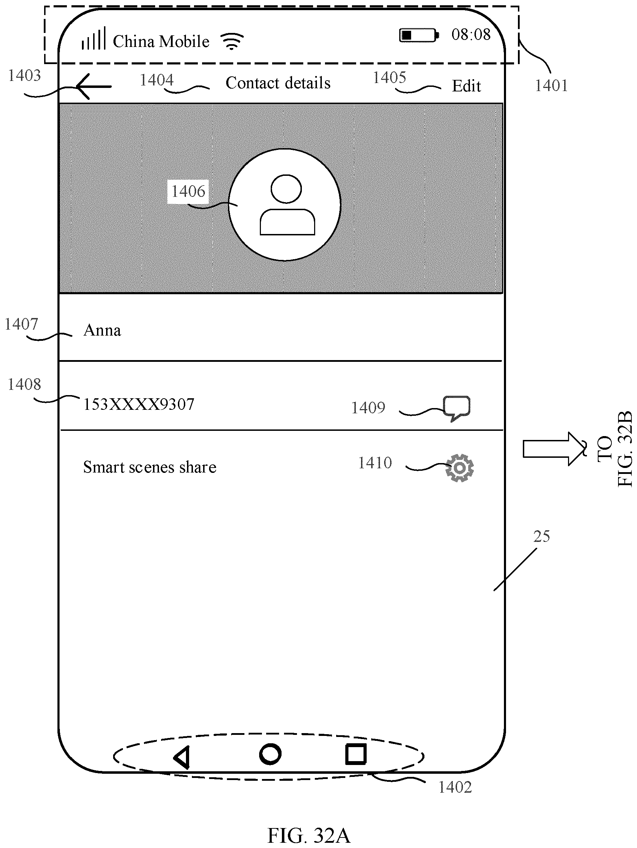

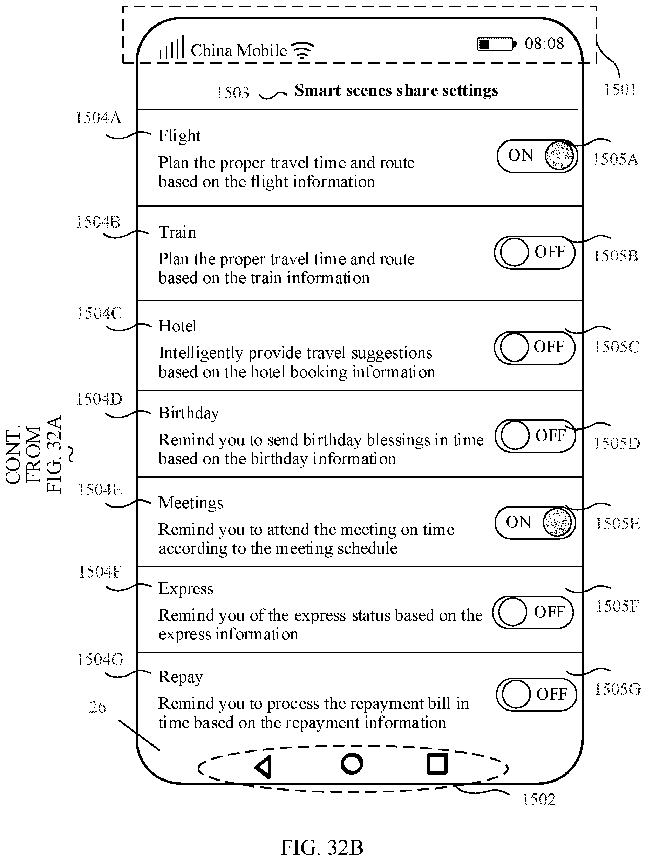

For example, as shown in FIG. 32A and FIG. 32B, the user may tap the control 1410. The electronic device 100 detects the user operation, and in response to the user operation, the electronic device 100 displays the automatic information sharing setting interface 26 of Smart scenes of Anna.

The setting interface 26 may include a status bar 1501, a navigation bar 1502, a title bar 1503, and controls 1504A to 1504G. Any one of the controls 1505A to 1505G may receive a user operation (for example, a touch operation), and in response to the detected user operation, the electronic device 100 may enable an event corresponding to the control as a sharable event.

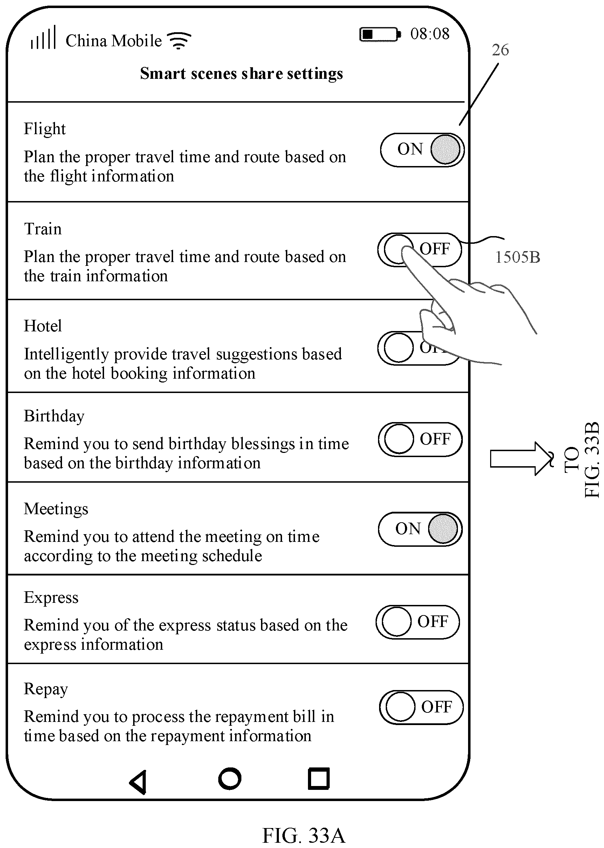

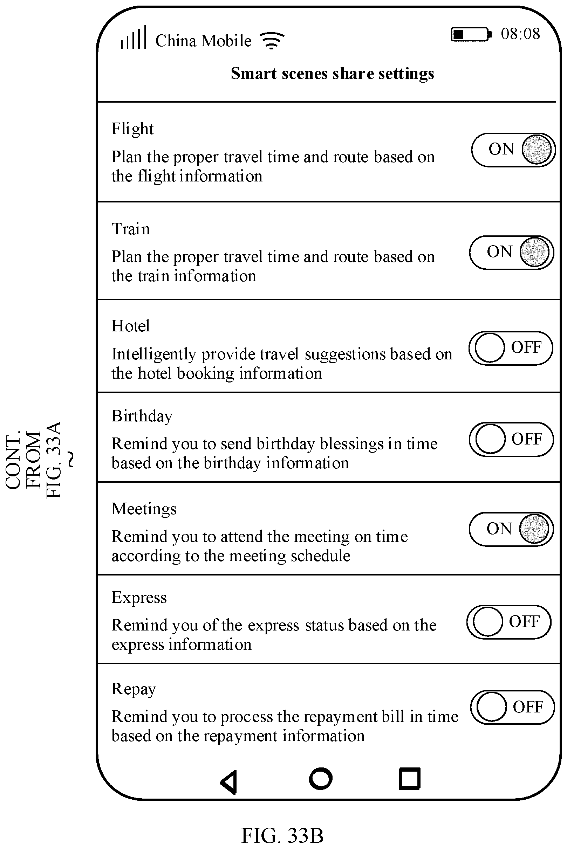

For example, as shown in FIG. 33A and FIG. 33B, if the user selects an event "train", the user taps the control 1505B. In response to the detected user operation, the electronic device 100 enables the event "train" as a shareable event of Anna.

Optionally, the ninth user operation may be that the user taps any one of the controls 1505A to 1505G.

From the perspective of the shared user, after step S7, the foregoing sharing setting method for automatic information sharing may further include step S9.

S9: Determine shared content of the first event of the first object.

In some embodiments, the electronic device 100 displays a default option and one or more descriptor options of the shared content of the first event of the first object. The electronic device 100 receives a tenth user operation of the user, and in response to the tenth user operation, the electronic device 100 determines automatically shared content for the first event of the first object. The tenth user operation may be that the user selects the default option, or selects one or more of the one or more descriptor options.

Any one of the "event" entries 1505A to 1505G on the setting interface 26 may receive a user operation (for example, a touch operation), and in response to the detected user operation, the electronic device 100 may display a setting interface of the event.

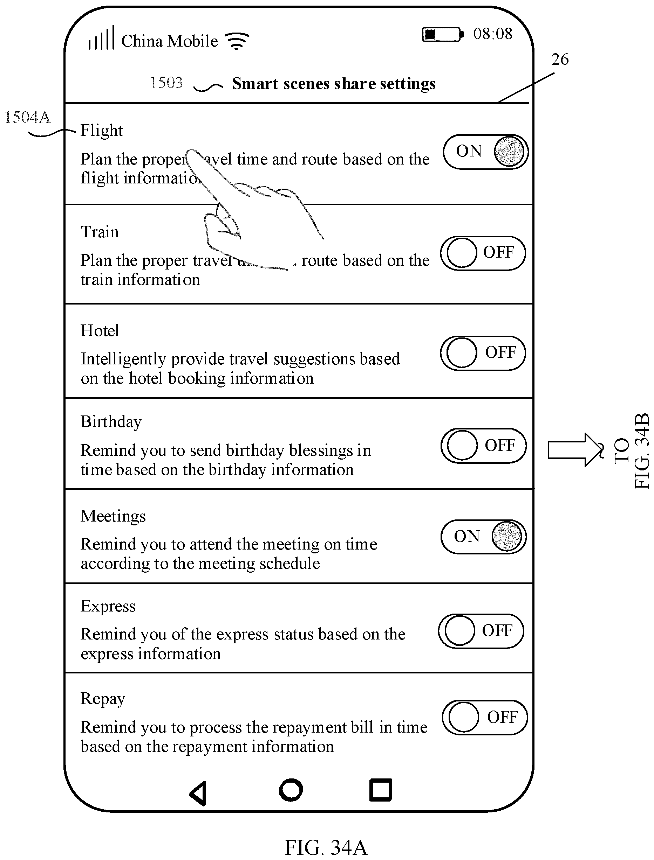

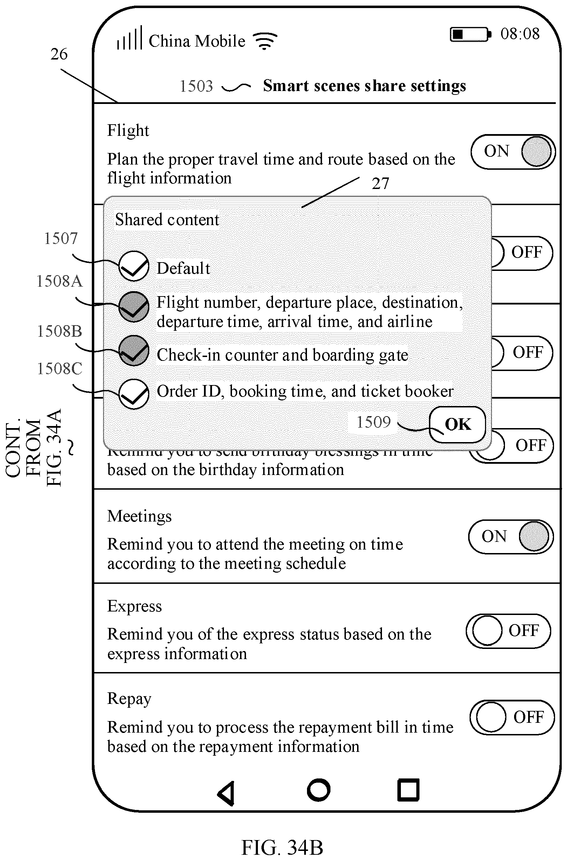

For example, as shown in FIG. 34A and FIG. 34B, the user taps the "event" entry 1504A. The electronic device detects the user operation, and in response to the user operation, the electronic device 100 displays a shared content selection interface 27.

The shared content selection interface 27 may include a control 1507, controls 1508A to 1508C, and a control 1509.

For the control 1507, refer to the display box 1214 in the user interface 21 shown in FIG. 28. Details are not described herein again.

For the controls 1508A to 1508C, refer to the controls 1215A to 1215C in the user interface 21 shown in FIG. 28. Details are not described herein again.

The control 1509 may receive a user operation (for example, a touch operation), and in response to the detected user operation, the electronic device 100 may close the user interface 27 and displays the user interface 26.

Optionally, the tenth user operation may be that the user taps the control 1507.

Optionally, the tenth user operation may be that the user taps one or more of the controls 1508A to 1508C.

From the perspective of the shared user, after step S7, the foregoing sharing setting method for automatic information sharing may further include step S10.

S10: Determine a second sharing time period of the first object.

In some embodiments, the electronic device 100 displays a sharing time period input box of the first object, and the electronic device 100 receives an eleventh user operation of the user. In response to the eleventh user operation, the electronic device 100 adds the second sharing time period for automatic sharing with the first object. The eleventh user operation may be entering the second sharing time period in the sharing time period input box.

It should be noted that, to avoid disturbing the first object, in this embodiment of this application, it is intended that information about a smart scene service is shared with the first object only within an idle time period of the first object. Therefore, in this embodiment of this application, a parameter, a sharing time period is set, and from the perspective of the shared user, sharing time periods may be added for all sharing events of the shared user.

It may be understood that, after the second sharing time period is added, the electronic device 100 may automatically share, with the first object within the second sharing time period, information about to-be-processed transactions of smart scene services of all added events of the first object.

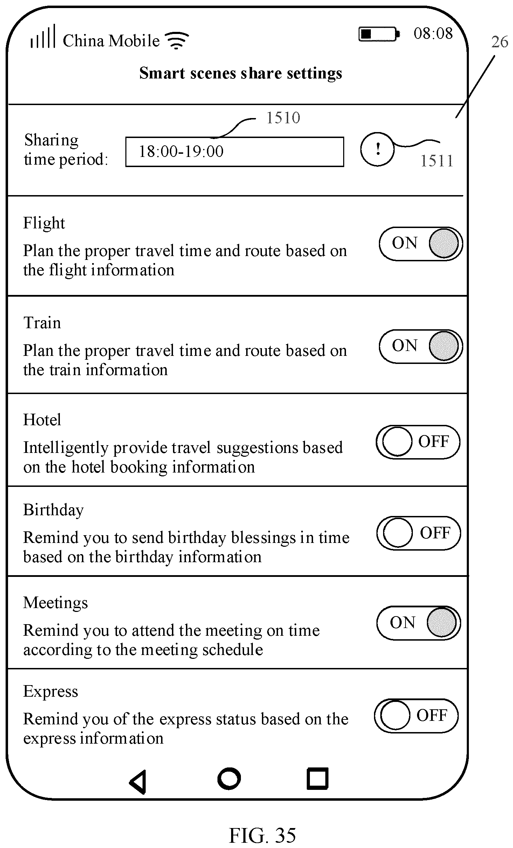

For example, as shown in FIG. 35, the setting interface 26 may further include a display box 1510 and a control 1511.

For the display box 1510, refer to the display box 1207C in the user interface 22 shown in FIG. 23A and FIG. 23B. Details are not described herein again.

For the control 1511, refer to the control 1208C in the user interface 22 shown in FIG. 23A and FIG. 23B. Details are not described herein again.

Optionally, the eleventh user operation may be adding the second sharing time period for automatic sharing for the first object by using the control 1511.

In some embodiments, in addition to determining a sharing time period for a shared user through user setting, the electronic device 100 may further determine the sharing time period for the shared user based on an actual time point at which the shared user views received information about a smart scene service. For example, if the shared user has a highest viewing probability from 16:00 to 20:00, it is determined that the sharing time period of the shared user is 16:00 to 20:00.

It may be understood that, in this embodiment of this application, after the shared user views the information about the smart scene service shared by the electronic device 100, an electronic device of the shared user may send a viewing time point to the electronic device 100.

From the perspective of the shared user, after step S7, the foregoing sharing setting method for automatic information sharing may further include step S11.

S11: Determine an authorization mechanism of the first object.

In some embodiments, the electronic device displays a turn-on control of the authorization mechanism of the first object, the electronic device 100 receives a twelfth user operation of the user, and in response to the twelfth user operation, the electronic device 100 adds the authorization mechanism for the first object. The twelfth user operation may be that the user taps the turn-on control.

It may be understood that, in this embodiment of this application, from the perspective of the shared user, the authorization mechanism may be enabled/disabled for all added events of the shared user.

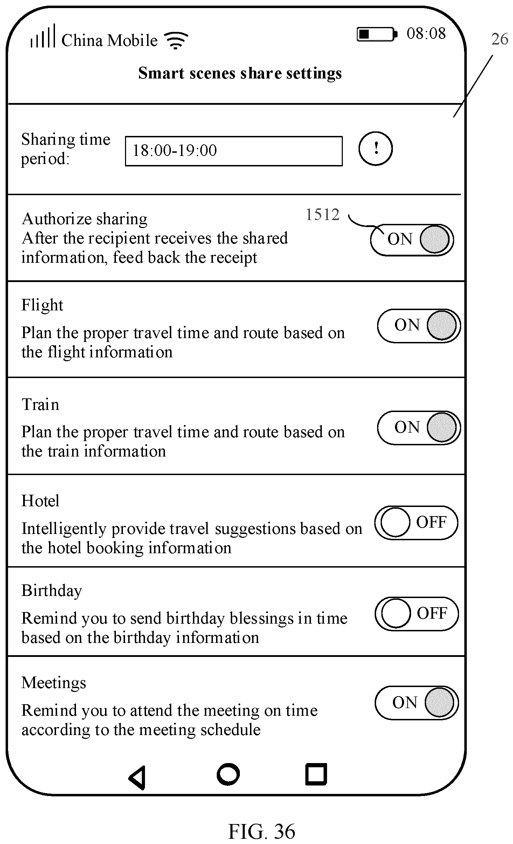

For example, as shown in FIG. 36, the setting interface 26 may further include a control 1512.

For the control 1512, refer to the control 1216 in the user interface 22 shown in FIG. 29. Details are not described herein again.

Optionally, the twelfth user operation may be tapping the control 1512.

In some embodiments, the authorization mechanism may also be enabled/disabled for a part of the added events of the shared user by setting the authorization mechanism.

From the perspective of the shared user, after step S7, the foregoing sharing setting method for automatic information sharing may further include step S12.

S12: Determine a feedback mechanism of the first object.

In some embodiments, the electronic device displays a turn-on control of the feedback mechanism of the first event, the electronic device 100 receives a thirteenth user operation of the user, and in response to the thirteenth user operation, the electronic device 100 adds the feedback mechanism for the first object. The thirteenth user operation may be that the user taps the turn-on control.

It may be understood that, in this embodiment of this application, from the perspective of the shared user, the feedback mechanism may be enabled/disabled for all added events of the shared user.

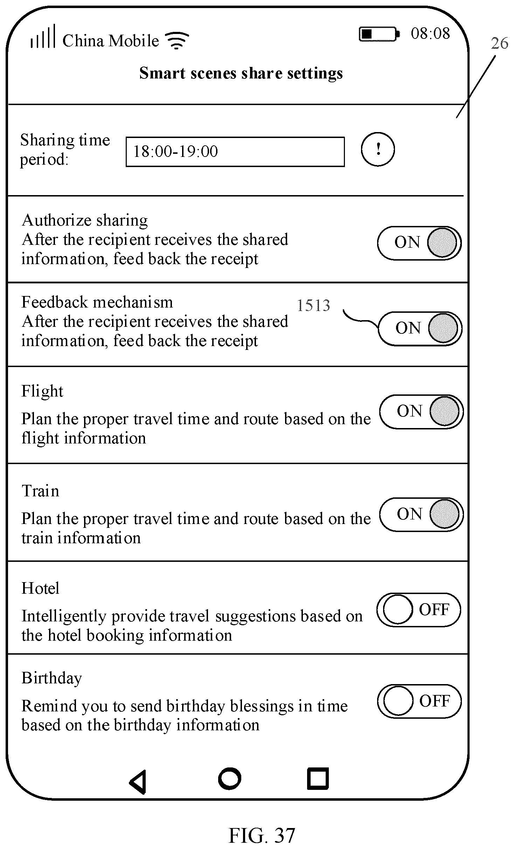

For example, as shown in FIG. 37, the setting interface 26 may further include a control 1513.

For the control 1513, refer to the control 1217 in the user interface 22 shown in FIG. 30. Details are not described herein again.

Optionally, the thirteenth user operation may be tapping the control 1513.

In some embodiments, the feedback mechanism may also be enabled/disabled for a part of the added events of the shared user by setting the feedback mechanism.

In some embodiments, the user may set automatic information sharing from the perspective of the sharing event, but the user cannot set automatic information sharing from the perspective of the shared user. Alternatively, the user cannot set automatic information sharing from the perspective of the sharing event, but the user may set automatic information sharing from the perspective of the shared user. Alternatively, the user may set automatic information sharing from the perspective of the sharing event, and the user may also set automatic information sharing from the perspective of the shared user. This is not limited in this embodiment of this application.

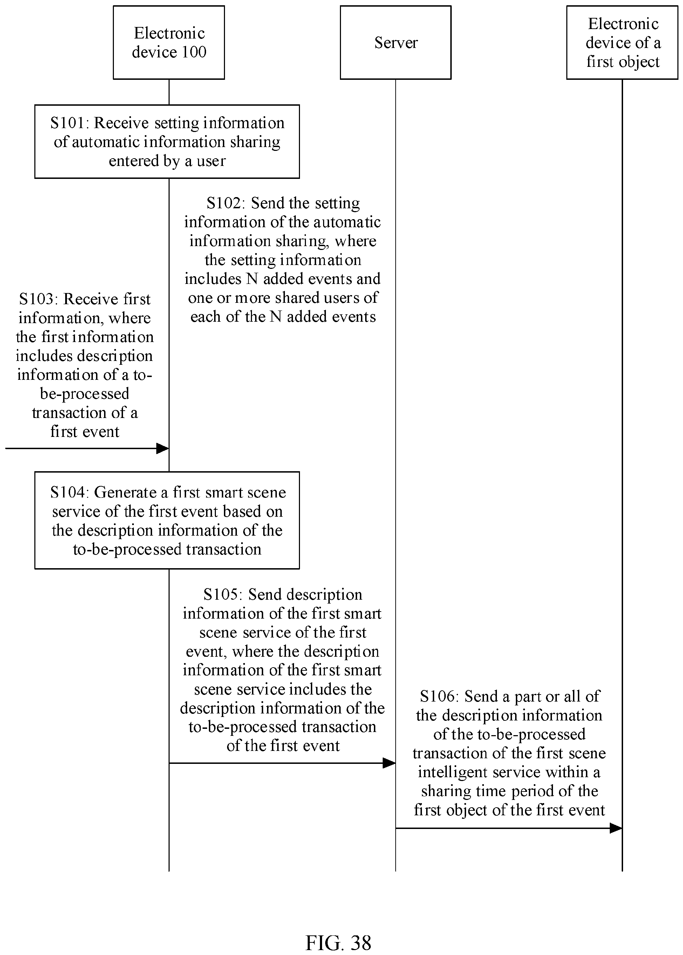

FIG. 38 is a schematic flowchart of an automatic information sharing method for a smart scene service according to an embodiment of this application. As shown in FIG. 38, the automatic information sharing method for a smart scene service provided in this embodiment of this application includes but is not limited to steps S101 to S105. The following further describes possible implementations of the method embodiment.

S101: The electronic device 100 receives setting information of automatic information sharing entered by a user.

S102: The electronic device 100 sends the setting information of the automatic information sharing to a server, and the server receives the setting information that is of the automatic information sharing and that is sent by the electronic device 100, where the setting information includes N added events and one or more shared users of each of the N added events.

Optionally, the setting information further includes a sharing time period of each of the one or more shared users of each event.

Optionally, the setting information further includes shared content of each of the N added events, and N is a positive integer.

Optionally, the setting information further includes an authorization mechanism setting of each of the N added events. The authorization mechanism setting indicates whether to enable authorization for automatic information sharing of the event.

Optionally, the setting information further includes a feedback mechanism setting of each of the N added events. The feedback mechanism setting indicates whether to enable feedback for automatic information sharing of the event.

In some embodiments, the setting information includes M shared users and one or more added events of each of the M shared users. M is a positive integer.

In some embodiments, the setting information further includes a sharing time period of each of the M shared users.

Optionally, the setting information further includes shared content of each of the one or more added events of each shared user.

Optionally, the setting information further includes an authorization mechanism setting of each of the M shared users. The authorization mechanism setting indicates whether to enable authorization for automatic information sharing of the object.

Optionally, the setting information further includes a feedback mechanism setting of each of the M shared users. The feedback mechanism setting indicates whether to enable feedback for automatic information sharing of the object.

S103: The electronic device 100 receives first information, where the first information includes description information of a to-be-processed transaction of a first event.

S104: The electronic device 100 generates a first smart scene service of the first event based on the description information of the to-be-processed transaction.

In this embodiment of this application, when determining that the first information includes the description information of the to-be-processed transaction of the first event, the electronic device 100 generates the first smart scene service of the first event based on the description information of the to-be-processed transaction. Description information of the first smart scene service includes the description information of the to-be-processed transaction. In embodiments of this application, the electronic device 100 may identify description information of a to-be-processed transaction of an added event with reference to an information source and/or a keyword.

It may be understood that only some information in the first information is related description information of the to-be-processed transaction of the first event.

In some embodiments, the electronic device 100 monitors the description information of the to-be-processed transaction of the added event in data of a first application by using a CNN technology.

Optionally, the first application may include Messages, Calendar, Email, instant messaging software (for example, QQ or WeChat), or the like.

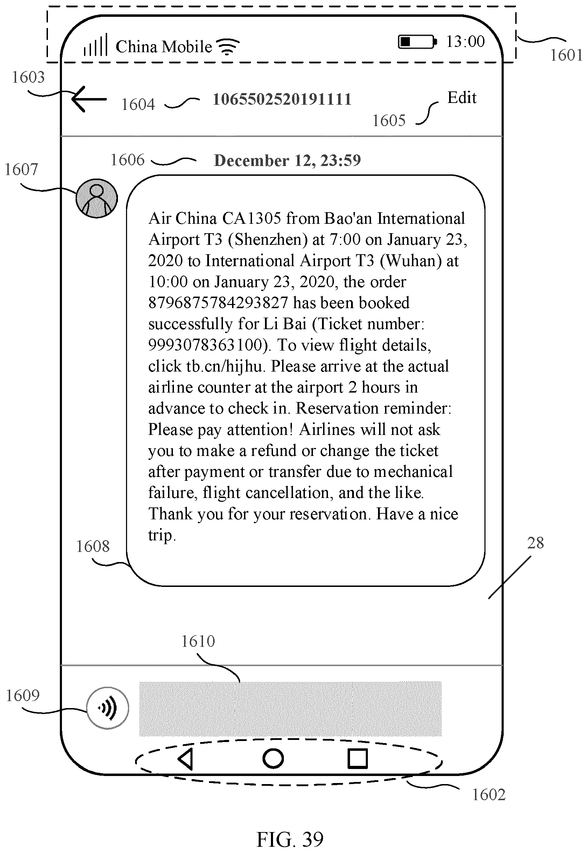

For example, the electronic device 100 receives a flight booking SMS message. As shown in FIG. 39, a user interface 28 displays the flight booking SMS message received by the electronic device 100.

The user interface 25 may include a status bar 1601, a navigation bar 1602, a control 1403, a sender number 1604, a control 1605, an SMS message receiving time point 1606, a profile picture 1607, an SMS message display card 1608, a voice control 1609, an input box 1610, and a control 1611. The control 1603 may receive a user operation (for example, a touch operation), and in response to the detected user operation, the electronic device 100 may display a previous user interface of the user interface 25.

The control 1605 may receive a user operation (for example, a touch operation), and in response to the detected user operation, the electronic device 100 may receive an editing operation performed by the user on the display card 1608, for example, deletion or forwarding.

The voice control 1609 may receive a user operation (for example, a touch operation), and in response to the detected user operation, the electronic device 100 may receive a voice.

The input box 1610 may receive a user operation (for example, a touch operation), and in response to the detected user operation, the electronic device 100 may display an input keyboard.

Content displayed in the SMS message display card 1608 may include "Order 8796875784293827 of Air China CA0229 from Bao'an International Airport T3 (Shenzhen) at 18:30 on December 25 to Beijing Capital International Airport T3 (Beijing) at 21:50 on December 25 is booked successfully. Check-in counter: D, Boarding gate: 33, Shiny (Ticket number: 9993078363100). To view flight details, click tb.cn/hijhu. Please arrive at the actual airline counter at the airport 2 hours in advance to check in. Booking reminder: Please pay attention! Airlines will not ask you to make a refund or change the ticket after payment or transfer due to mechanical failure, flight cancellation, and the like. Thank you for your booking. Have a nice trip."

In some embodiments, after receiving the SMS message shown in FIG. 39, the electronic device 100 identifies the SMS message by using a trained CNN model, and determines that the message includes air ticket booking information of a "flight" event. Description information of a to-be-processed service of the "flight" event may include "Order 8796875784293827 of Air China CA0229 from Bao'an International Airport T3 (Shenzhen) at 18:30 on December 25 to Beijing Capital International Airport T3 (Beijing) at 21:50 on December 25 is booked successfully. Check-in counter: D, Boarding gate: 33, Shiny (Ticket number: 9993078363100)." The first smart scene service is a smart scene service of the event "flight" generated based on the foregoing description information, and includes a reminder service and a planning service related to the flight. The reminder service related to the flight may include reminding a user of a departure time of the flight at one or more preset time points, reminding the user of an arrival time of the flight at one or more preset time points, and the like. The planning service related to the flight may include planning one or more routes to a departure airport, pushing weather of a departure place and a destination, and the like.

In some embodiments, the electronic device 100 may re-typeset the SMS message and delete some content based on an information template of a smart scene service, to generate the description information of the first smart scene service.

S105: The electronic device 100 sends the description information of the first smart scene service of the first event to the server, and the server receives the description information that is of the first smart scene service of the first event and that is sent by the electronic device 100, where the description information of the first smart scene service includes the description information of the to-be-processed transaction of the first event.

For example, the mobile phone identifies the "flight" booking SMS message, generates a smart scene service for the "flight" based on the "flight" booking SMS message, and uploads description information of the smart scene service to a Huawei cloud server.

S106: The server sends a part or all of the description information of the to-be-processed transaction of the first smart scene service to an electronic device of the first object within a sharing time period of the first object of the first event.

It may be understood that the electronic device has sent the setting information of automatic information sharing and the description information of the first smart scene service to the server, and the server has learned of all shared users of the first event and sharing time periods of all the shared users. Therefore, within the sharing time period of the first object of the first event, the server may directly send the description information of the to-be-processed transaction of the first smart scene service to the first object. Even if the electronic device 100 is not connected to a network or is powered off, automatic information sharing of Smart scenes is not affected.

In some embodiments, that the server sends the description information of the to-be-processed transaction of the first smart scene service to an electronic device of the first object within a sharing time period of the first object of the first event includes: The server sends authorization prompt information to the electronic device 100 within the sharing time period of the first object of the first event, and the electronic device 100 receives the authorization prompt information sent by the server, where the authorization prompt information is used to request the user to determine whether to share the first smart scene service with the first object. The electronic device 100 receives a determining operation entered by the user. The electronic device 100 sends an acknowledgment message to the server, and the server receives the acknowledgment message sent by the electronic device 100, where the acknowledgment message is used to notify the server that the user determines to share the first smart scene service with the first object. The server sends the part or all of the description information of the to-be-processed transaction of the first smart scene service to the electronic device of the first object and the electronic device 100.

In some embodiments, the authorization prompt information may be displayed on the display of the electronic device 100 in a form of a small window. The small window may include an OK control and a cancel control, and the OK control may receive the determining operation (for example, a touch operation) of the user.

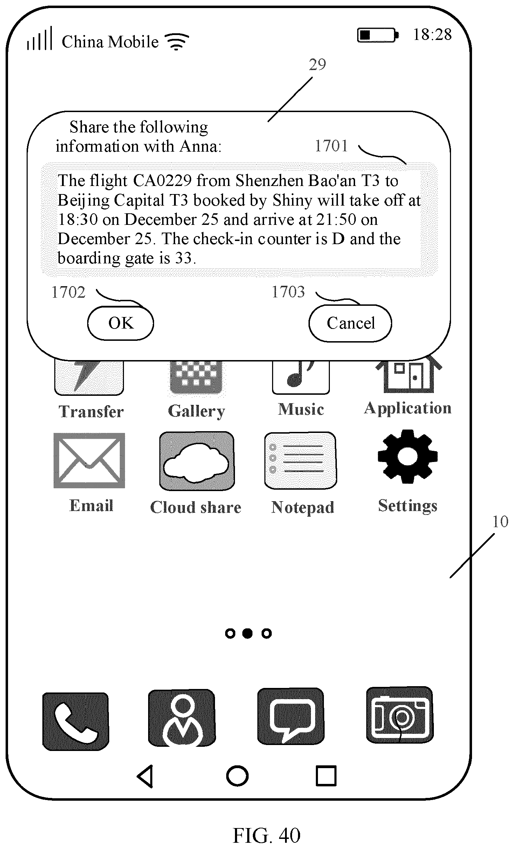

For example, the first object is Anna. As shown in FIG. 40, the electronic device 100 receives the authorization prompt information sent by the server, and the authorization prompt information is presented in a form of a user interface 29.

The user interface 29 may include text information 1701, an OK control 1702, and a cancel control 1703.

The OK control 1702 may receive a user operation (for example, a touch operation), and in response to the detected user operation, the electronic device 100 sends an acknowledgment message to the server.

The cancel control 1703 may receive a user operation (for example, a touch operation), and in response to the detected user operation, the electronic device 100 sends a cancellation message to the server. The cancellation message is used to indicate the server to stop sharing the first smart scene service with the first object.

In some embodiments, the OK control may alternatively be presented in a form of a character password input box or a graphic password input box. The electronic device 100 receives, by using the OK control, a password entered by the user. If the password entered by the user is the same as a preset authorization password, the electronic device 100 sends an acknowledgment message to the server.

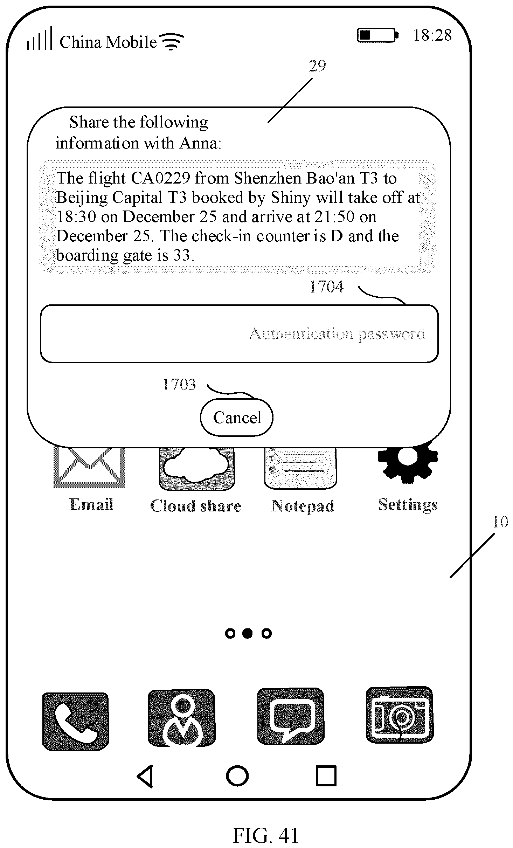

For example, as shown in FIG. 41, the OK control may alternatively be presented in a form of a character password input box 1704.

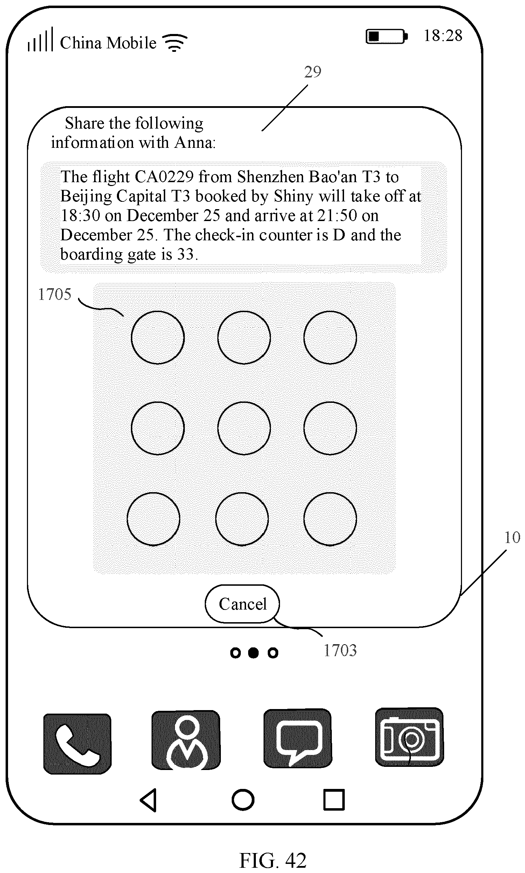

For example, as shown in FIG. 42, the OK control may alternatively be presented in a form of a graphic password input box.

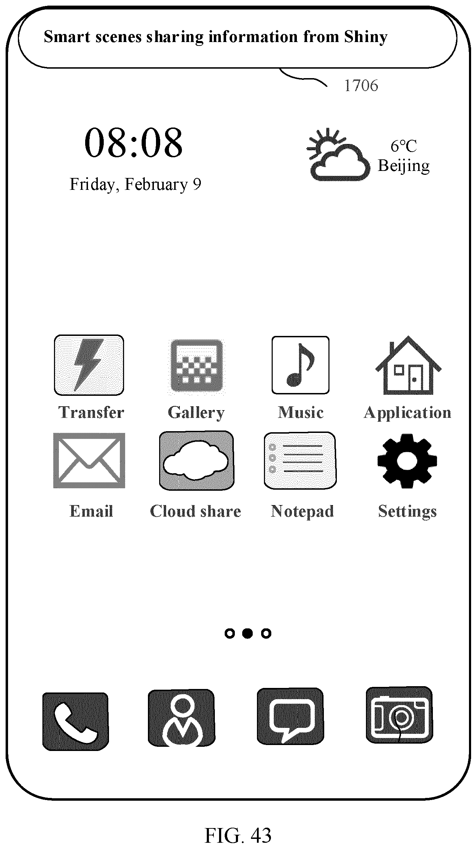

For example, as shown in FIG. 43, the electronic device of the first object receives a part of the description information of the to-be-processed transaction of the first smart scene service, and the electronic device of the first object displays the part of the description information of the to-be-processed transaction of the first smart scene service on the top of a display by using a display box 1706.

The display box 1706 may receive a user operation (for example, a touch operation), and in response to the detected user operation, the electronic device of the first object displays all the description information of the to-be-processed transaction of the first smart scene service.

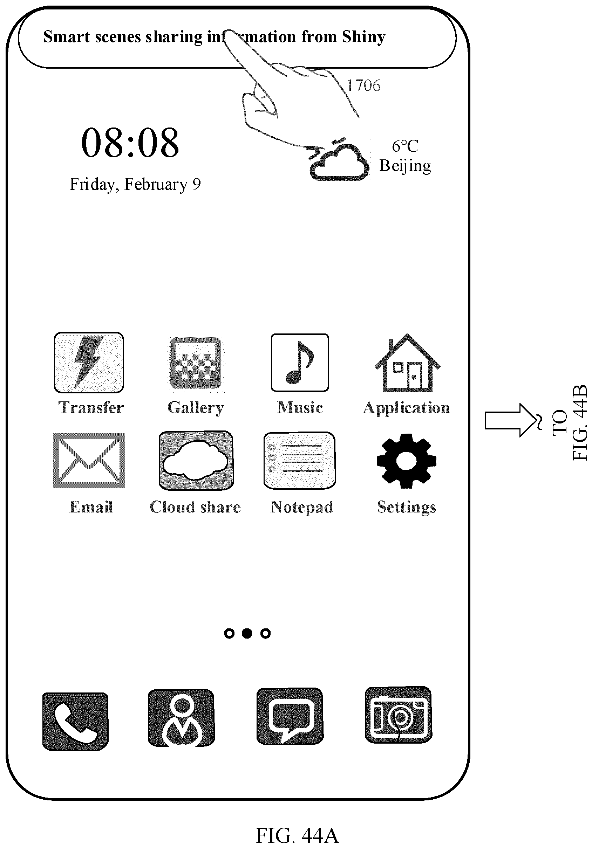

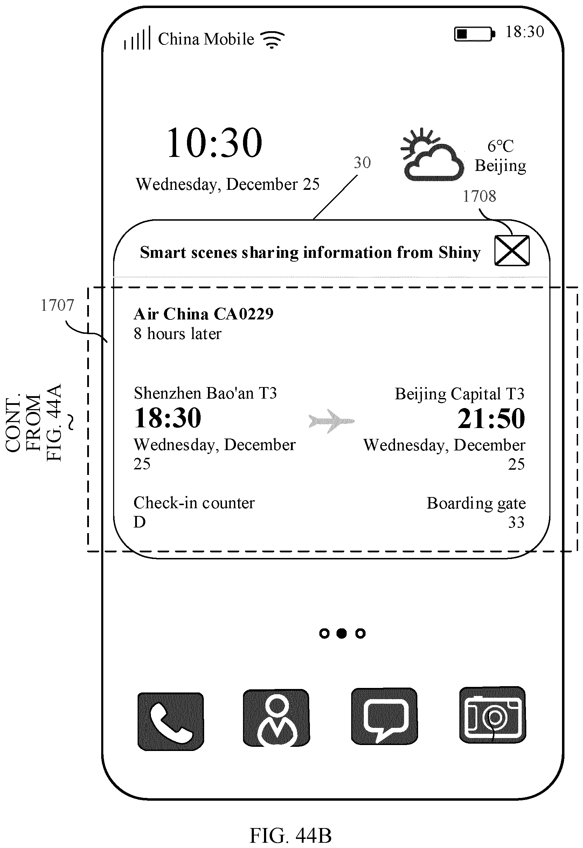

For example, as shown in FIG. 44A and FIG. 44B, the user taps the display box 1706. The electronic device of the first object detects the user operation, and in response to the user operation, the electronic device of the first object displays a user interface 30.

The user interface 30 may include description information 1707 of the to-be-processed transaction of the first smart scene service and a control 1708. The description information of the to-be-processed transaction of the first smart scene service may be typeset according to a specific smart scene template in the user interface 30.

The control 1708 may receive a user operation (for example, a touch operation), and in response to the detected user operation, the electronic device of the first object closes the user interface 30.

In some embodiments, after a shared user receives the description information of the to-be-processed transaction of the first smart scene service, the smart scene service may be included in smart scene services of the shared user. For example, the first object receives description information of a to-be-processed transaction of the smart scene service of the "flight" event, and the first object stores the description information and generates a second smart scene service of the "flight" event of the first object based on the description information. The electronic device of the first object provides a reminder service and/or a planning service for the first object at a preset time point based on the second smart scene service of the "flight" event. For example, a reminder message is displayed five hours before a flight departure time, to remind a user that the flight will take off five hours later. For example, a reminder message is displayed one hour before a flight arrival time, to remind the user that the flight will arrive one hour later. For example, a route plan to a destination airport of the flight is provided for the user.

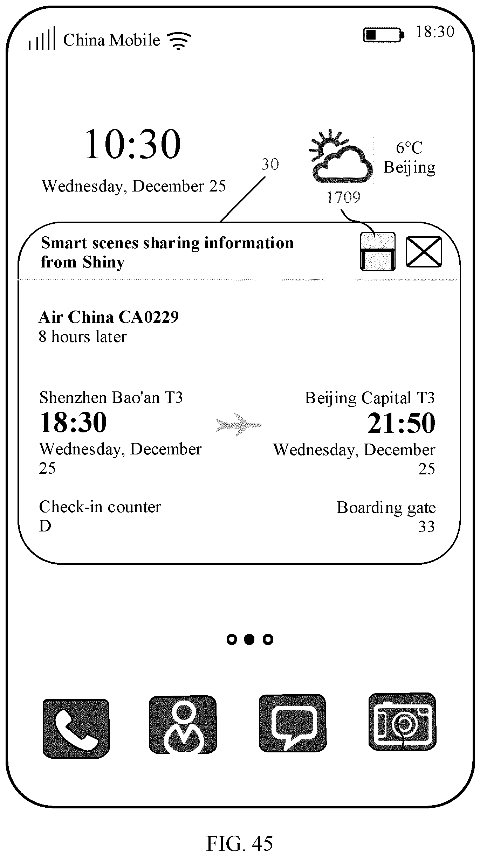

For example, as shown in FIG. 45, the user interface 30 further includes a control 1709.

The control 1709 may receive a user operation (for example, a touch operation), and in response to the detected user operation, the electronic device of the first object converts the first smart scene service into the second smart scene service of the first object.

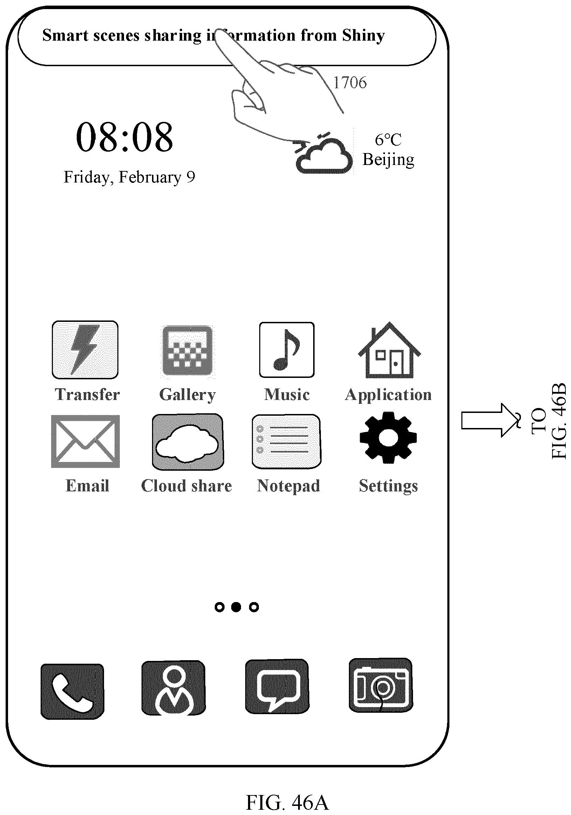

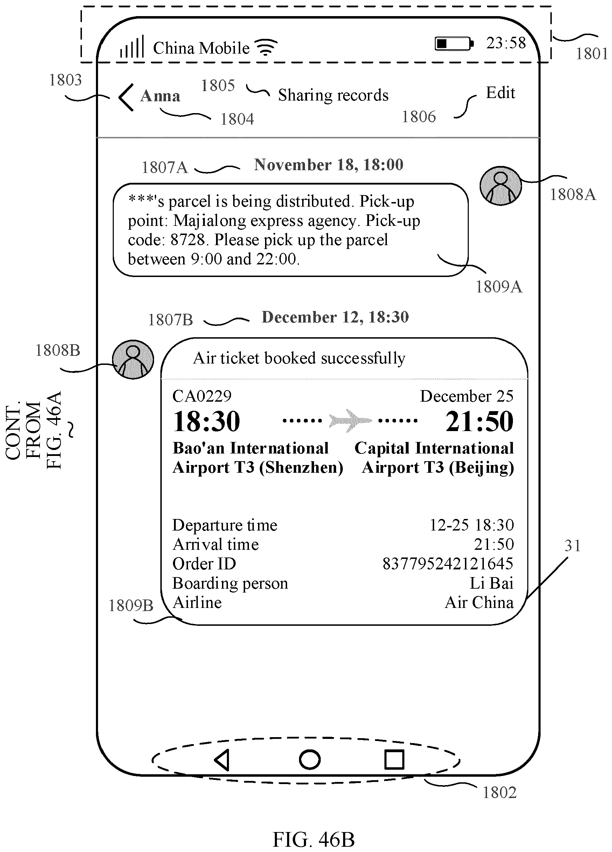

In some embodiments, as shown in FIG. 46A and FIG. 46B, the user taps the display box 1706. The electronic device of the first object detects the user operation, and in response to the user operation, the electronic device of the first object displays a user interface 31. The user interface 31 may be used to display a record of smart scene sharing between the user and Anna

The user interface 31 may include a status bar 1801, a navigation bar 1802, a control 1803, a user name 1804 of a shared user, a title bar 1805, a control 1806, shared information receiving time points 1807A and 1807B, a profile picture 1808A of the first object, a sender profile picture 1808B, and sharing records 1809A and 1809B. The control 1803 may receive a user operation (for example, a touch operation), and in response to the detected user operation, the electronic device of the first object may display a previous user interface of the user interface 31.

The control 1806 may receive a user operation (for example, a touch operation), and in response to the detected user operation, the electronic device of the first object may receive an editing operation performed by the user on the sharing records, for example, deletion or forwarding.

In some embodiments, after the first object views the information about the first smart scene service, the electronic device of the first object sends a feedback message to the electronic device 100.

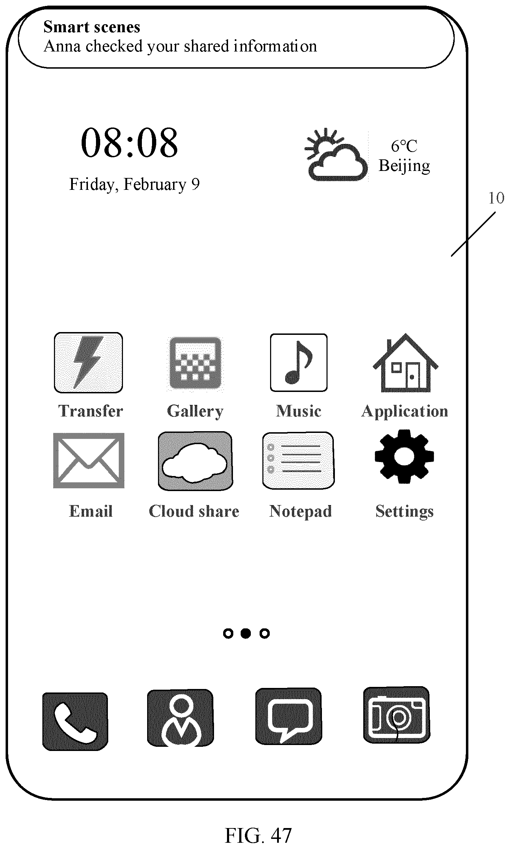

For example, as shown in FIG. 47, after receiving the feedback message sent by the electronic device of the first object, the electronic device 100 displays the feedback message on the top of the display.

### 2. Manual information sharing:

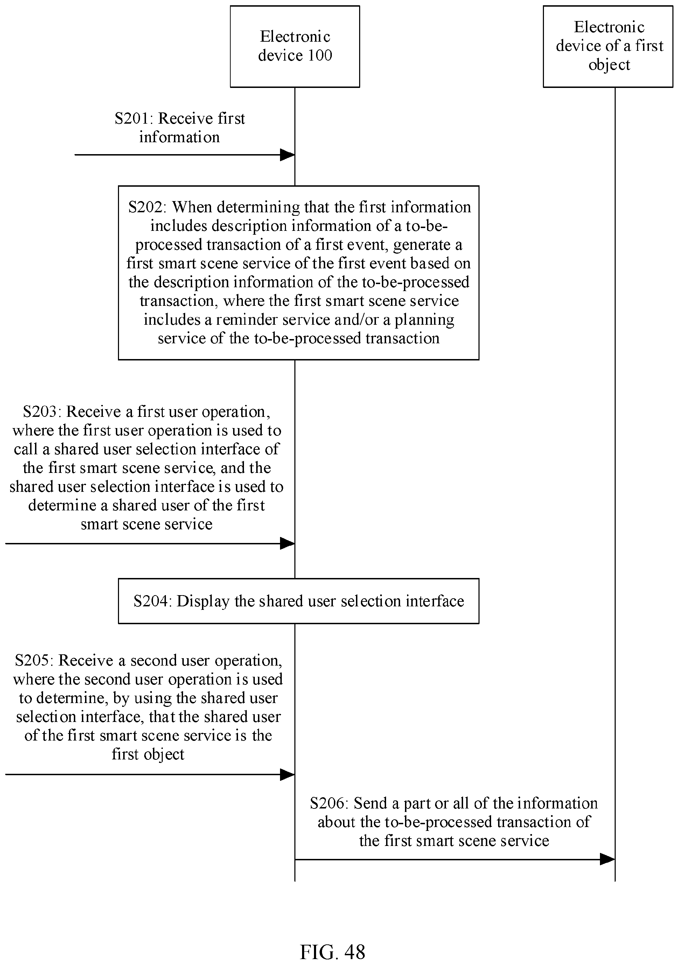

FIG. 48 is a schematic flowchart of a manual information sharing method for a smart scene service according to an embodiment of this application. As shown in FIG. 48, the manual information sharing method for a smart scene service provided in this embodiment of this application includes but is not limited to steps S201 to S203. The following further describes possible implementations of the method embodiment.

S201: The electronic device 100 receives first information.

S202: When determining that the first information includes description information of a to-be-processed transaction of a first event, the electronic device 100 generates a first smart scene service of the first event based on the description information of the to-be-processed transaction, where the first smart scene service includes a reminder service and/or a planning service of the to-be-processed transaction.

In some embodiments, the first event is a travel event, the to-be-processed transaction of the target event is a travel transaction, a reminder service of the travel transaction includes reminding a user of a part or all of information about the travel transaction at one or more preset time points, and a planning service of the travel transaction includes planning a travel method and/or a travel route for the travel transaction of the user.

For example, the first event is a flight event or a train event.

In this application, the first event may also be referred to as a target event. This is not specifically limited herein.

The following uses three scenarios as examples to describe in detail the smart scene service provided in this embodiment of this application.

Scenario 1: Identify the description information of the to-be-processed transaction of the first event in an SMS message received by the electronic device 100, and generate the first smart scene service.

For example, the flight booking SMS message shown in FIG. 39 is used as an example for description.

In some embodiments, the electronic device 100 identifies, by using the CNN technology, description information of a to-be-processed transaction of a "flight" event included in the flight booking SMS message shown in FIG. 39. The electronic device 100 generates the first smart scene service based on the description information of the to-be-processed transaction in the flight booking SMS message shown in FIG. 39, and reminds the user of a part or all of description information of the first smart scene service at a preset time point.

For example, as shown in FIG. 39, the user books, on December 12, a flight A0229 from 18:30 to 21:50 on December 25. After the user receives the flight booking SMS message on December 12, the electronic device 100 identifies and generates a smart scene service based on the flight booking SMS message, and then sends, at one or more preset time points, a reminder message that includes a part or all of description information of the smart scene service, to remind the user of related information of the flight.

In this embodiment of this application, the electronic device 100 may display the description information of the smart scene service at one or more locations of a notification bar, a drop-down bar, a leftmost screen, or the like. The electronic device 100 may also send the description information of the smart scene service by using a voice reminder. The electronic device 100 may further display the description information of the smart scene service in a form of an animation, a picture, or the like. This is not specifically limited in this embodiment of this application.

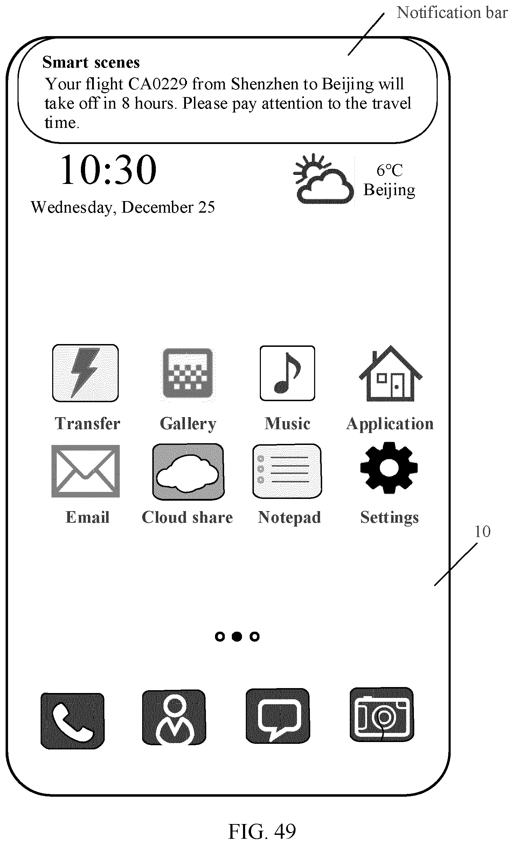

For example, the preset time point may be eight hours before the flight departure time, that is, 10:30. As shown in FIG. 49, at 10:30 on December 25, the electronic device 100 displays the description information of the smart scene service by using the notification bar. Content of the description information of the smart scene service may be a brief notification message shown in FIG. 49: "Your flight CA0229 from Shenzhen to Beijing will take off in 8 hours. Please pay attention to the travel time".

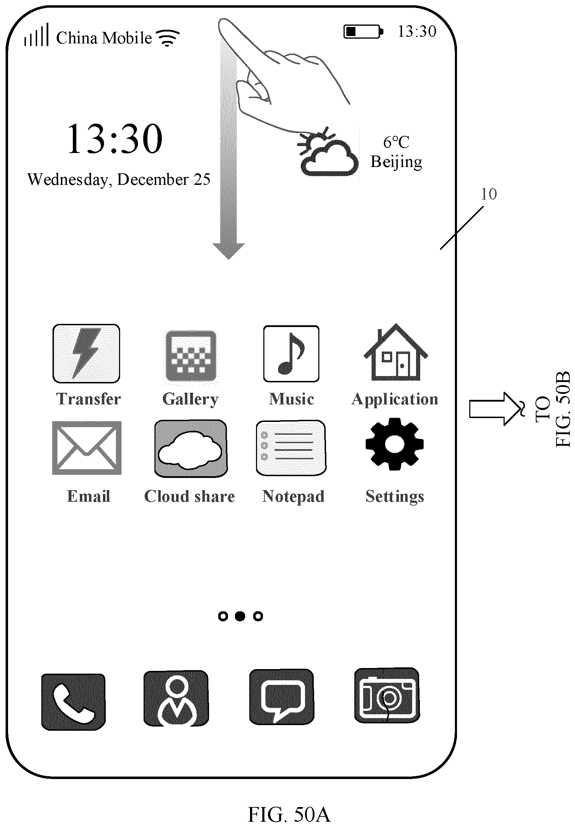

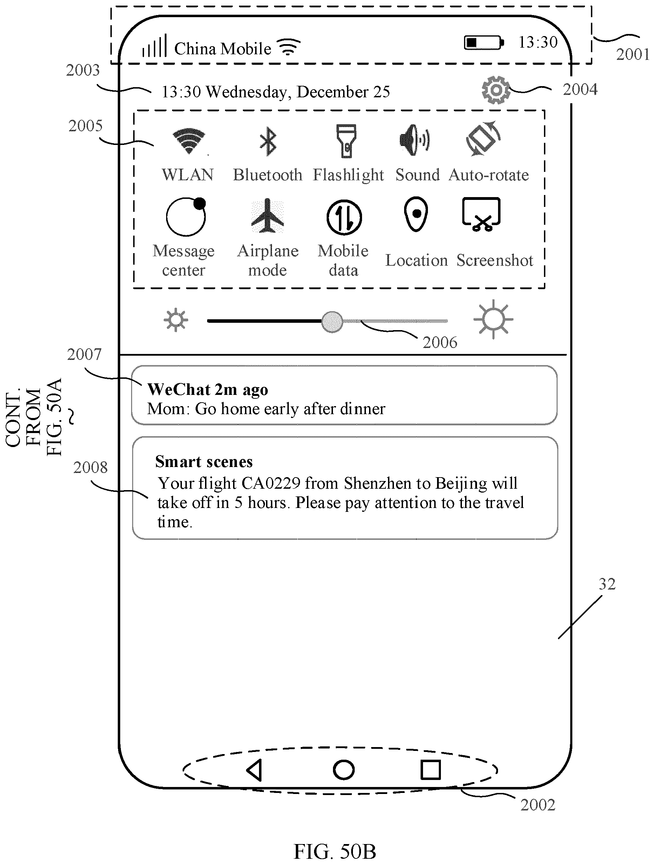

For example, the preset time point may be five hours before the flight departure time, that is, 13:30. As shown in FIG. 50A and FIG. 50B, a finger of the user swipes downward on the display and then releases. The electronic device 100 detects the user operation, and in response to the user operation, the electronic device 100 displays a drop-down bar user interface 31. As shown in FIG. 50A and FIG. 50B, the electronic device 100 displays the description information of the smart scene service by using the user interface 31.

The user interface 31 may include a status bar 2001, a navigation bar 2002, time 2003, a control 2004, a shortcut application icon 2005, a control 2006, a WeChat message 2007, and a smart scene reminder message 2008. The control 2004 may receive a user operation (for example, a touch operation), and in response to the detected user operation, the electronic device 100 may display a drop-down bar setting interface.

The control 2006 may receive a user operation (for example, a touch operation), and in response to the detected user operation, the electronic device 100 may adjust brightness of the display.

Content of the smart scene reminder message 2008 may be the brief notification message shown in FIG. 49.

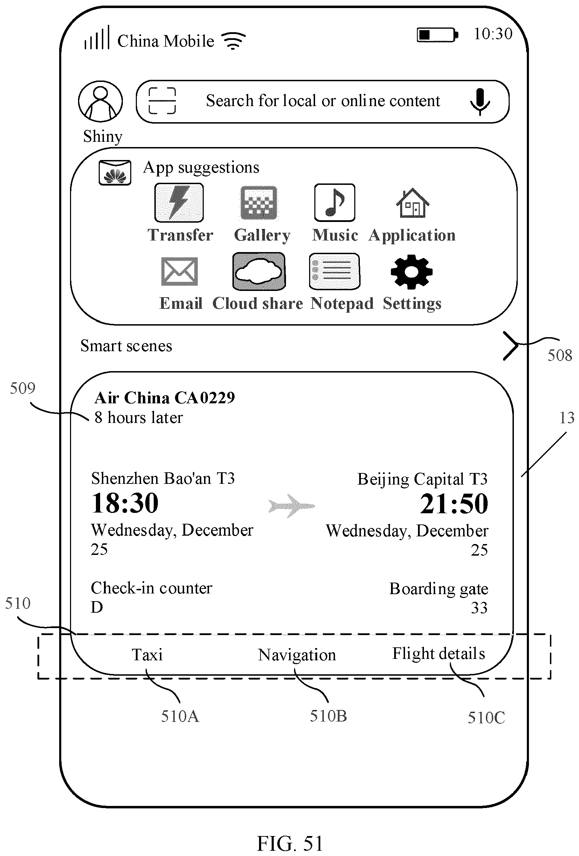

For example, the preset time point may be eight hours before the flight departure time, that is, 10:30. As shown in FIG. 51, at 10:30 on December 25, the electronic device 100 displays a part of the description information of the smart scene service by using a user interface 13 of the leftmost screen.

The user interface 13 may further include a control 508, an information card 509 of the smart scene service, and a shortcut service control 510.

The control 508 may receive a user operation (for example, a touch operation), and in response to the detected user operation, the electronic device 100 may display all information cards of the smart scene service. The information cards of the smart scene service are used to display the part or all of the description information of the smart scene service.

The shortcut service control 510 superimposed on the information card 509 of the smart scene service may include a taxi control 510A, a navigation control 510B, and a flight details control 510C. It may be understood that the electronic device provides a smart scene planning service for the user by using the taxi control 510A, the navigation control 510B, and the flight details control 510C.

In some embodiments, if events such as weather and a scenic spot are enabled in Smart scenes of the user, when displaying the reminder message of the smart scene service of the "flight" event, the electronic device 100 may further push planning services such as a weather service and a scenic spot service that are related to a flight destination to the user.

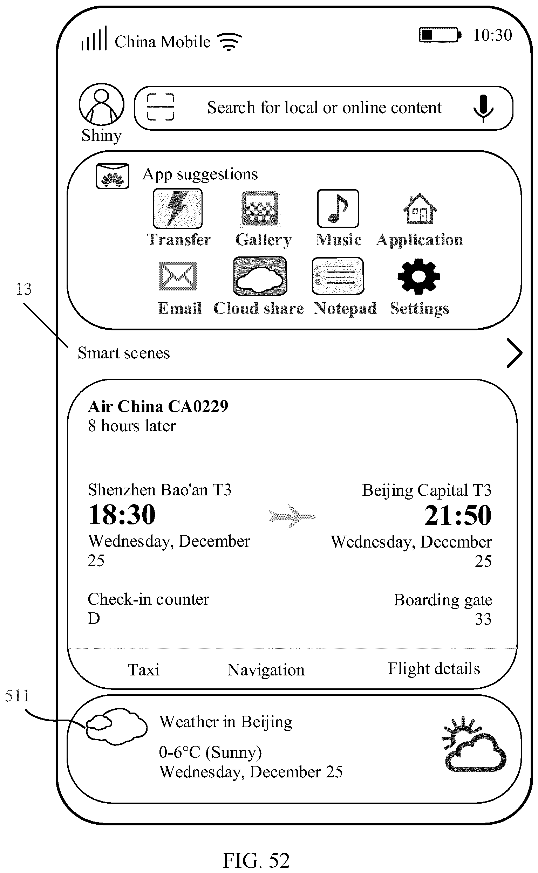

For example, as shown in FIG. 52, the user interface 13 may further include an information card 511 of the smart scene service. The information card 51 of the smart scene service displays the weather of the destination Beijing.

Scenario 2: Identify the description information of the to-be-processed transaction of the first event in local information of the electronic device 100, and generate the first smart scene service. For example, the local information is a schedule in Calendar.

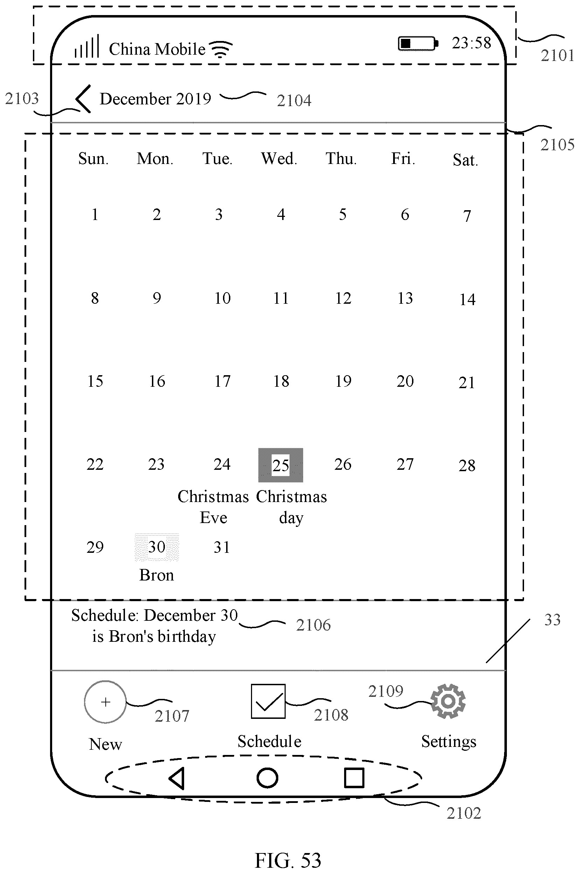

For example, FIG. 53 shows a user interface 32 of Calendar according to an embodiment of this application.

The user interface 32 may include a status bar 2101, a navigation bar 2102, a control 2103, a year and month 2104, a calendar 2105, a schedule 2106, a control 2107, a control 2108, and a control 2109. The control 2103 may receive a user operation (for example, a touch operation), and in response to the detected user operation, the electronic device 100 may display a previous user interface of the user interface 32.

The schedule 2106 may display a schedule on December 30.

The control 2107 may receive a user operation (for example, a touch operation), and in response to the detected user operation, the electronic device 100 may create a new schedule for December 30.

The control 2108 may receive a user operation (for example, a touch operation), and in response to the detected user operation, the electronic device 100 may display all schedules of the user.

The control 2109 may receive a user operation (for example, a touch operation), and in response to the detected user operation, the electronic device 100 may display a setting interface of Calendar.

As shown in FIG. 53, a current date is December 25, and the following schedule is on December 30: Bron's birthday on December 30.

In some embodiments, after the user creates the birthday schedule on December 30, the electronic device 100 identifies description information of a to-be-processed transaction of a "birthday" event in the schedule shown in FIG. 53, generates the first smart scene service, and reminds the user of a part or all of the description information of the first smart scene service at a preset time point.

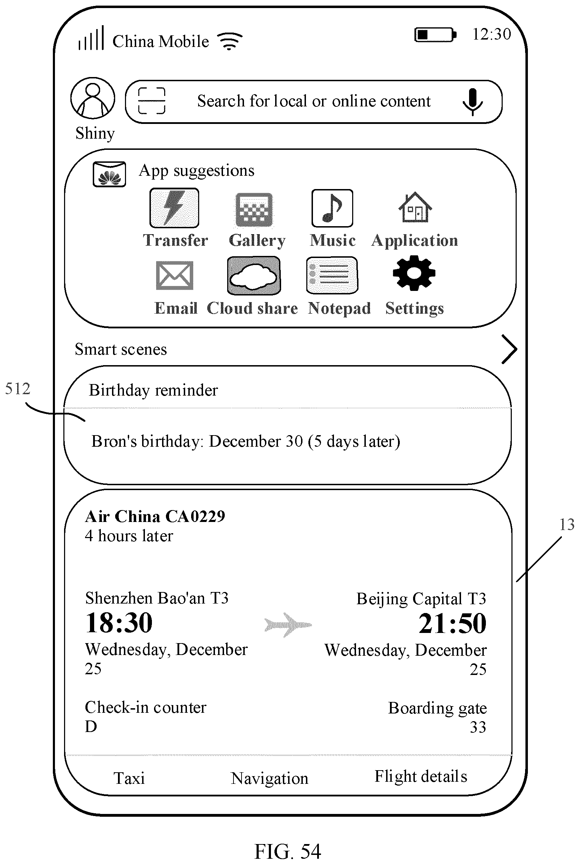

For example, the preset time point includes 12:30 five days before the schedule. As shown in FIG. 54, at 12:30 on December 25, the electronic device 100 displays the description information of the smart scene service by using the information card 512 of the smart scene service on the user interface 13, to remind the user that there are five days left before Bron's birthday.

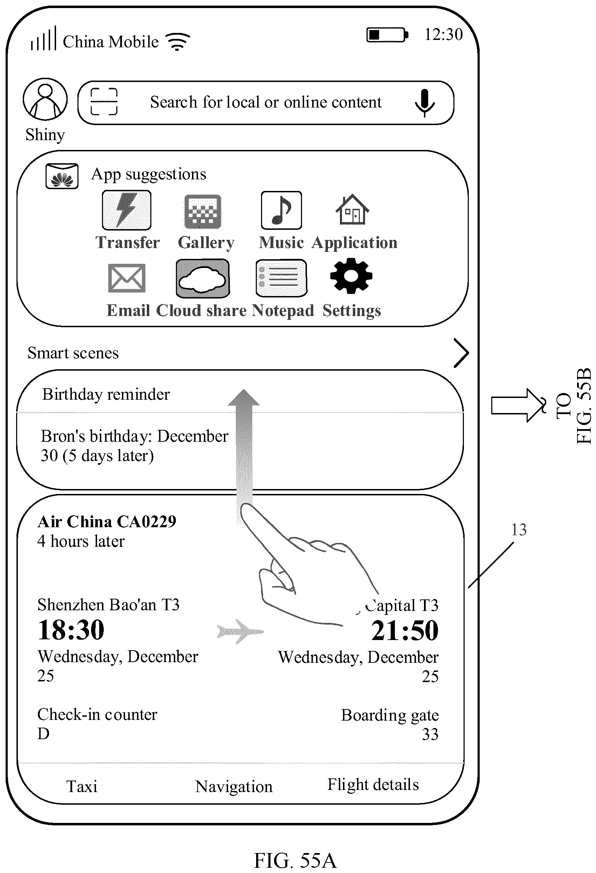

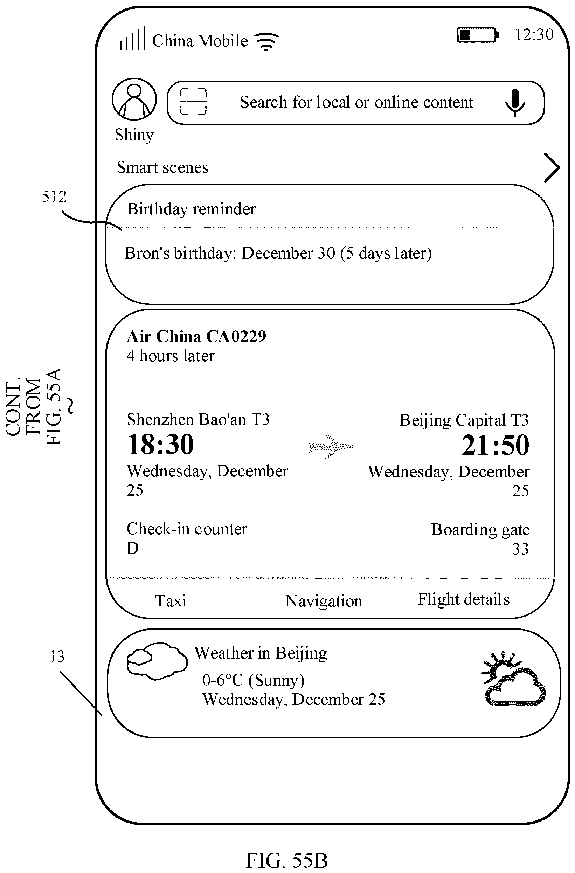

As shown in FIG. 55A and FIG. 55B, in this embodiment of this application, a finger of the user may swipe up and down on the user interface 13, so that the user views more information cards of the smart scene service.

Scenario 3: Obtain the description information of the to-be-processed transaction of the first event online, and generate the corresponding first smart scene service. For example, description information of a to-be-processed transaction of an "express" event is obtained online by using a mobile number of the user.

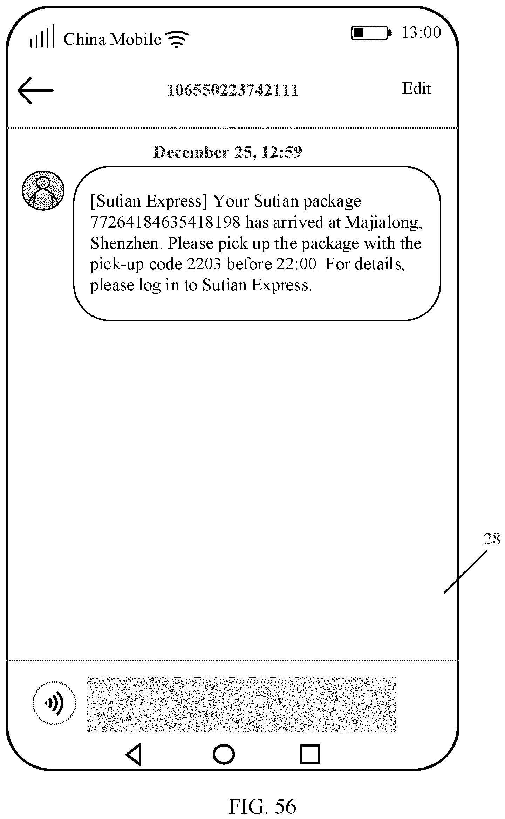

Similar to the information reminder of the smart scene service for the "flight" event shown in FIG. 49 to FIG. 51, the description information of the to-be-processed transaction of the "express" event may also be obtained by identifying an SMS message. For example, FIG. 56 shows an express SMS message. The electronic device 100 may identify the SMS message, generate a smart scene service of the "express" event, and remind the user of a part or all of description information of the smart scene service at a preset time point.

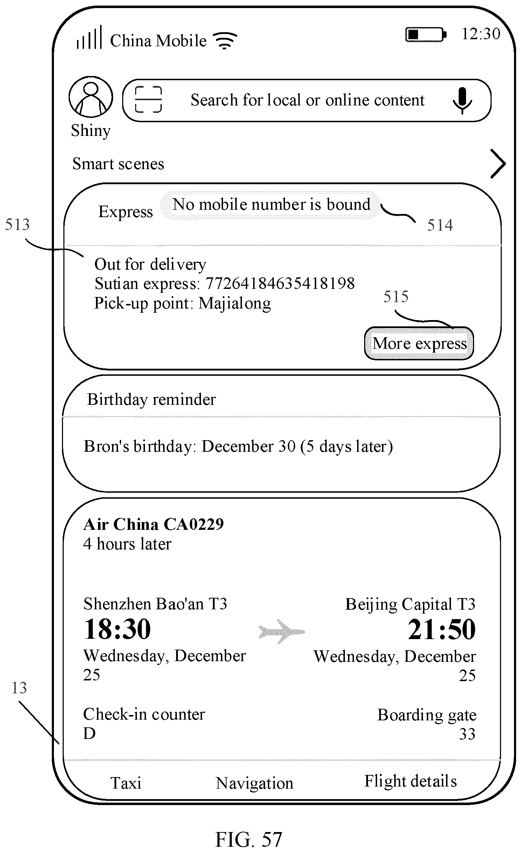

For example, as shown in FIG. 57, the electronic device 100 displays the part or all of the description information of the smart scene service by using an information card 513 of the smart scene service on the user interface 13.

A display control 514 and a control 515 are overlaid on the information card 513 of the smart scene service. The control 514 may receive a user operation (for example, a touch operation), and in response to the detected user operation, the electronic device 100 may display a mobile number binding interface.

The control 515 may receive a user operation (for example, a touch operation), and in response to the detected user operation, the electronic device 100 may display more information about the smart scene service of the "express" event.

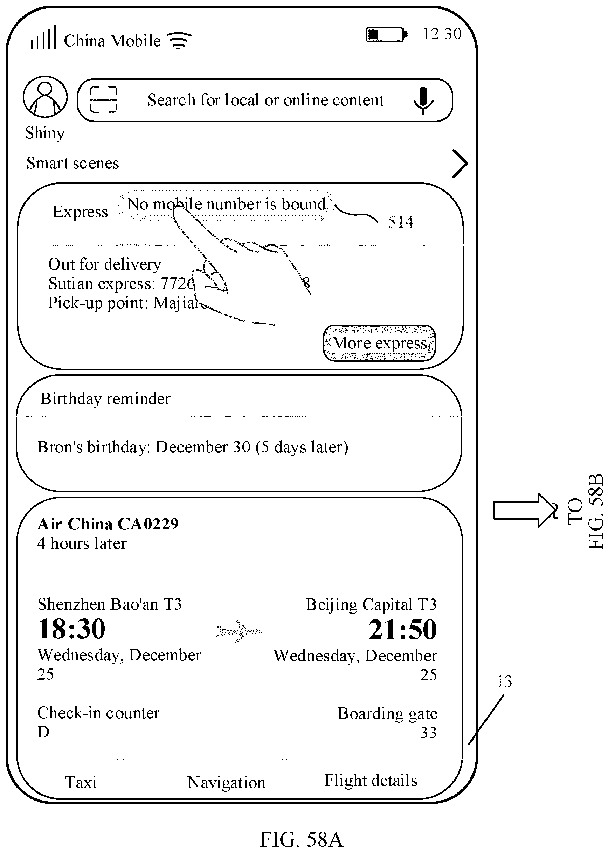

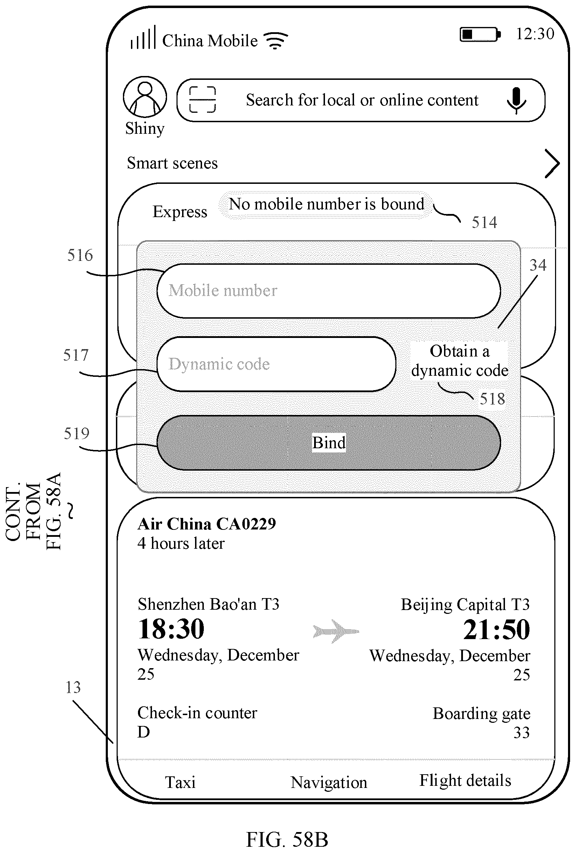

For example, as shown in FIG. 58A and FIG. 58B, the user taps the control 514. The electronic device 100 detects the user operation, and in response to the user operation, the electronic device 100 displays a user interface 34.

The user interface 34 may include an input box 516, an input box 517, a control 518, and a control 519.

The input box 516 may receive a mobile number entered by the user, and the input box 517 is used to receive a dynamic code entered by the user.

The control 518 may receive a user operation (for example, a touch operation), and in response to the detected user operation, the electronic device 100 may send a dynamic code obtaining request to an express server. The dynamic code obtaining request is used to obtain a dynamic code of the mobile number in the input box 516. The express server may be configured to store express information.

In some embodiments, after receiving the dynamic code obtaining request sent by the electronic device 100, the express server sends the dynamic code to the electronic device 100 corresponding to the mobile number in the input box 516.

The control 519 is used to receive a user operation (for example, a touch operation). If the dynamic code entered by the user is correct, in response to the detected user operation, a currently logged-in Huawei ID on the electronic device 100 may obtain authorization of "obtaining express information of a mobile number in the input box 516 online".

In some embodiments, the electronic device 100 sends, to the express server, the dynamic code entered by the user and the mobile number in the input box 516. The express server receives the dynamic code entered by the user and the mobile number in the input box 516 that are sent by the electronic device 100. If the dynamic code entered by the user is correct, the express server authorizes the currently logged-in Huawei account to "obtain express information of the mobile number in the input box 516 online".

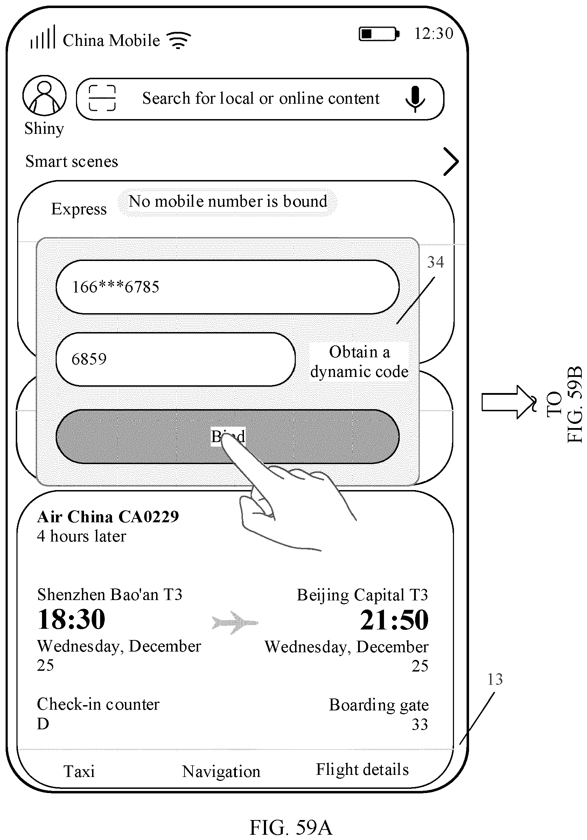

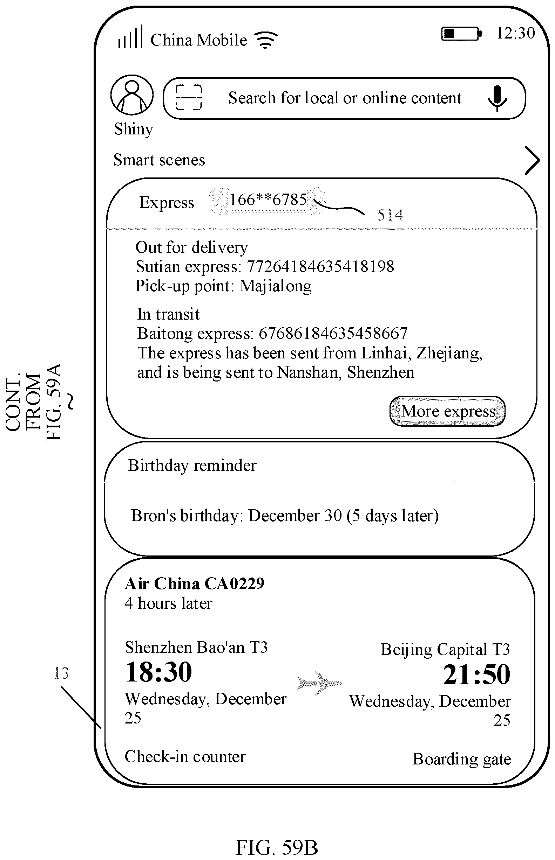

For example, as shown in FIG. 59A and FIG. 59B, after the mobile number is bound, the bound mobile number may be displayed on the control 514. By using the smart scene card, not only an express that is out for delivery can be viewed, but also a delivery status of an express in transit can be viewed.

It may be understood that, after being authorized to "obtain express information of the mobile number in the input box 516 online", the currently logged-in Huawei account on the electronic device 100 is successfully bound to the mobile number in the input box 516, and real-time dynamic express information of the mobile number may be obtained by using the electronic device 100.

In some embodiments, the electronic device 100 periodically sends an obtaining request message to the express server, and the obtaining request message is used to obtain a current status of an express corresponding to the mobile number. The obtaining request message may carry the currently logged-in Huawei ID and the mobile number in the input box 516. The electronic device 100 may identify obtained real-time dynamic express information, and generate the first smart scene service.

S203: The electronic device 100 receives a first user operation, where the first user operation is used to call a shared user selection interface of the first smart scene service, and the shared user selection interface is used to determine a shared user of the first smart scene service.

S204: The electronic device 100 displays the shared user selection interface.

S205: The electronic device 100 receives a second user operation, where the second user operation is used to determine, by using the shared user selection interface, that a shared user of the first smart scene service is a first object.

In this embodiment of this application, the first object and a current user of the electronic device 100 are different users.

In some embodiments, the electronic device 100 receives the first user operation, and in response to the detected first user operation, the electronic device 100 displays the shared user selection interface of the first smart scene service. The shared user selection interface is used to select a shared user of the first smart scene service.

In some embodiments, the electronic device 100 receives the second user operation, and in response to the detected second user operation, the electronic device 100 determines that a shared user of the first smart scene service is the first object.

In some embodiments, the second user operation is selecting the first object from one or more contacts of the user in the shared user selection interface.

The following uses the "flight" event as an example to describe in detail how to select a shared user of the smart scene service for manual information sharing.

In this embodiment of this application, the user may select the shared information by using a notification bar, a drop-down bar, a leftmost screen, a sharing record page, or the like.

In some embodiments, the first user operation may be that the user touches and holds the description information of the first smart scene service displayed on the electronic device 100.

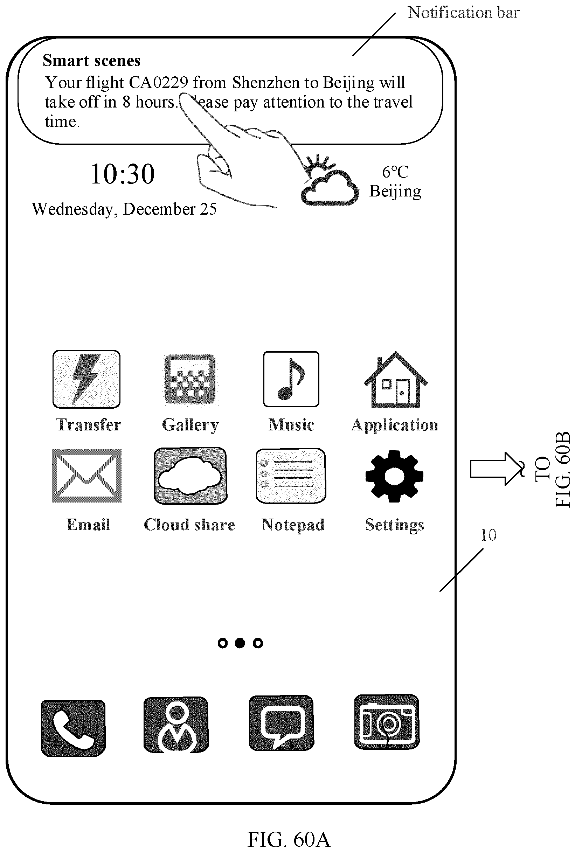

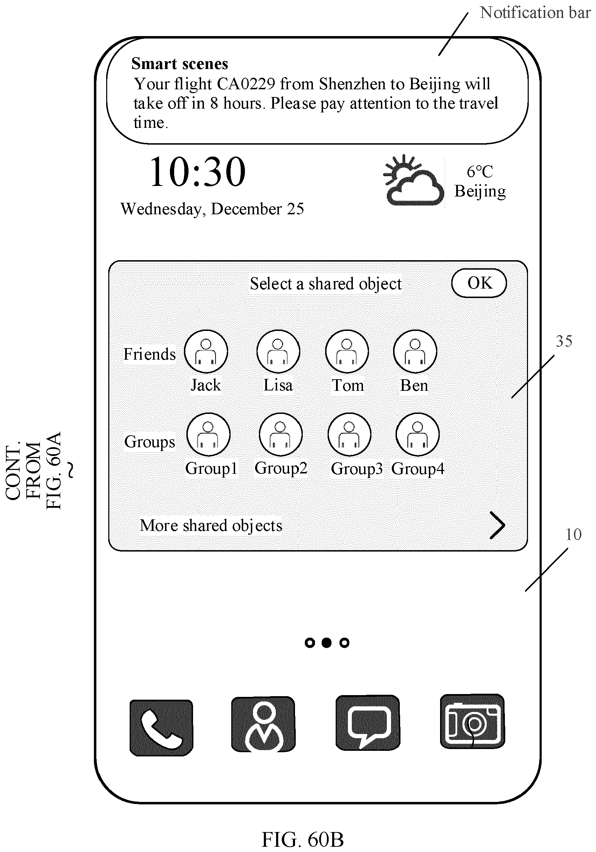

For example, as shown in FIG. 60A and FIG. 60B, the user touches and holds the notification bar. The electronic device detects the user operation, and in response to the user operation, the electronic device 100 displays a shared user selection interface 35.

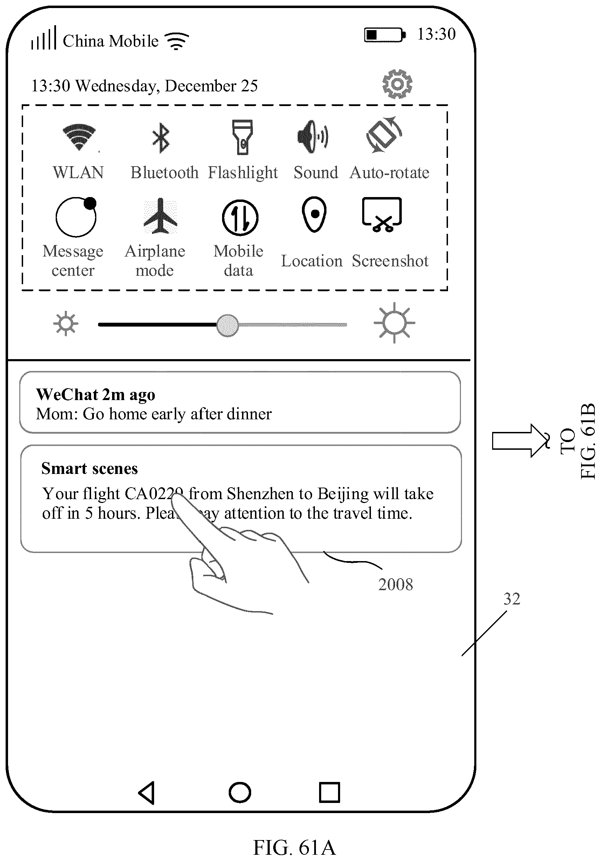

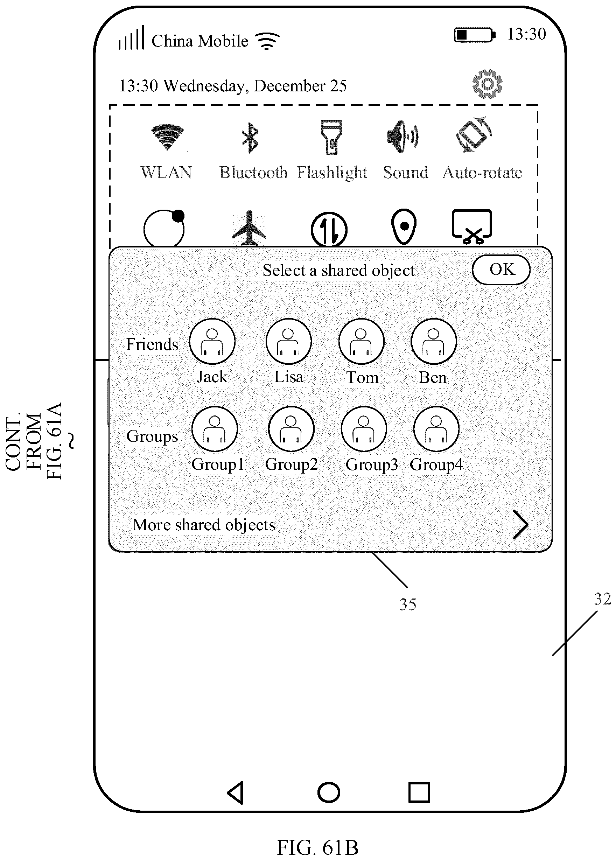

For example, as shown in FIG. 61A and FIG. 61B, the user touches and holds description information 2008 of the smart scene service in the drop-down bar. The electronic device detects the user operation, and in response to the user operation, the electronic device 100 displays a shared user selection interface 35.

In some embodiments, the first user operation may be that the user taps a share control 520C.

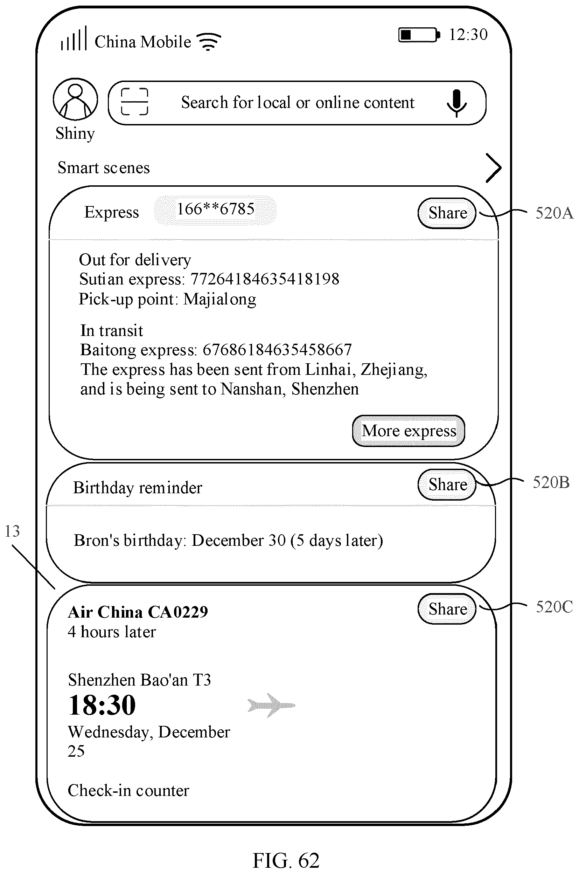

For example, as shown in FIG. 62, a share control is overlaid on an information card of each smart scene service. The user interface 13 may further include share controls 520A to 520C.

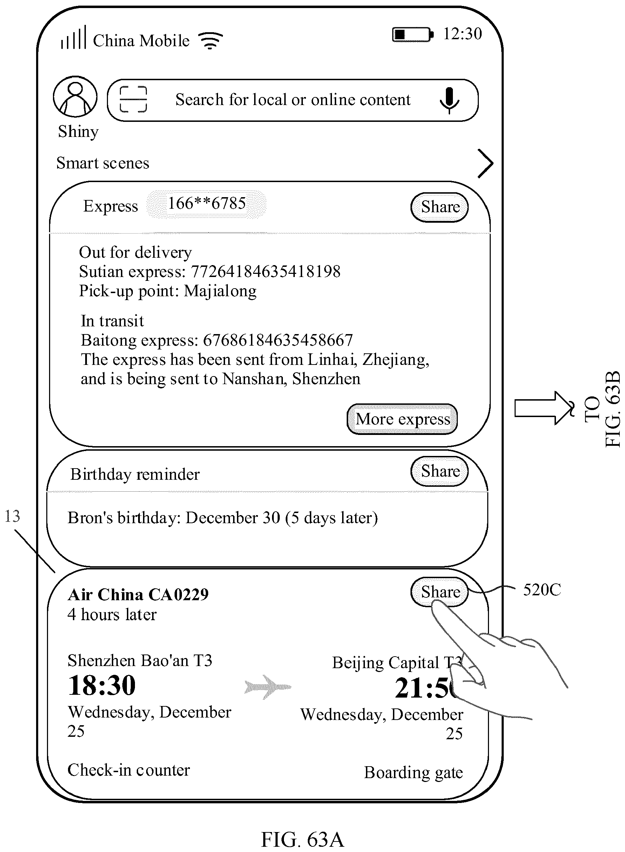

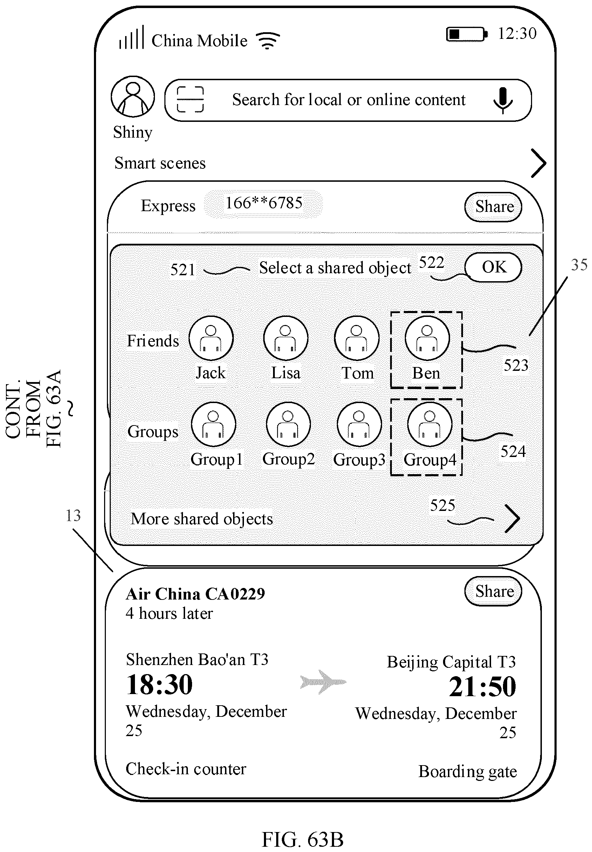

For example, as shown in FIG. 63A and FIG. 63B, the user taps the control 520C. The electronic device detects the user operation, and in response to the user operation, the electronic device 100 displays a shared user selection interface 35.

The shared user selection interface 35 may include a title bar 521, profile pictures 522 of one or more recommended friends, profile pictures 523 of one or more recommended groups, a control 524, and a control 525. The profile pictures 522 of one or more recommended friends may be recently shared friends determined based on a sharing record of the user. Any one of the profile pictures 522 of one or more recommended friends may receive a user operation (for example, a touch operation). In response to the detected user operation, the electronic device 100 may display a shadow to represent that the user selects the friend profile picture.

In some embodiments, the second user operation may be that the user taps a profile picture 522 of a recommended friend.

The profile pictures 523 of one or more recommended groups may be recently shared groups determined based on a sharing record of the user. Any one of the profile pictures 522 of one or more recommended groups may receive a user operation (for example, a touch operation). In response to the detected user operation, the electronic device 100 may display a shadow to represent that the user selects the group profile picture.

In some embodiments, the second user operation may be that the user taps a profile picture 523 of a recommended group.

In this embodiment of this application, the first object includes one or more objects. In other words, the user may simultaneously share one piece of information about a smart scene service with a plurality of friends and/or a plurality of groups. It may be understood that, on the user interface 35, the user may select one or more friend profile pictures and one or more group profile pictures.

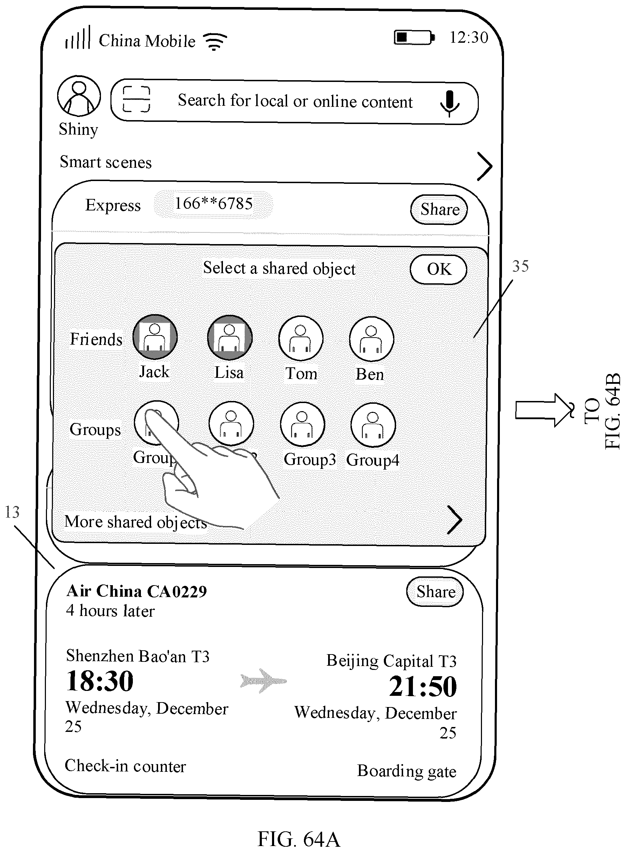

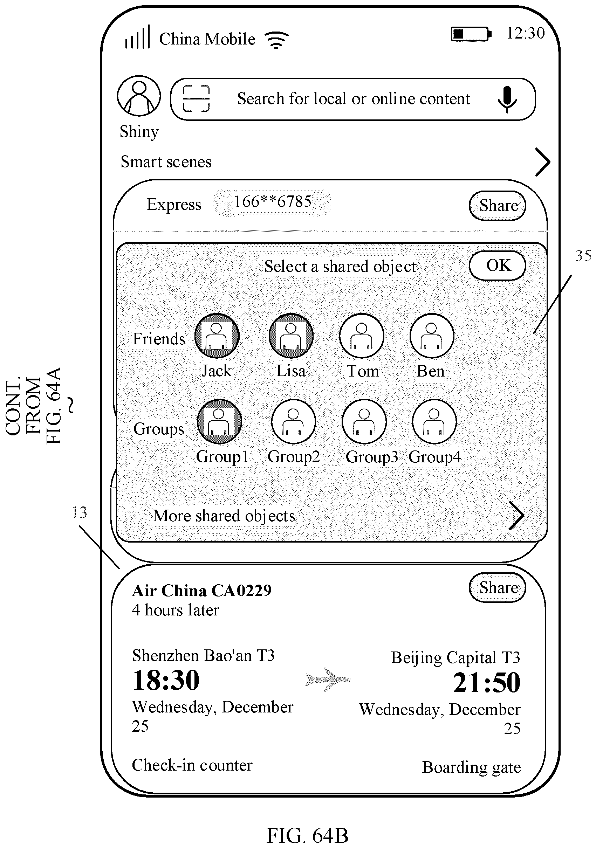

For example, as shown in FIG. 64A and FIG. 64B, after selecting two friend profile pictures, the user taps a group profile picture "Group1". The electronic device 100 detects the user operation, and in response to the user operation, the electronic device 100 selects the group profile picture "Group1", and displays a shadow to represent that the user selects "Group1".

The control 524 may receive a user operation (for example, a touch operation), and in response to the detected user operation, the electronic device 100 sends, to a contact (a friend and/or a group) selected by the user, description information of a smart scene service corresponding to the smart scene card 509.

The control 525 may receive a user operation (for example, a touch operation), and in response to the detected user operation, the electronic device 100 may display more contacts for the user to select.

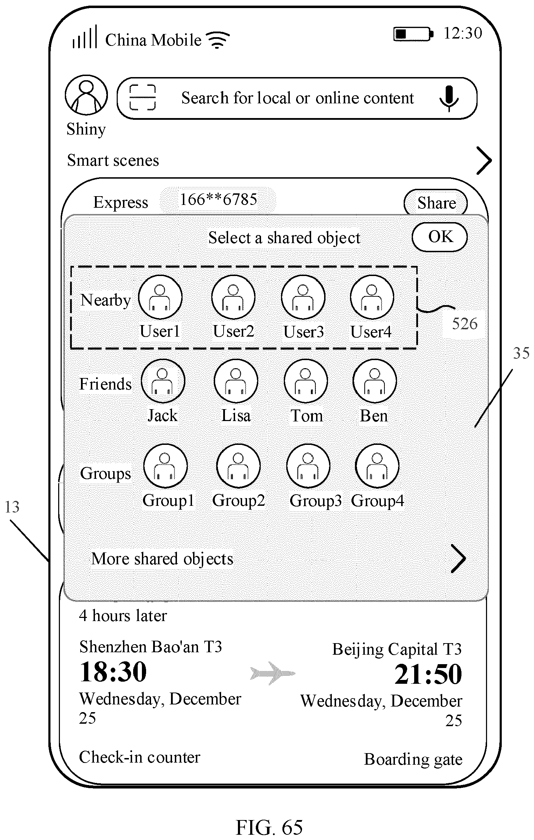

In some embodiments, as shown in FIG. 65, the shared user selection interface 35 may include profile pictures 526 of one or more nearby users.

In some embodiments, the one or more shared users include one or more nearby users.

The profile pictures 526 of the one or more nearby users may be Huawei users that are closest to the electronic device 100 and that are determined based on a distance. It may be understood that, in this embodiment of this application, the user may not only manually share a smart scene service with a contact of the user, but also share the smart scene service with a nearby Huawei user.

In some embodiments, shared content and a sharing term may also be set for a nearby Huawei user. For example, if the user is traveling with a group, the user may share flight information with a group member for three days.

S206: The electronic device 100 sends a part or all of the information about the to-be-processed transaction of the first smart scene service to an electronic device of the first object.

In some embodiments, the electronic device 100 receives a fourteenth user operation, and in response to the fourteenth user operation, the electronic device sends the part or all of the description information of the first smart scene service to the electronic device of the first object.

In some embodiments, the electronic device 100 sends the part or all of the description information of the to-be-processed transaction of the first smart scene service to the electronic device of the first object through a server.

In some embodiments, the electronic device 100 sends the part or all of the information about the to-be-processed transaction to the electronic device of the first object within a first term. The first period is a preset validity period for sharing a smart scene service with the first object. For example, the first term is three days.

In some embodiments, before the electronic device 100 sends the part or all of the description information of the to-be-processed transaction of the first smart scene service to the electronic device of the first object, the electronic device 100 selects a first descriptor to be shared with the first object from descriptors associated with the first event, where the description information of the to-be-processed transaction includes values of the descriptors associated with the first event. Then, the electronic device 100 sends, to the electronic device of the first object, information matching the first descriptor in the description information of the to-be-processed transaction of the first smart scene service.

Optionally, the fourteenth user operation may be that the user taps the control 524.

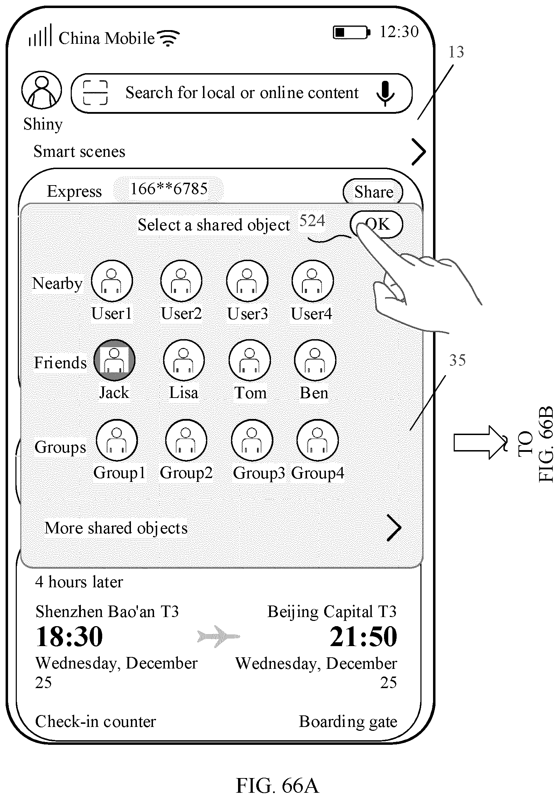

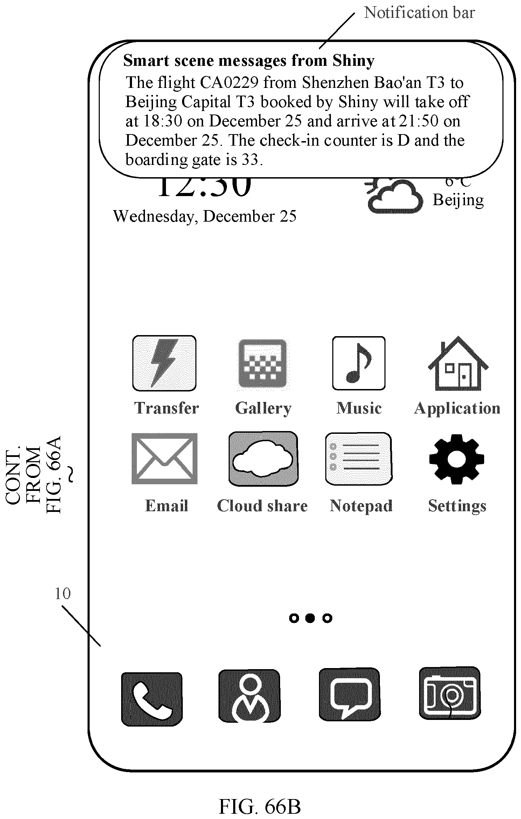

For example, as shown in FIG. 66A and FIG. 66B, after selecting Jack, the user taps the control 524. The electronic device 100 detects the user operation, and in response to the user operation, the electronic device 100 may send the description information of the to-be-processed transaction of the smart scene service to Jack. For example, content of the description information of the to-be-processed transaction of the smart scene service may be "The flight CA0229 from Shenzhen Bao'an T3 to Beijing Capital T3 booked by Shiny will depart at 18:30 on December 25 and arrive at 21:50 on December 25. The check-in counter is D and the boarding gate is 33." An electronic device of Jack receives the description information sent by the electronic device 100, and may display the description information by using a notification bar on the top of a display.

In some embodiments, if the user manually shares a smart scene service with a nearby non-friend Huawei user, the recipient may choose to accept or reject the smart scene service.

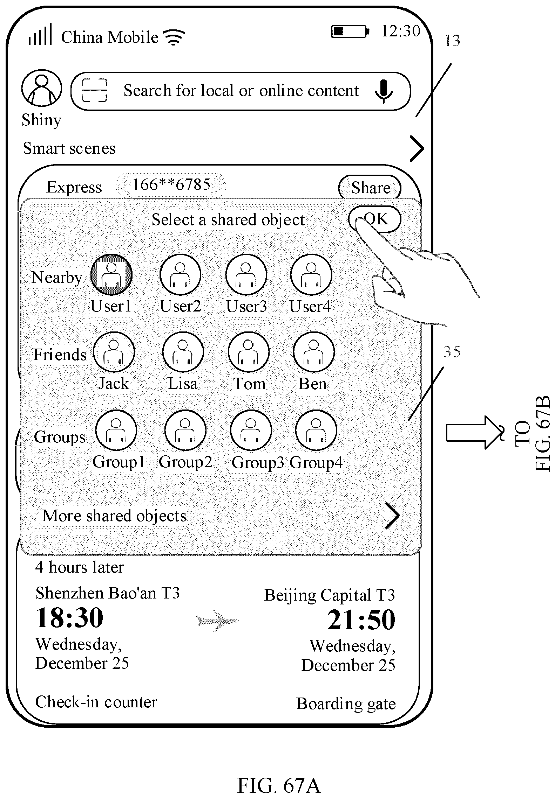

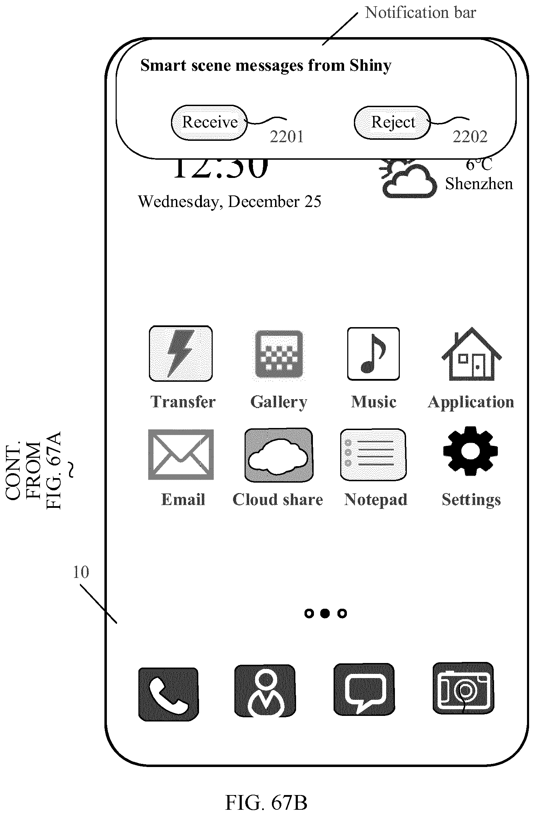

For example, as shown in FIG. 67A and FIG. 67B, after selecting a nearby user User1, the user taps the control 524. The electronic device 100 detects the user operation, and in response to the user operation, the electronic device 100 may send the description information of the to-be-processed transaction of the smart scene service to User1. An electronic device of User1 displays a notification bar. The notification bar includes a control 2201 and a control 2202. The notification bar is used to remind the user that a piece of shared information of the smart scene service is received from Shiny, and ask the user to determine whether to receive the shared information of the smart scene service.

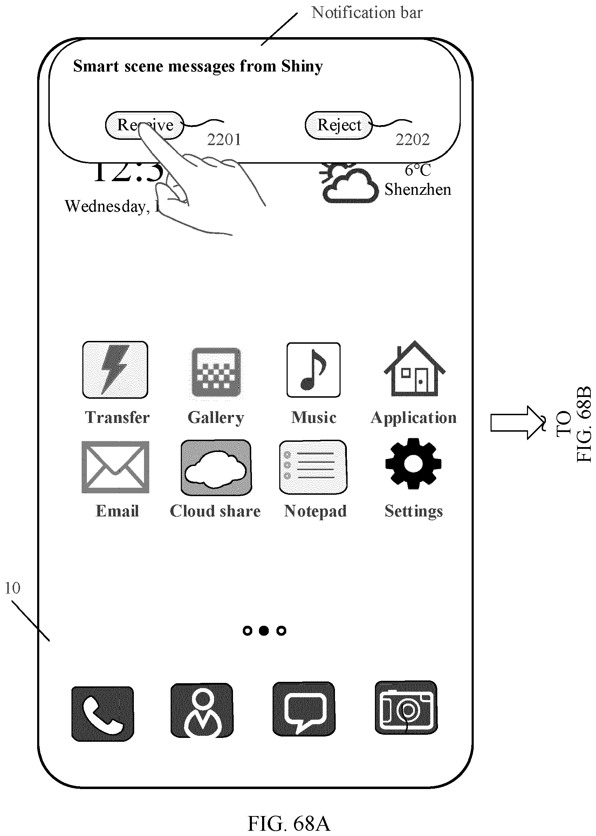

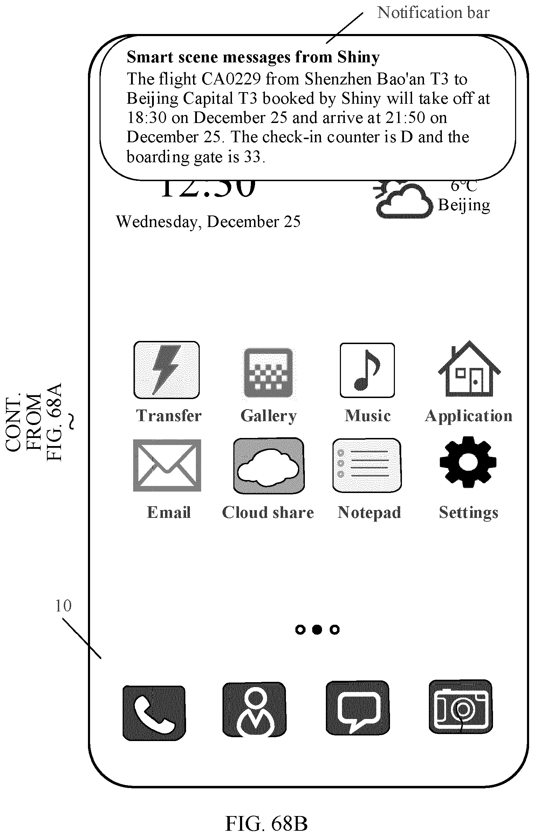

The control 2201 may receive a user operation (for example, a touch operation), and in response to the detected user operation, the electronic device of User1 displays the complete description information of the to-be-processed transaction of the smart scene service. For example, as shown in FIG. 68A and FIG. 68B,

The control 2202 may receive a user operation (for example, a touch operation), and in response to the detected user operation, the electronic device of User1 may stop displaying the notification bar shown in FIG. 67A and FIG. 67B.

In some embodiments, the user may share a plurality of smart scene services at the same time.

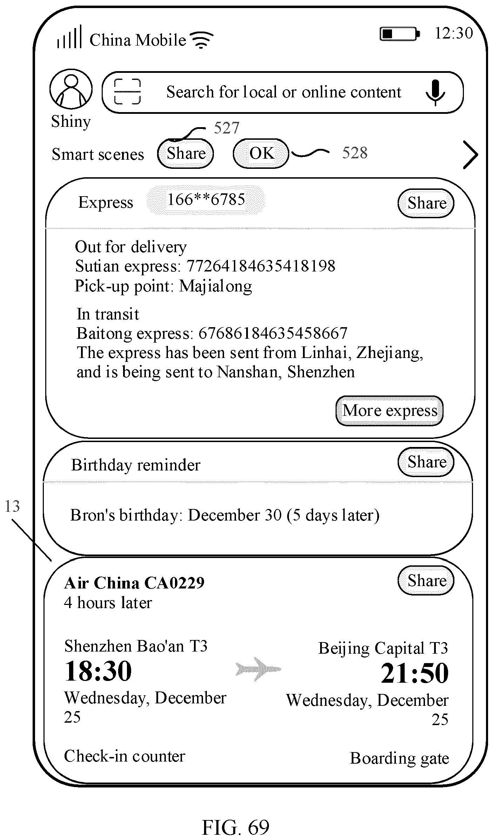

For example, as shown in FIG. 69, the user interface 13 may further include a control 527 and a control 528.

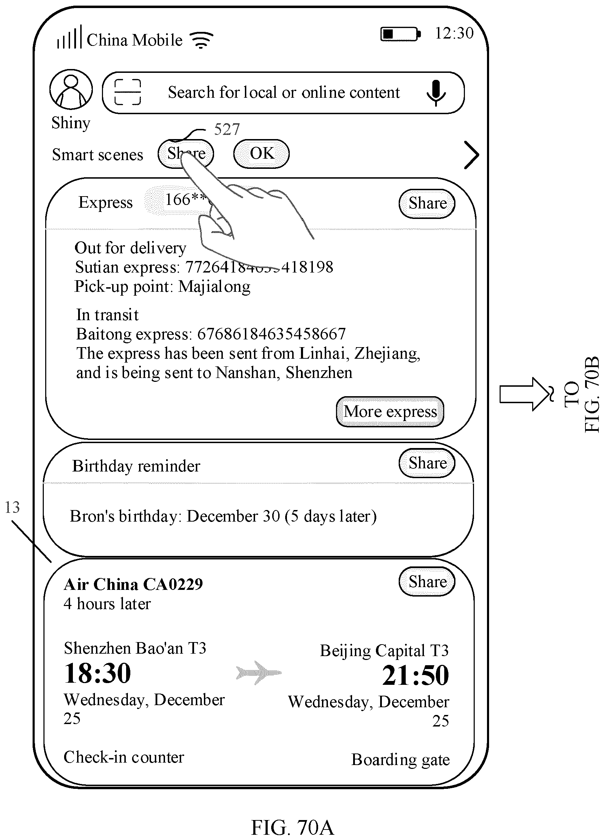

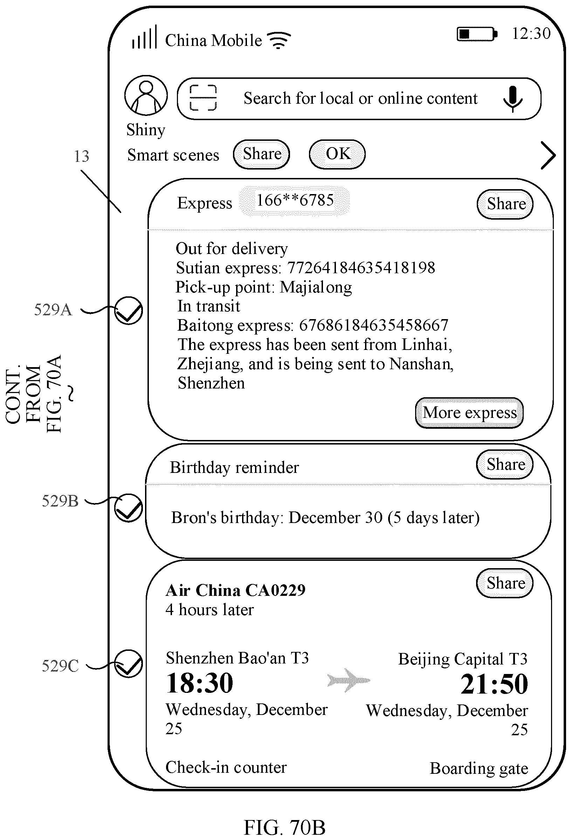

The control 527 may be used to select a plurality of to-be-shared smart scene services. For example, as shown in FIG. 70A and FIG. 70B, the user taps the control 527. The electronic device 100 detects the user operation, and in response to the user operation, the electronic device 100 displays controls 529A to 529C. The controls 529A to 529C one-to-one correspond to the information cards 509, 512, and 513 of the smart scene services.

Any one of the controls 529A to 529C may receive a user operation (for example, a touch operation). In response to the detected user operation, the electronic device 100 may select or deselect an information card of a smart scene service corresponding to the control. Description information of a to-be-processed transaction of a smart scene service on a selected information card of the smart scene service is to-be-shared information.

It may be understood that the user may swipe down on the user interface 13 to view more information cards of to-be-selected smart scene services.

The control 528 may be used to trigger the electronic device 100 to display the shared user selection interface 35.

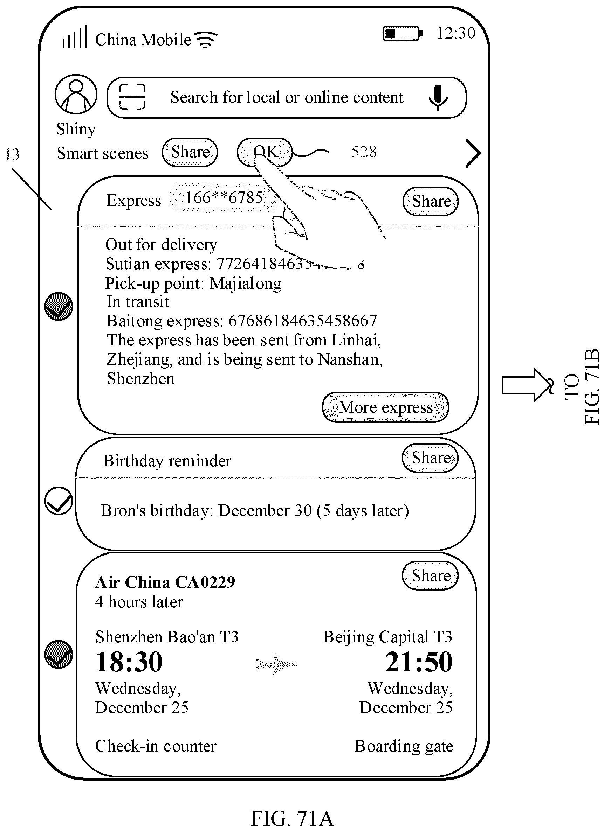

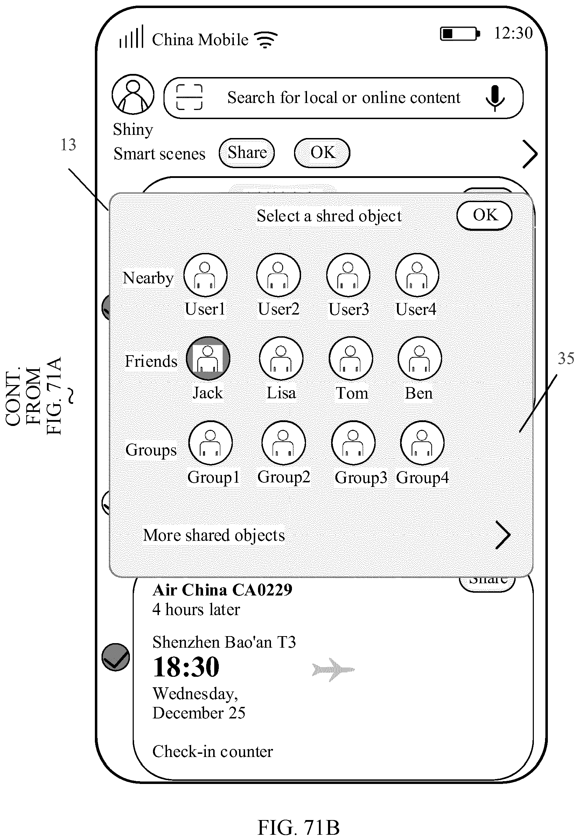

For example, as shown in FIG. 71A and FIG. 71B, after selecting one or more smart scene cards, the user taps the control 528. The electronic device detects the user operation, and in response to the user operation, the electronic device 100 displays a shared user selection interface 35 of a plurality of smart scene services.

In some embodiments, in the manual information sharing method for a smart scene service, after a shared user receives a smart scene service shared by the user, the smart scene service may be stored, to convert the smart scene service into a smart scene service of the shared user, so as to subsequently continue to provide a reminder service and a planning service for the shared user. For a specific implementation, refer to the foregoing automatic sharing method. Details are not described herein again.

In some embodiments, shared content and/or a feedback mechanism may also be set in the manual sharing method. For a specific implementation, refer to the shared content and the feedback mechanism in the automatic sharing method. Details are not described herein again.

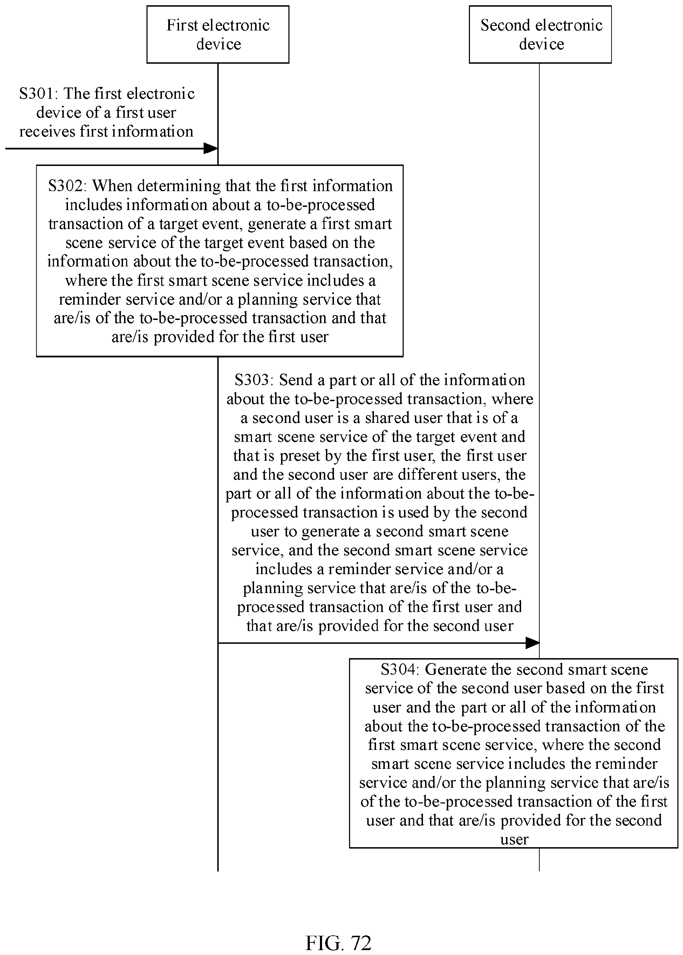

Based on the foregoing automatic information sharing embodiments provided in FIG. 17A and FIG. 17B to FIG. 47, the following describes an information sharing method for a smart scene service provided in an embodiment of this application. FIG. 72 is a schematic flowchart of an information sharing method for a smart scene service according to an embodiment of this application. The following further describes possible implementations of the method embodiment.

S301: A first electronic device of a first user receives first information.

S302: When determining that the first information includes information about a to-be-processed transaction of a target event, the first electronic device generates a first smart scene service of the target event based on the information about the to-be-processed transaction, where the first smart scene service includes a reminder service and/or a planning service that are/is of the to-be-processed transaction and that are/is provided for the first user.

In this application, the target event may be the first event in the foregoing embodiment, the first electronic device may be the electronic device 100 in the foregoing embodiment, and a current user of the first user electronic device 100 is, for example, a user corresponding to a logged-in Huawei account on the electronic device 100.

In this embodiment of this application, the electronic device may receive the first information by using an application such as Messages, Calendar, Notepad, Email, WeChat, and/or QQ. For example, the first information may be the flight booking SMS message shown in FIG. 39, or may be real-time dynamic express information sent by the express server to the user, or may be a schedule in Calendar shown in FIG. 53.

In this embodiment of this application, when recognizing that the first information includes the information about the to-be-processed transaction of the target event, the electronic device generates a smart scene service of the target event based on the information about the to-be-processed transaction of the target event. The smart scene service of the target event includes a reminder service of the to-be-processed transaction of the target event and a planning service of the to-be-processed transaction of the target event.

In this embodiment of this application, in the embodiments corresponding to FIG. 49 to FIG. 59A and

FIG. 59B, three specific scenarios are used as examples to describe example user interfaces of the smart scene service. Details are not described herein again.

In this embodiment of this application, the target event is a travel event, the to-be-processed transaction of the target event is a travel transaction, a reminder service of the travel transaction includes reminding a user of a part or all of information about the travel transaction at one or more preset time points, and a planning service of the travel transaction includes planning a travel method and/or a travel route for the travel transaction of the user. For example, the target event is a flight event or a train event.

In this application, the information about the to-be-processed transaction may also be referred to as description information of the to-be-processed transaction, and the information about the smart scene service may also be referred to as description information of the smart scene service. This is not specifically limited herein.

S303: The first electronic device sends a part or all of the information about the to-be-processed transaction to a second electronic device of a second user, where the second user is a shared user that is of the smart scene service of the target event and that is preset by the first user, the first user and the second user are different users, the part or all of the information about the to-be-processed transaction is used by the second user to generate a second smart scene service, and the second smart scene service includes a reminder service and/or a planning service that are/is of the to-be-processed transaction of the first user and that are/is provided for the second user.

In this application, the second user may be the first object in the foregoing embodiments, and the second electronic device may be the electronic device of the first object in the foregoing embodiments.

In some embodiments, the first electronic device sends the part or all of the information about the to-be-processed transaction of the first smart scene service to the second electronic device through a server.

In this embodiment of this application, after receiving the information that is about the first smart scene service and that is sent by the first electronic device, the server may send the part or all of the information about the to-be-processed transaction of the first smart scene service to the second electronic device at a preset time point. In this way, even if the first electronic device is in an airplane mode or a powered-off state, the server can successfully share the first smart scene service with the second user at the preset time point.

In some embodiments, before the first electronic device sends the information about the to-be-processed transaction of the first smart scene service to the second electronic device, the first electronic device displays authorization prompt information. The authorization prompt information is used to prompt the first user to determine whether to share the first smart scene service with the second user. If the first electronic device receives a determining operation of the first user by using the authorization prompt information, the first electronic device sends the part or all of the information about the to-be-processed transaction of the first smart scene service to the second electronic device. The determining operation is used to determine to share the first smart scene service with the second user.

In this embodiment of this application, the authorization prompt information includes a password input control, the password input control is used to input a character, an image, a voiceprint, or a face image, and the determining operation is that the first user enters a password by using the password input control. Alternatively, the authorization prompt information includes an OK control, and the determining operation is that the first user taps the OK control.

For example, the password input control may be the OK control shown in FIG. 40, the character password input box shown in FIG. 41, or the graphic password input control shown in FIG. 42.

In some embodiments, after the first electronic device sends the part or all of the information about the to-be-processed transaction of the first smart scene service to the second electronic device of the second user, the first electronic device may further receive a feedback message sent by the second electronic device, where the feedback message includes a consultation time point at which the second user consults the information about the to-be-processed transaction of the first smart scene service, and the consultation time point is used to preset a first sharing time period.

In some embodiments, the first electronic device may send the part or all of the information about the to-be-processed transaction of the first smart scene service to the second electronic device within the first sharing time period. The first sharing time period is a preset time period for sharing the smart scene service of the target event with the second user.

In some embodiments, the first electronic device may send the part or all of the information about the to-be-processed transaction of the first smart scene service to the second electronic device within the first sharing time period in a first term. The first term is a preset validity period for sharing the smart scene service of the target event with the second user. After the first term ends, the first electronic device removes the second user from shared users of the target event.

In some embodiments, before the first electronic device sends the part or all of the information about the to-be-processed transaction of the first smart scene service to the second electronic device, the first electronic device may select a first descriptor to be shored with the second user from descriptors associated with the target event. The information about the to-be-processed transaction includes values of the descriptors associated with the target event. Then, the first electronic device sends, to the second electronic device, information matching the first descriptor in the information about the to-be-processed transaction of the first smart scene service.

In some embodiments, the second user includes one or more users.

In some embodiments, the second user is associated with a plurality of events, and the plurality of events include the target event.

S304: The second electronic device generates a second smart scene service of the second user based on the first user and the part or all of the information about the to-be-processed transaction of the first smart scene service, where the second smart scene service includes the reminder service and/or the planning service that are/is of the to-be-processed transaction of the first user and that are/is provided for the second user.

It may be understood that, after receiving the information about the to-be-processed transaction of the first smart scene service, the second electronic device may receive a conversion operation of the second user. In response to the detected conversion operation, the second electronic device generates the second smart scene service of the second user based on the information about the to-be-processed transaction of the first smart scene service.

Refer to the embodiment corresponding to FIG. 45. The conversion operation may be that the second user taps the control 1709.

In some embodiments, after step S304, the second electronic device sends a feedback message to the first electronic device of the first user, where the feedback message is used to indicate that the second user has viewed the information about the to-be-processed transaction of the first smart scene service. For an example, refer to FIG. 47.

In some embodiments, before the first electronic device receives the first information, the first electronic device receives setting information entered by the first user, where the setting information includes a shared user of the target event, and the shared user of the target event includes the second user.

In some embodiments, the setting information further includes the first sharing time period for sharing the smart scene service of the target event with the second user.

In some embodiments, the setting information further includes the first descriptor that is selected from the descriptors associated with the target event and that is to be shared with the second user.

In some embodiments, the setting information further includes the first term for sharing the smart scene service of the target event with the second user.

In this embodiment of this application, for how the first user enters the setting information, refer to the embodiments corresponding to FIG. 19A and FIG. 19B to FIG. 37. Details are not described herein again.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above. For a detailed working process of the foregoing system, apparatus, and units, refer to a corresponding process in the foregoing method embodiments. Details are not described herein again.

Function units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The storage medium includes any medium that can store program code, such as a USB flash drive, a removable hard disk, a read-only memory, a random access memory, a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information sharing method for a smart scene service, comprising:
receiving, by a first electronic device of a first user, first information;
when determining that the first information comprises information about a to-be-processed transaction of a target event, generating, by the first electronic device, a first smart scene service of the target event based on the information about the to-be-processed transaction, wherein the first smart scene service comprises a reminder service and/or a planning service that are/is of the to-be-processed transaction and that are/is provided for the first user; and
sending, by the first electronic device, a part or all of the information about the to-be-processed transaction to a second electronic device of a second user, wherein the second user is a shared user that is of a smart scene service of the target event and that is preset by the first user, the first user and the second user are different users, the part or all of the information about the to-be-processed transaction is used by the second user to generate a second smart scene service, and the second smart scene service comprises a reminder service and/or a planning service that are/is of the to-be-processed transaction of the first user and that are/is provided for the second user.

2. The method according to claim 1, wherein the target event is a travel event, the to-be-processed transaction of the target event is a travel transaction, a reminder service of the travel transaction comprises reminding a user of a part or all of information about the travel transaction at one or more preset time points, and a planning service of the travel transaction comprises planning a travel method and/or a travel route for the travel transaction of the user.

3. The method according to claim 2, wherein the target event is a flight event or a train event.

4. The method according to claim 1, wherein the sending, by the first electronic device, a part or all of the information about the to-be-processed transaction to a second electronic device of a second user comprises:
sending, by the first electronic device, the part or all of the information about the to-be-processed transaction to the second electronic device within a first sharing time period, wherein the first sharing time period is a preset time period for sharing the smart scene service of the target event with the second user.

5. The method according to claim 1, wherein the sending, by the first electronic device, a part or all of the information about the to-be-processed transaction to a second electronic device of a second user comprises:
sending, by the first electronic device, the part or all of the information about the to-be-processed transaction to the second electronic device through a server.

6. The method according to claim 4, wherein after the sending, by the first electronic device, a part or all of the information about the to-be-processed transaction to a second electronic device of a second user, the method further comprises:
receiving, by the first electronic device, a feedback message sent by the second electronic device, wherein the feedback message comprises a consultation time point at which the second user consults the part or all of the information about the to-be-processed transaction, and the consultation time point is used to preset the first sharing time period.

7. The method according to claim 4, wherein the sending, by the first electronic device, a part or all of the information about the to-be-processed transaction to a second electronic device of a second user comprises:
sending, by the first electronic device, the part or all of the information about the to-be-processed transaction to the second electronic device within the first sharing time period in a first term, wherein the first term is a preset validity period for sharing the smart scene service of the target event with the second user; and
after the first term ends, removing, by the first electronic device, the second user from shared users of the target event.

8. The method according to claim 1, wherein before the sending, by the first electronic device, a part or all of the information about the to-be-processed transaction to a second electronic device of a second user, the method comprises:
selecting, by the first electronic device, a first descriptor to be shared with the second user from descriptors associated with the target event, wherein the information about the to-be-processed transaction comprises values of the descriptors associated with the target event.

9. The method according to claim 8, wherein the sending, by the first electronic device, a part or all of the information about the to-be-processed transaction to a second electronic device of a second user comprises:
sending, by the first electronic device to the second electronic device, information matching the first descriptor in the information about the to-be-processed transaction.

10. The method according to claim 1, wherein before the receiving, by the first electronic device, first information, the method further comprises:
receiving, by the first electronic device, setting information entered by the first user, wherein the setting information comprises a shared user of the target event, and the shared user of the target event comprises the second user.

11. The method according to claim 1, wherein the second user comprises one or more users.

12. The method according to claim 1, wherein the second user is associated with a plurality of events, and the plurality of events comprise the target event.

13. An information sharing method for a smart scene service, comprising:
receiving, by a second electronic device of a second user, a part or all that is of information about a to-be-processed transaction of a target event and that is sent by a first electronic device of a first user, wherein the information about the to-be-processed transaction is used to generate a first smart scene service of the first user, the second user is a shared user that is of a smart scene service of the target event and that is preset by the first user, and the first user and the second user are different users; and
generating, by the second electronic device, a second smart scene service of the second user based on the first user and the part or all of the information about the to-be-processed transaction, wherein the second smart scene service comprises a reminder service and/or a planning service that are/is of the to-be-processed transaction of the first user and that are/is provided for the second user.

14. The method according to claim 13, wherein the target event is a travel event, the to-be-processed transaction of the target event is a travel transaction, a reminder service of the travel transaction comprises reminding a user of a part or all of information about the travel transaction at one or more preset time points, and a planning service of the travel transaction comprises planning a travel method and/or a travel route for the travel transaction of the user.

15. The method according to claim 14, wherein the target event is a flight event or a train event.

16. The method according to claim 13, wherein the receiving, by a second electronic device of a second user, a part or all that is of information about a to-be-processed transaction of a target event and that is sent by a first electronic device of a first user comprises:
receiving, by the second electronic device, the part or all that is of the information about the to-be-processed transaction of the target event and that is sent by the first electronic device within a first sharing time period, wherein the first sharing time period is a preset time period for sharing the smart scene service of the target event with the second user.

17. The method according to claim 13, wherein the receiving, by a second electronic device of a second user, a part or all that is of information about a to-be-processed transaction of a target event and that is sent by a first electronic device of a first user comprises:
receiving, by the second electronic device through a server, the part or all that is of the information about the to-be-processed transaction of the target event and that is sent by the first electronic device.

18. The method according to claim 16, wherein after the receiving, by a second electronic device of a second user, a part or all that is of information about a to-be-processed transaction of a target event and that is sent by a first electronic device of a first user, the method further comprises:
sending, by the second electronic device, a feedback message to the first electronic device, wherein the feedback message comprises a consultation time point at which the second user consults the part or all of the information about the to-be-processed transaction, and the consultation time point is used to preset the first sharing time period.

19. An information sharing method for a smart scene service, comprising:
receiving, by a first electronic device of a first user, first information;
when determining that the first information comprises information about a to-be-processed transaction of a target event, generating, by the first electronic device, a first smart scene service of the target event based on the information about the to-be-processed transaction, wherein the first smart scene service comprises a reminder service and/or a planning service that are/is of the to-be-processed transaction and that are/is provided for the first user;
receiving, by the first electronic device, a first user operation, wherein the first user operation is used to call a shared user selection interface of the first smart scene service, and the shared user selection interface is used to determine a shared user of the first smart scene service;
displaying, by the first electronic device, the shared user selection interface;
receiving, by the first electronic device, a second user operation, wherein the second user operation is used to determine, by using the shared user selection interface, that the shared user of the first smart scene service is a second user, and the first user and the second user are different users; and
sending, by the first electronic device, a part or all of the information about the to-be-processed transaction to a second electronic device of the second user.

20. The method according to claim 19, wherein the target event is a travel event, the to-be-processed transaction of the target event is a travel transaction, a reminder service of the travel transaction comprises reminding a user of a part or all of information about the travel transaction at one or more preset time points, and a planning service of the travel transaction comprises planning a travel method and/or a travel route for the travel transaction of the user.

21. The method according to claim 20, wherein the target event is a flight event or a train event.

22. The method according to claim 19, wherein before the sending, by the first electronic device, a part or all of the information about the to-be-processed transaction to a second electronic device of the second user, the method comprises:
selecting, by the first electronic device, a first descriptor to be shared with the second user from descriptors associated with the target event, wherein the information about the to-be-processed transaction comprises values of the descriptors associated with the target event.

23. The method according to claim 22, wherein the sending, by the first electronic device, a part or all of the information about the to-be-processed transaction to a second electronic device of the second user comprises:
sending, by the first electronic device to the second electronic device, information matching the first descriptor in the information about the to-be-processed transaction.

24. The method according to claim 19, wherein the second user comprises one or more users.

25. The method according to claim 19, wherein the second user comprises one or more nearby users.

26. An electronic device, comprising a touchscreen, a memory, one or more processors, a plurality of applications, and one or more programs, wherein the one or more programs are stored in the memory, and when the one or more processors execute the one or more programs, the electronic device is enabled to implement the method according to any one of claims 1 to 12, any one of claims 13 to 18, or any one of claims 19 to 25.

27. A computer storage medium, comprising computer instructions, wherein when the computer instructions are run on an electronic device, the electronic device is enabled to perform the method according to any one of claims 1 to 12, any one of claims 3 to 18, or any one of claims 19 to 25.

28. A computer program product, wherein when the computer program product is run on a computer, the computer is enabled to perform the method according to any one of claims 1 to 12, any one of claims 13 to 18, or any one of claims 19 to 25.
